# EUROPÄISCHE PATENTSCHRIFT

(11) **EP 4 327 511 B1**
(45) Veröffentlichungstag und Bekanntmachung des Hinweises auf die Patenterteilung: **28.05.2025**
(21) Anmeldenummer: 22720386.6
(22) Anmeldetag: 01.04.2022
(51) Int. Cl.: H04L 9/40, H04W 12/40, H04L 9/32, H04W 12/06

(54) **PERSONALISIEREN EINES SICHERHEITSAPPLETS AUF EINEM MOBILEN ENDGERÄT**
PERSONALIZATION OF A SECURITY APPLET ON A MOBILE TERMINAL
PERSONNALISATION D'UN APPLET DE SÉCURITÉ SUR UN TERMINAL MOBILE

(30) Priorität: 21.04.2021 DE 102021110142
(43) Veröffentlichungstag der Anmeldung: 28.02.2024
(73) Patentinhaber: Bundesdruckerei GmbH, 10969 Berlin (DE)
(72) Erfinder: DIETRICH, Frank, 12437 Berlin (DE); SCHWAN, Matthias, 13086 Berlin (DE)
(74) Vertreter: Richardt Patentanwälte PartG mbB
(86) Internationale Anmeldenummer: PCT/EP2022/058740
(87) Internationale Veröffentlichungsnummer: WO 2022/223263

(56) Entgegenhaltungen:
- DE-A1- 102015 209 073
- DE-A1- 102016 208 040
- US-A1- 2011 016 323

## Beschreibung

Die Erfindung betrifft ein Verfahren zum Personalisieren eines Sicherheitsapplets, welches auf einem Sicherheitselement eines mobilen Endgeräts installierten ist, sowie ein mobiles Endgerät und ein System zum Ausführen des Verfahrens.

Mobile Endgeräte, wie beispielsweise Smartphones, sind allgegenwärtig. Sie werden in vielen Lebensbereichen und Situationen zur Erfüllung verschiedenster Aufgaben im digitalen Bereich bzw. unter Zuhilfenahme digitaler Hilfsmittel verwendet. Dabei finden ein und dieselben mobile Endgeräte Verwendung sowohl in Bereichen mit niedrigen Sicherheitsanforderungen als auch in Bereichen mit hohen Sicherheitsanforderungen.

Mithin müssen entsprechende mobile Endgeräte in der Lage sein auch solch hohen Sicherheitsanforderungen zu erfüllen. Die Sicherheit mobiler Endgeräte, wie Smartphones, ist daher zu einer relevanten Anforderung geworden für die Hersteller der Geräte, für die Hersteller der auf den Geräten installierten Programmen sowie Anbieter von Dienstleistungen, welche unter Verwendung der Geräte genutzt werden können. Um die Sicherheit der Nutzung sicherstellen zu können, ist eine sichere Zuordnung des mobilen Endgeräts zu einem Nutzer des Endgeräts von großer Bedeutung. Aus Sicht von Herstellern von Programmen sowie Anbieter von Dienstleistungen gestaltet sich dabei insbesondere eine Implementierung eines einheitlich hohen Sicherheitsstandards für Geräte unterschiedlicher Hersteller schwierig.

Die DE 10 2016 208040 A1 beschreibt ein Verfahren zum Lesen von Attributen aus einem ID-Token, welches beinhaltet: Senden einer Dienstanforderung von einem Nutzer-Computersystem an ein Dienst-Computersystem, welches mit einem ID-Provider-Modul gekoppelt ist; Senden einer ersten Attributspezifikation von dem Dienst-Computersystem an das ID-Provider-Modul; nach erfolgreicher gegenseitiger Authentifizierung von ID-Provider-Modul und ID-Token, Schreiben der ersten Attributspezifikation in den ID-Token durch das ID-Provider-Modul; Senden eines Triggersignals von dem Nutzer-Computersystem an ein APV-Computersystem, wobei das erste Triggersignal frei ist von der ersten Attributspezifikation und von deren Teilen und eine Adresse des ID-Tokens beinhaltet; in Antwort auf Empfang des Triggersignals, gegenseitige Authentifizierung des APV-Computersystems und des ID-Tokens unter Verwendung der Adresse, Lesen der ersten Attributspezifikation aus dem geschützten Speicherbereich des ID-Tokens durch das APV-Computersystem und Aufteilen der gelesenen ersten Attributspezifikation in zumindest eine zweite und eine dritte Attributspezifikation durch das APV-Computersystem; Senden der zweiten Attributspezifikation und der Adresse von dem APV-Computersystem an ein erstes AP-Computersystem und Senden der dritten und jeder weiteren Attributspezifikation und der Adresse des ID-Token von dem APV-Computersystem an je ein weiteres AP-Computersystem; und Schreiben der ersten Attributmenge in den ID-Token und Senden eines Bestätigungssignals von dem ersten Attribut-Provider-Computersystem an das Attribut-Provider-Verzeichnis-Computersystem um das Dienst-Computersystem zu veranlassen, die geschriebenen Attributmengen auszulesen.

Die DE 10 2015 209073 A1 beschreibt ein Verfahren zum Lesen von Attributen aus einem ID-Token mit den Schritten: Aufbau eines lokalen gesicherten Übertragungskanals zwischen dem ID-Token und dem Nutzer-Computersystem zur Authentifizierung des Nutzers gegenüber dem ID-Token; Aufbau eines ersten gesicherten Übertragungskanals mit Ende-zu-Ende-Verschlüsselung zwischen dem ID-Token und dem ID-Provider-Computersystem über das Netzwerk, wobei der lokale gesicherte Übertragungskanal bestehen bleibt; Aufbau eines zweiten gesicherten Übertragungskanals mit Ende-zu-Ende-Verschlüsselung zwischen dem ersten Attribut-Provider-Computersystem und dem ID-Token, wobei der erste gesicherte Übertragungskanal bestehen bleibt; und Ausgabe der aufgrund der Lesezugriffe von dem ID-Provider-Computersystem aus dem ID-Token ausgelesenen Attribute an das Dienst-Computersystem.

Die US 2011/016323 A1 beschreibt ein Verfahren zur Bereitstellung kryptografischer Netzwerkschlüssel für einen Client, wenn eine direkte physische Übertragung nicht möglich ist. Ein Client-Token erzeugt einen temporären Schlüssel, der mit einem ersten geheimen Schlüssel verschlüsselt ist, der nur in einer Master-Token-Datenbank bekannt ist, und gibt diesen an ein Unternehmensnetzwerk-Token eines Netzwerks weiter, für das ein Dienst angefordert wird. Anschließend verschlüsselt das Unternehmensnetzwerk-Token den verschlüsselten temporären Schlüssel weiter mit einem zweiten geheimen Schlüssel und gibt diesen an die Master-Token-Datenbank weiter. Da der zweite geheime Schlüssel der Master-Token-Datenbank auch bekannt ist, kann der ursprünglich verschlüsselte temporäre Schlüssel nur durch einen mit der Master-Token-Datenbank gekoppelten Master-Token sicher dekodiert werden. Der entschlüsselte temporäre Schlüssel kann dann mit einem Schlüssel, der nur dem Unternehmensnetzwerk-Token und dem Master-Token bekannt ist, erneut verschlüsselt und an den Unternehmensnetzwerk-Token zurückgegeben werden. Dadurch kann der Unternehmensnetzwerk-Token sicheren Zugriff auf den temporären Schlüssel des Client-Tokens erhalten, wodurch der Unternehmensnetzwerk-Token den Remote-Client-Token sicher mit den entsprechenden Unternehmensnetzwerkschlüsseln versorgen kann.

Der Erfindung liegt die Aufgabe zugrunde, ein verbessertes Verfahren zum Personalisieren eines Sicherheitsapplets zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Personalisieren eines Sicherheitsapplets, welches auf einem ersten Sicherheitselement eines mobilen Endgeräts installierten ist, unter Verwendung eines ersten ID-Tokens und eines Personalisierungsservers. Auf dem mobilen Endgerät ist ein ID-Anwendungsprogramm installiert, welchem das Sicherheitsapplet zugeordnet ist. In dem ersten ID-Token sind erste Attribute eines Nutzers gespeichert.

Das Personalisieren umfasst:
- Aufbauen eines verschlüsselten Kommunikationskanals zwischen dem mobilen Endgerät und dem Personalisierungsserver über ein Netzwerk, wobei zum Aufbauen des verschlüsselten Kommunikationskanals das ID-Anwendungsprogramm verwendet wird,
- Aufbauen eines ersten verschlüsselten Unterkanals zwischen dem ersten ID-Token und dem Personalisierungsserver innerhalb des verschlüsselten Kommunikationskanals über das mobile Endgerät, wobei zum Aufbauen des ersten verschlüsselten Unterkanals das ID-Anwendungsprogramm verwendet wird,
- Auslesen von ein oder mehreren der ersten Attribute aus dem ersten ID-Token durch den Personalisierungsserver über den ersten verschlüsselten Unterkanal innerhalb des verschlüsselten Kommunikationskanals,
- Aufbauen eines zweiten verschlüsselten Unterkanals zwischen dem Sicherheitsapplet des ersten Sicherheitselements und dem Personalisierungsserver innerhalb des verschlüsselten Kommunikationskanals, wobei zum Aufbauen des zweiten verschlüsselten Unterkanals das ID-Anwendungsprogramm verwendet wird,
- Empfangen der ausgelesenen ersten Attribute durch das Sicherheitsapplet des ersten Sicherheitselements von dem Personalisierungsserver über den zweiten verschlüsselten Unterkanal innerhalb des verschlüsselten Kommunikationskanals,
- Speichern der empfangenen ersten Attribute durch das Sicherheitsapplet, wobei das ID-Anwendungsprogramm dazu konfiguriert ist, die ersten Attribute zum Nachweis einer Identität des Nutzers gegenüber einem weiteren Computersystem zu verwenden.

Ausführungsformen können den Vorteil haben, dass auf einem mobilen Endgerät ein Sicherheitselement bereitgestellt wird, welches es einem Hersteller eines Anwendungsprogramms ermöglicht, das entsprechende Sicherheitselement für die entsprechende Anwendung zu personalisieren. Eine entsprechende Personalisierung umfasst beispielsweise ein Einbringen kryptographischer Schlüssel in das Sicherheitselement, welche dem auf dem individuellen mobilen Endgerät installierten Anwendungsprogramm zugeordnet sind. Ferner können im Zuge der Personalisierung beispielsweise Attribute eines Nutzers des mobilen Endgeräts in das entsprechende Sicherheitselement eingebracht werden. Somit wird das entsprechende Sicherheitselement und das auf dem entsprechenden Endgerät installierte Anwendungsprogramm einem konkreten Nutzer zugeordnet. Zugleich kann das entsprechende Anwendungsprogramm mit individuellem Schlüsselmaterial versehen werden zum Ausführen von kryptographischen Protokollen, anhand derer beispielsweise das entsprechende Anwendungsprogramm zu dem Nutzer nachgewiesen werden kann. Beispielsweise ist zu diesem Zweck auf dem Sicherheitselement ein Sicherheitsapplet installiert. Das entsprechende Sicherheitsapplet ist dem entsprechenden Anwendungsprogramm zugeordnet und verwaltet für dieses die entsprechenden kryptographischen Elemente und Protokolle, wie etwa kryptographische Schlüssel. Bei dem Anwendungsprogramm handelt es sich beispielsweise um ein ID-Anwendungsprogramm, welches dazu konfiguriert ist, eine Identität des Nutzers des mobilen Endgeräts nachzuweisen. Hierzu kann das ID-Anwendungsprogramm Attribute des Nutzers verwenden, welche den entsprechenden Nutzer identifizieren. Diese Attribute stellen eine elektronische Identität des Nutzers dar. Die entsprechenden Attribute und damit die elektronische Identität des Nutzers wird beispielsweise durch ein ID-Token, d.h. ein elektronisches Identitätsdokument, bereitgestellt. Im Zuge der Personalisierung des Sicherheitselements bzw. des Sicherheitsapplets, welches dem ID-Anwendungsprogramm zugeordnet ist, werden beispielsweise Attribute aus dem elektronischen Identitätsdokument ausgelesen und auf dem Sicherheitselement für das ID-Anwendungsprogramm hinterlegt. Bei der daraus resultierenden elektronischen Identität des Nutzers, welche das mobile Endgerät bereitstellt, handelt es sich mithin um eine abgeleitete Identität, welche aus dem elektronischen Identitätsdokument abgeleitet ist. Bei dem entsprechenden elektronischen Identitätsdokument kann es sich insbesondere um ein hoheitliches Identitätsdokument, wie etwa einen elektronischen Personalausweis oder einen elektronischen Reisepass handeln.

Ausführungsformen können den Vorteil haben, dass im Zuge einer solchen Ableitung sichergestellt werden kann, dass die abgeleitete Identität in Form der auf dem Sicherheitselement hinterlegten Attribute auch tatsächlich auf einem an den Nutzer gebundenen Sicherheitselement hinterlegt werden. Mit anderen Worten, können Ausführungsformen den Vorteil haben, dass eine Bindung des Sicherheitselements und damit der entsprechenden Attribute an den tatsächlichen Inhaber der entsprechenden Attribute gewährleistet werden kann. Es kann somit verhindert werden, dass ein unberechtigter Nutzer sich Zugriff auf Attribute eines anderen Nutzers verschafft und diese zum Ausweisen mit einer gefälschten elektronischen Identität verwendet. Im Falle eines Identitätsnachweises mit dem mobilen Endgerät kann daher vorteilhafterweise sichergestellt werden, dass mit dem Identitätsnachweis vorgelegten Attribute auch tatsächlich Attribute des sich identifizierten Nutzers sind. Hierzu wird der Übertragungsweg zum Auslesen der entsprechenden Attribute, d.h. der elektronischen Identität eines Identitätsdokuments, mit einem Übertragungsweg der Personalisierung der abgeleiteten Identität, d.h. des Einbringens der ausgelesenen Attribute in ein Sicherheitselement eines mobilen Endgeräts mit kryptographischen Mitteln sichergestellt. Somit kann gewährleistet werden, dass es sich bei dem zum Auslesen der Attribute verwendeten mobilen Endgerät um dasselbe mobile Endgerät handelt, dessen Sicherheitselemente mit den ausgelesenen Attributen personalisiert wird.

Der Nutzer muss sich beispielsweise im Zuge des Auslesens des ID-Tokens unter Verwendung des mobilen Endgeräts gegenüber dem ID-Token authentisieren. Somit kann sichergestellt werden, dass der das Auslesen initiierende bzw. bestätigende Nutzer auch tatsächlich der Inhaber des entsprechenden ID-Dokuments ist. Ferner muss sich der Nutzer im Zuge des Personalisierens des Sicherheitselements des mobilen Endgeräts, d.h. im Zuge des Einbringens der ausgelesenen Attribute, gegenüber dem mobilen Endgerät authentisieren. Somit kann sichergestellt werden, dass es sich bei dem das Personalisieren initiierenden bzw. bestätigenden Nutzer tatsächlich um den Eigentümer des mobilen Endgeräts bzw. den auf diesem mobilen Endgerät registrierten Nutzer handelt. Dadurch, dass zusätzlich die Übertragungswege zum Auslesen der Attribute und zum Einbringen der Attribute bzw. zum Personalisieren mit kryptographischen Mitteln aneinandergebunden sind, kann sichergestellt werden, dass es sich bei dem beim Auslesen und beim Einbringen der Attribute jeweils um dasselbe mobile Endgerät handelt, welches demselben Nutzer zugeordnet ist. Muss sich der entsprechende Nutzer im Zuge des Auslesens der Attribute sowohl gegenüber dem mobilen Endgerät als auch gegenüber dem ID-Token authentisieren, kann beispielsweise sichergestellt werden, dass es sich bei dem Inhaber des ID-Tokens um dieselbe Person handelt, welche auch Besitzer des mobilen Endgeräts ist. Zumindest kann sichergestellt werden, dass der Inhaber des ID-Tokens im Zuge des Auslesens zusammen mit dem Besitzer des mobilen Endgeräts seine Zustimmung erteilt und für das Einbringen der entsprechenden Attribute zumindest das Einverständnis des Eigentümers desselben mobilen Endgeräts notwendig ist. Somit kann ausgeschlossen werden, dass im Zuge des Auslesens und Einbringens von Attributen das verwendete mobile Endgerät ausgetauscht und die entsprechenden Attribute somit in die Verfügungshoheit eines anderen, insbesondere eines unberechtigten, Nutzers gelangen können. Somit kann effektiv Missbrauch vorgebeugt werden. Zum kryptographischen Binden des Übertragungswegs des Auslesens der Attribute an den Übertragungsweg zum Personalisieren bzw. Einbringen der Attribute wird ein verschlüsselter Kommunikationskanal zwischen mobilem Endgerät und einem die Personalisierung ausführenden Personalisierungsserver aufgebaut. Dieser Kommunikationskanal ist verschlüsselt, so dass sichergestellt werden kann, dass Kommunikation über diesen tatsächlich nur zwischen den beiden Teilnehmern möglich ist, welche den entsprechenden Kommunikationskanal initial aufgebaut haben, d.h. dem mobilen Endgerät und dem Personalisierungsserver. Hierzu kann insbesondere eine Ende-zu-Ende-Verschlüsselung zum Einsatz kommen. Beispielsweise erfolgt die Verschlüsselung aufseiten des mobilen Endgeräts unter Verwendung eines weiteren Sicherheitselements des mobilen Endgeräts, welches beispielsweise einem Betriebssystem des mobilen Endgeräts zugeordnet ist und zum Aufbau verschlüsselter Kommunikationskanäle unabhängig von dem ersten Sicherheitselement mit dem zu personalisierenden Sicherheitsapplet konfiguriert ist. Das Auslesen aus dem ID-Token einerseits und das Einbringen der ausgelesenen Attribute im Zuge der Personalisierung in das zu personalisierende Sicherheitselement andererseits erfolgt dabei beispielsweise jeweils über einen eigenständigen verschlüsselten Unterkanal des verschlüsselten Kommunikationskanals. Die verschlüsselten Unterkanäle ermöglichen es sicherzustellen, dass über diese nur Teilnehmer miteinander kommunizieren können, welche den entsprechenden Unterkanal aufgebaut haben und über die entsprechenden kryptographischen Schlüssel verfügen. Im Falle des ersten verschlüsselten Unterkanals zwischen dem ID-Token und dem Personalisierungsserver sind dies der entsprechende ID-Token und der Personalisierungsserver. Im Falle des zweiten verschlüsselten Unterkanals zwischen dem zu personalisierenden Sicherheitsapplet des ersten Sicherheitselement und dem Personalisierungsserver sind dies das entsprechende zu personalisierende Sicherheitsapplet und der Personalisierungsserver.

Bei den Unterkanälen handelt es sich um verschlüsselte Unterkanäle innerhalb des verschlüsselten Kommunikationskanals. Es liegt dabei jeweils eine doppelte Verschlüsselung der übertragenen Daten vor. Zum einen werden die entsprechenden Daten im Zuge des Auslesens aus dem ID-Token von einem den entsprechenden verschlüsselten Unterkanal zugeordneten kanalspezifischen ephemeren symmetrischen kryptographischen Sitzungsschlüssel durch den ID-Token verschlüsselt. Im Zuge der Übertragung der entsprechenden verschlüsselten Daten zwischen dem mobilen Endgerät und dem Personalisierungsserver werden diese zusätzlich ein zweites Mal von dem mobilen Endgerät mit einem kanalspezifischen ephemeren symmetrischen kryptographischen Sitzungsschlüssels des verschlüsselten Kommunikationskanals verschlüsselt. Der empfangene Personalisierungsserver muss mithin zunächst die Verschlüsselung des Kommunikationskanals und anschließend die Verschlüsselung des entsprechenden Unterkanals entschlüsseln, um Zugriff auf die übertragenen Daten zu erlangen.

Im Zuge der Personalisierung verwendet der Personalisierungsserver durchgehend denselben verschlüsselten Kommunikationskanal. Dies bedeutet, dass die zum Personalisieren verwendeten Attribute mit dem kanalspezifischen ephemeren symmetrischen kryptographischen Sitzungsschlüssel des verschlüsselten Kommunikationskanals verschlüsselt werden. Da sich lediglich das bereits zum Auslesen der Attribute verwendete mobile Endgerät, beispielsweise dessen weiteres Sicherheitselement, im Besitz desselben kanalspezifischen ephemeren symmetrischen kryptographischen Sitzungsschlüssels befindet, ist nur dasselbe mobile Endgerät dazu in der Lage, die zum Personalisieren zu verwendenden Attribute zu entschlüsseln. Somit kann sichergestellt werden, dass zum Personalisieren dasselbe mobile Endgerät verwendet wird, welches bereits zuvor zum Auslesen der entsprechenden Attribute verwendet wurde. Um eine sichere Übertragung der zum Personalisieren zu verwendenden Attribute an das zu personalisierende Sicherheitselement des mobilen Endgeräts sicherzustellen, wird zur Übertragung der Attribute ein weiterer verschlüsselte Unterkanal innerhalb des verschlüsselten Kommunikationskanals verwendet. Mit anderen Worten werden die entsprechenden Attribute zunächst mit einem ephemeren symmetrischen kryptographischen Sitzungsschlüssel des entsprechenden Unterkanals verschlüsselt und anschließend mit dem kanalspezifischen ephemeren symmetrischen kryptographischen Sitzungsschlüssel des verschlüsselten Kommunikationskanals. Die so doppelt verschlüsselten Attribute werden zunächst durch das den Endpunkt des verschlüsselten Kommunikationskanals bildende mobile Endgerät entschlüsselt, beispielsweise durch ein weiteres den hierfür notwendigen ephemeren kryptographischen Sitzungsschlüssel verwaltendes Sicherheitselement des Endgeräts. Die aus dieser ersten Entschlüsselung resultierenden Daten werden an das Sicherheitselement mit dem zu personalisierenden Sicherheitsapplet des entsprechenden ID-Anwendungsprogramms geleitet. Das entsprechende Sicherheitsapplet verfügt über den kryptographischen Sitzungsschlüssel, welcher dem entsprechenden Unterkanal, dessen Endpunkt das Sicherheitsapplet beispielsweise bildet, zugeordneten ist. Mit diesem kryptographischen Sitzungsschlüssel lässt sich auch die zweite Verschlüsselung der übertragenen Daten entschlüsseln und diese können von dem zu personalisierenden Sicherheitselement zur Personalisierung verwendet werden.

Beispielsweise wird zunächst eine gesicherte Verbindung in Form des verschlüsselten Kommunikationskanals von dem mobilen Endgerät zum Personalisierungsserver aufgebaut. Die entsprechende Verbindung ist beispielsweise durch eine gegenseitige Authentisierung bzw. Authentifizierung gesichert, aufgrund derer die Teilnehmer sicherstellen können, mit wem sie kommunizieren. Die Authentisierung seitens des mobilen Endgeräts kann eine Authentisierung des Nutzers des mobilen Endgeräts gegenüber dem mobilen Endgerät voraussetzen. Somit kann nicht nur sichergestellt werden, dass die Kommunikation im Kommunikationskanal mit dem bzw. über das mobile Endgerät erfolgt, sondern zudem, dass die Kommunikation unter Einverständnis des Nutzers des mobilen Endgeräts erfolgt. Hierzu stellt der entsprechende Nutzer beispielsweise einen Authentisierungsfaktor bereit, wie etwa ein biometrisches Merkmal oder eine PIN, insbesondere ein System-PIN. Der entsprechende Authentisierungsfaktor wird beispielsweise durch einen Authentifizierungssensor des mobilen Endgeräts in Form von Authentisierungsdaten erfasst. Hierbei kann es sich beispielsweise um einen biometrischen Sensor, wie etwa einen Fingerscanner oder eine Kamera zum Erfassen des Nutzers handeln. Beispielsweise kann es sich bei dem entsprechenden Authentifizierungssensor auch um eine Eingabevorrichtung des mobilen Endgeräts handeln, über welche der Nutzer seine PIN eingeben kann, wie etwa eine Tastatur oder ein Touchscreen. Bei einer System-PIN handelt es sich beispielsweise um eine dem Betriebssystem des entsprechenden mobilen Endgeräts zugeordnete PIN. Zum Auslesen von Attributen aus dem ID-Token, d.h. dem elektronischen Identitätsdokuments des Nutzers, ist zudem im Zuge des Aufbaus des Unterkanals eine Authentisierung des Nutzers gegenüber dem ID-Token notwendig. Hierzu kann der Nutzer beispielsweise einen entsprechenden Authentifizierungsfaktor über den Authentifizierungssensor des mobilen Endgeräts bereitstellen. Alternativerweise kann der entsprechende Authentifizierungsfaktor auch direkt gegenüber dem ID-Token bereitgestellt werden, falls der ID-Token über den Authentifizierungssensor zum Erfassen des entsprechenden Authentifizierungsfaktors verfügt. Bei dem entsprechenden Authentifizierungsfaktor kann es sich wie zuvor beispielsweise um biometrische Merkmale des Nutzers oder insbesondere eine Dokumenten-PIN handeln. Bei einer entsprechenden Dokumenten-PIN handelt es sich um eine PIN, welche dem entsprechenden ID-Token bzw. elektronischen Identitätsdokument zugeordnet ist. Zum Übertragen der ausgelesenen Attribute von dem ID-Token an dem Personalisierungsserver wird ein verschlüsselter Unterkanal des verschlüsselten Kommunikationskanals aufgebaut. Der entsprechende Aufbau erfolgt beispielsweise über den verschlüsselten Kommunikationskanal. Die auszulesenden Attribute werden sodann mit einer doppelten Verschlüsselung gesichert von dem Personalisierungsserver an das mobile Endgerät bzw. das zu personalisierende Sicherheitsapplet des ID-Anwendungsprogramm übertragen.

Zum Personalisieren zu personalisierenden Sicherheitsapplets des ID-Anwendungsprogramms auf dem ersten Sicherheitselement wird ein zweiter Unterkanal innerhalb des verschlüsselten Kommunikationskanals aufgebaut. Hierzu ist beispielsweise eine Authentisierung des Nutzers gegenüber dem zu personalisierenden Sicherheitsapplet notwendig. Die Authentifizierung erfolgt beispielsweise unter Verwendung eines weiteren Sicherheitselements, bei welchem es sich um ein dem Betriebssystem des mobilen Endgeräts zugeordnetes Sicherheitselement handelt. Der Nutzer authentisiert sich gegenüber dem entsprechenden weiteren Sicherheitselement bzw. wird von dem entsprechenden weiteren Sicherheitselement erfolgreich authentifiziert. Die erfolgreiche Authentifizierung des Nutzers teilt das weitere Sicherheitselement dem zu personalisierenden Sicherheitsapplet auf dem Sicherheitselement mit. Die entsprechende Mitteilung kann beispielsweise unter Verwendung eines Challenge-Response-Verfahrens erfolgen. Somit wird der Nutzer zusätzlich auch gegenüber dem zu personalisierenden Sicherheitsapplet des mobilen Endgeräts erfolgreich authentisiert. Auf eine erfolgreiche Authentifizierung des Nutzers gegenüber dem zu personalisierende Sicherheitsapplet auf dem ersten Sicherheitselement unter Verwendung des weiteren Sicherheitselements hin wird ein verschlüsselter Unterkanal zwischen dem zu personalisierenden Sicherheitsapplet des ersten Sicherheitselements und dem Personalisierungsserver über den verschlüsselten Kommunikationskanal aufgebaut. Bei dem verschlüsselten Unterkanal handelt es sich beispielsweise um einen Ende-zu-Endeverschlüsselten Unterkanal. Die zuvor ausgelesenen Daten, d.h. Attribute, aus dem ID-Token werden nun über den zweiten Unterkanal innerhalb des Kommunikationskanals an das zu personalisierende Sicherheitsapplet auf dem Sicherheitselement übertragen. Ferner können über den entsprechenden Unterkanal auch weitere kryptographische Elemente, wie etwa kryptographische Schlüssel an das zu personalisierende Sicherheitsapplet übertragen werden. Bei den entsprechenden kryptographischen Schlüsseln handelt es sich beispielsweise um die attributspezifischen und damit identitätsspezifischen kryptographischen Schlüssel, welche der im Zuge der Personalisierung auf dem mobilen Endgerät hinterlegten abgeleiteten elektronischen Identität des Nutzers des mobilen Endgeräts zugeordnet sind.

Es wird ein Verfahren zur sicheren Personalisierung eines mobilen Endgeräts bzw. eines auf dem mobilen Endgerät installierten ID-Anwendungsprogramm mit Identitätsinformationen eines Nutzers, welcher an das mobile Endgerät gebunden, wobei das Sicherheitsapplet insbesondere unabhängig vom Gerätehersteller ist. Ein entsprechend personalisiertes mobiles Endgerät ermöglicht eine Nutzer-Authentisierung gegenüber einem geräteherstellerunabhängigen Sicherheitsapplet, beispielsweise zum Zweck einer Identifizierung und/oder Authentifizierung durch einen ID-Provider-Server gegenüber dritten Dienstanbietern.

Unter einem Sicherheitselement, wird ein gesichertes Element eines mobilen Endgeräts verstanden, welches kryptographische Mittel bereitstellt. Diese kryptographischen Mittel sind gegen Manipulation geschützt und beispielsweise über kryptographische Schlüssel nur für autorisierte Dienste und Anwendungen zugänglich. Insbesondere können die kryptographischen Mittel beispielsweise nur durch autorisierte Dienste und Anwendungen in das Sicherheitselement eingebracht, ergänzt, verändert und/oder gelöscht werden. Ein Sicherheitselement bietet mithin eine manipulationssichere Plattform, beispielsweise implementiert in Form eines sicheren Ein-Chip-Mikrocontroller, auf welcher Applets und/oder vertrauliche und/oder kryptografische Daten gemäß vordefinierten Regeln und Sicherheitsanforderungen von zuverlässig identifizierten vertrauenswürdigen Instanzen gespeichert und so berechtigten Anwendungsprogrammen und/oder Betriebssystemen zur Verfügung gestellt werden können. Ein Sicherheitselement kann eingebettete oder integriert sein, beispielsweise zerstörungsfrei lösbar oder fest verbunden, d.h. nicht zerstörungsfrei lösbar, eingebracht sein. Ein Sicherheitselement kann beispielsweise in Form eines Secure Element (SE) implementiert sein. Das Sicherheitselement kann beispielweise eine SIM, UICC, SmartMicroSD, Smartcard, eSE, eSIM oder eUICC umfassen. Beispielsweise sind auf einem Sicherheitselement kryptographische Schlüssel gespeichert, d.h. das Sicherheitselement umfasst einen Datentresor für kryptographische Schlüssel bzw. einen "Key Store". Ein solcher Key-Store bzw. Sicherheitselement kann auch als Teil des Hauptprozessors implementiert sein, beispielsweise in einer TEE (Trusted Excecution Environment). Beispielsweise kann das Sicherheitselement unter Verwendung einer TEE implementiert sein. Sicherheitselemente sind beispielsweise als Hardware und/oder Firmware implementiert. Nach Ausführungsformen können Sicherheitselemente bzw. Key Stores auch als Software implementiert sein. Zwei Sicherheitselemente sind beispielsweise unabhängig voneinander, wenn es keine gemeinsame Instanz gibt, welche zugriffsberechtigt für beide Sicherheitselemente ist.

Ein Anwendungsprogramm, auch Applikation oder kurz App genannt, bezeichnet ein Computerprogramm, welches nicht systemtechnische Funktionalität bereitstellt, unterstützt und/oder deren Bearbeitung ermöglicht.

Unter einem Applet wird ein Computerprogramm verstanden, welches nicht als eigenständige Anwendungsprogramm betrieben wird. Der Begriff "Applet" setzt sich aus den englischen Worten "Application", d.h. Anwendung bzw. Anwendungsprogramm und "Snippet", d.h. Schnipsel, zusammen.

Ein Betriebssystem bezeichnet ein Computerprogramm oder eine Zusammenstellung von Computerprogrammen, welche systemtechnische Funktionalitäten bereitstellen, unterstützen und/oder deren Bearbeitung ermöglichen. Durch ein Betriebssystem werden Systemressourcen zur Verfügung gestellt. Systemressourcen bezeichnen Systemelemente bzw. Hardwarekomponenten eines Computers, die von Prozessen zur korrekten Ausführung benötigt werden.

Bei einem Computer bzw. einem Computersystem kann es sich zum Beispiel um einen stationären Computer, wie etwa einen Personal Computer (PC), Serviceterminal oder einen Server, oder um einen mobilen tragbaren Computer, wie etwa einen Laptop, ein Tablet, ein Smartphone oder einen andern Smart Device, handeln. Der Computer kann eine Schnittstelle zur Verbindung mit dem Netzwerk umfassen, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem "Service-Provider-Server" oder Dienst-Server wird hier ein Server bzw. ein Computersystem verstanden, auf welchem ein Serverprogramm ausgeführt wird und das die Möglichkeit bereitstellt einen angebotenen Dienst über ein Netzwerk zu initiieren bzw. in Anspruch zu nehmen und/oder auszuführen.

Unter einem "Personalisierungsserver" wird ein Server bzw. ein Computersystem verstanden, auf welchem ein Serverprogramm ausgeführt wird und das dazu konfiguriert ist, Attribute aus einem ID-Token auszulesen und in ein mobiles Endgerät einzubringen.

Unter einem "ID-Token" wird hier ein tragbares elektronisches Gerät verstanden, zum Beispiel einen sogenannten USB-Stick, eine Chipkarte, oder ein Dokument, auf welchem Attribute eines Nutzers gespeichert sind. Unter einem "Dokument" wird insbesondere ein Ausweis-, Wert- oder Sicherheitsdokument verstanden, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis. Insbesondere kann es sich bei dem ID-Token um ein Machine-Readable Travel Document, wie beispielsweise von der Internationalen Luftfahrtbehörde (ICAO) und/oder dem Bundesamt für Sicherheit in der Informationstechnik (BSI) standardisiert, handeln.

Unter einem "Provisionierungsserver" wird ein Server bzw. ein Computersystem verstanden, auf welchem ein Serverprogramm ausgeführt wird und das dazu konfiguriert ist, ein mobiles Endgerät zu provisionieren, insbesondere mit kryptographischen Schlüsseln.

Unter einem "Personalisierungsserver" wird ein Server bzw. ein Computersystem verstanden, auf welchem ein Serverprogramm ausgeführt wird und das dazu konfiguriert ist, Attribute aus einem ID-Token auszulesen und in ein mobiles Endgerät einzubringen.

Unter einem "ID-Provider-Server" wird ein Server bzw. ein Computersystem verstanden, auf welchem ein Serverprogramm ausgeführt wird und das dazu konfiguriert ist, Attribute einer von dem mobilen Endgerät bereitgestellten elektronischen Identität für einen Service-Provider-Server bereitzustellen und/oder gegenüber dem Service-Provider-Server zu bestätigen.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Eine Kommunikationsschnittstelle kann beispielsweise eine Kommunikation über ein Netzwerk ermöglichen. Je nach Konfiguration kann eine Kommunikationsschnittstelle beispielsweise eine kabellose Kommunikation nach einem Mobilfunkstandard, Bluetooth-, RFID-, WiFi und/oder NFC-Standard bereitstellen. Je nach Konfiguration kann eine Kommunikationsschnittstelle beispielsweise eine kabelbasierte Kommunikation bereitstellen. Bei der Kommunikationsschnittstelle kann es sich um eine interne Schnittstelle oder um eine externe Schnittstelle handeln.

Bei den verschlüsselten Kommunikationskanälen handelt es sich beispielsweise um verschlüsselte Ende-zu-Ende-Verbindungen. Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, so dass Zwischenstationen aufgrund der Verschlüsslung keine Kenntnis vom Inhalt der übertragenen Daten erlangen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht, etwa mittels Message Authentication Code (MAC)-Algorithmen, dient. Beispielsweise werden für einen verschlüsselten Kommunikationskanal im Zuge des Aufbaus ephemere Schlüssel zur Verschlüsselung ausgehandelt, welche mit einer Beendigung des Kommunikationskanals ihre Gültigkeit verlieren. Eine Verwendung unterschiedlicher ephemerer Schlüssel für unterschiedliche Kommunikationskanäle ermöglicht es eine Mehrzahl von Kommunikationskanälen parallel zueinander zu betreiben.

Ein verschlüsselter Kommunikationskanal kann beispielsweise unter Verwendung des Transport Layer Security (TLS) Protokolls aufgebaut werden, beispielsweise als Teil des Hypertext Transfer Protocol Secure (HTTPS) Protokolls.

Asymmetrische Schlüsselpaare werden für eine Vielzahl von Kryptosystemen eingesetzt und spielen bei der sicheren Übertragung elektronischer Daten eine wichtige Rolle. Ein asymmetrisches Schlüsselpaar besteht aus einem öffentlichen kryptographischen Schlüssel, welcher zur Ver- und/oder Entschlüsselung von Daten verwendet wird und an Dritte, beispielsweise an einen Sender oder Empfänger von Daten, weitergegeben werden darf, sowie einem privaten kryptographischen Schlüssel, welcher zur Ver- und/oder Entschlüsselung aber auch zur Signatur von Daten verwendet wird und im Regelfall geheim gehalten werden muss. Der öffentliche Schlüssel ermöglicht es jedermann Daten für den Inhaber des privaten kryptographischen Schlüssels zu verschlüsseln oder mit dem privaten kryptographischen Schlüssel erstellte digitale Signaturen zu prüfen. Ein privater Schlüssel ermöglicht es seinem Inhaber mit dem öffentlichen kryptographischen Schlüssel verschlüsselte Daten zu entschlüsseln oder digitale Signaturen von Daten zu erstellen.

Eine digitale Signatur von Daten umfasst beispielsweise ein Bilden eines Prüfwerts der Daten, wie etwa eines Hashwerts, welcher mit einem als Signaturschlüssel verwendeten privaten kryptographischen Schlüssel eines asymmetrischen Schlüsselpaars verschlüsselt wird. Im Falle einer Signatur kennt nur der Signierende den zum Erstellen der Signatur verwendeten privaten kryptographischen Schlüssel, d.h. Signaturschlüssel, des für die Signatur verwendeten asymmetrischen Schlüsselpaars. Der Signaturempfänger verfügt lediglich über den öffentlichen kryptographischen Schlüssel, d.h. Signaturprüfschlüssel, des für die Signatur verwendeten asymmetrischen Schlüsselpaars. Der Signaturempfänger kann die Signatur mithin prüfen, aber nicht selbst berechnen. Für eine Signaturprüfung berechnet der Signaturempfänger beispielsweise den Prüfwert der signierten Daten und vergleicht diesen mit dem Ergebnis einer Entschlüsselung der Signatur unter Verwendung des Signaturprüfschlüssels. Stimmt der berechnete Hashwert mit dem Ergebnis der Entschlüsselung überein ist die Signatur korrekt. Wird zudem die Authentizität des Signaturprüfschlüssels, etwa durch ein Zertifikat, insbesondere ein PKI-Zertifikat, bestätigt, ist die Signatur valide.

Unter einem "Zertifikat" wird hier ein digitales Zertifikat verstanden, welches auch als Public-Key-Zertifikat (PKI-Zertifikat) bezeichnet wird. Bei einem Zertifikat handelt es sich um strukturierte Daten, die dazu dienen, einen öffentlichen kryptographischen Schlüssel eines asymmetrischen Kryptosystems einer Identität, wie zum Beispiel einer Person, Institution oder einer Vorrichtung, zuzuordnen. Zur kryptographischen Sicherung und zum Nachweis der Authentizität der Daten des Zertifikates, sind diese von einem Zertifikatsaussteller signiert. Durch PKI-Zertifikate, welche auf asymmetrischen Schlüsselpaaren basieren, und bis auf ein Root- bzw. Wurzelzertifikat jeweils von einem Zertifikatsaussteller mit einem Signaturschlüssel signiert sind, dessen zugehöriger Signaturprüfschlüssel dem Zertifikatsaussteller durch ein PKI-Zertifikat des entsprechenden Zertifikatausstellers zugeordnet ist, wird eine so genannte Public Key Infrastructure (PKI) realisiert. Beispielsweise kann das Zertifikat dem Standard X.509 oder einem anderen Standard entsprechen. Beispielsweise handelt es sich bei dem Zertifikat um ein Card Verifiable Certificate (CVC). Ein Berechtigungszertifikat umfasst strukturierte Daten, welche zusätzlich Rechte der Identität definieren.

Die PKI stellt ein System zum Ausstellen, Verteilen und Prüfen digitaler Zertifikate bereit. Ein digitales Zertifikat kann in einem asymmetrischen Kryptosystem die Authentizität eines öffentlichen kryptographischen Schlüssels und seinen zulässigen Anwendungs- und Geltungsbereich bestätigen. Das digitale Zertifikat ist selbst durch eine digitale Signatur geschützt, deren Echtheit bzw. Authentizität mit dem öffentlichen kryptographischen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen kryptographischen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des dadurch zertifizierten Schlüssels, müssen sich die Teilnehmer der PKI beispielsweise ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate werden beispielsweise durch eine unabhängige, glaubwürdige Instanz (Zertifizierungsdienstanbieter/ZDA oder Vertrauensdienstanbieter/VDA), d.h. die das Zertifikat zuteilende Zertifizierungsstelle, bestätigen. Zertifikate können einem breiten Personenkreis zur Verfügung gestellt werden, um diesem eine Prüfung elektronischer Signaturen auf Authentizität und Gültigkeit zu ermöglichen. Ein Zertifikat kann einer elektronischen Signatur zugeordnet sein und einen Signaturprüfschlüssel in Form des öffentlichen kryptographischen Schlüssels bereitstellen, wenn der zu dem Signaturprüfschlüssel gehörende private Schlüssel als Signaturschlüssel verwendet wurde. Dadurch, dass ein ZDA /VDA ein Zertifikat in Assoziation mit einem öffentlichen kryptographischen Schlüssel der Allgemeinheit zur Verfügung stellt, ermöglicht sie es den Nutzern asymmetrischer Kryptosysteme den öffentlichen kryptographischen Schlüssel einer Identität, beispielsweise einer Person, einer Organisation, oder Computersystem, zuzuordnen.

Ausführungsformen können den Vorteil haben, dass sie eine sichere Verwaltung digitaler bzw. elektronischer Identitäten unter Verwendung eines mobilen Geräts ermöglichen. Hierzu kann das Anwendungsprogramm als ID-Anwendungsprogramm konfiguriert sein zum Verwalten von elektronischen Identitäten bzw. von zu elektronischen Identitäten gehörenden bzw. elektronische Identitäten definierenden Identitätsattributen. Es wird beispielsweise ein sicheres Anwendungsprogramm bzw. Applikation zum Verwalten elektronischer Identitäten bereitgestellt, welches im Folgenden als ID-Anwendungsprogramm bezeichnet wird.

Dem ID-Anwendungsprogramm, welches auf dem mobilen Endgerät installiert und ausgeführt wird, ist zumindest ein Sicherheitsapplet zugeordnet. Das Sicherheitsapplet ist auf dem ersten Sicherheitselement des mobilen Endgeräts installiert und wird dort ausgeführt. Das mobile Endgerät mit den von dem ID-Anwendungsprogramm verwalteten elektronischen Identitäten kann beispielsweise verwendet werden zum Identifizieren und Authentifizieren, zum Übertragen von Identitätsdaten sowie zur Unterstützung von Absichtserklärungen im mobilen Kontext.

Nach Ausführungsformen kann die elektronische Identität eine offiziell anerkannte Identität, wie zum Beispiel eine auf Grundlage eines offiziellen Ausweisdokuments, etwa eines Personalausweises oder Reisepasses, erstellte elektronische Identität umfassen.

Die elektronische Identität eines Nutzers ist eindeutig, d.h. einzigartig und unverwechselbar. Sie wird auf der Grundlage von Merkmalen, sog. Identitätsattributen, definiert. Eine elektronische Identität umfasst beispielsweise personenbezogene Daten. Personenbezogene Daten bezeichnen Daten, welche eine Identifikation einer Person ermöglichen oder einer Person zuordenbar sind, auf welche die personenbezogenen Daten bezogen sind.

Ein Nutzer kann über eine Mehrzahl von unterschiedlichen, anwendungsspezifischen elektronischen Identitäten verfügen. Diese elektronischen Identitäten können unterschiedlichen Sicherheitsanforderungen entsprechen.

Nach Ausführungsformen kann eine auf dem mobilen Endgerät gespeicherte und von dem ID-Anwendungsprogramm bereitgestellte bzw. verwaltete elektronische Identität ohne zusätzliche Hardware neben dem mobilen Endgerät zur Identifizierung und Authentifizierung des Nutzers des mobilen tragbaren Endgeräts verwendet werden.

Identitätsattribute werden beispielsweise von Service-Providern bzw. Dienstanbietern für Online-Dienste nachgefragt. Nach Ausführungsformen erfolgt eine Übertragung der von einem Dienstanbieter für seinen Online-Dienst benötigten Identitätsattribute verschlüsselt und authentisch. Beispielsweise wird unter Verwendung von Berechtigungszertifikaten geregelt, wer auf welche Identitätsattribute zugreifen darf bzw. eine Leseberechtigung für diese besitzt. Beispielsweise werden die benötigten Identitätsattribute von einem dazu mittels Berechtigungszertifikat berechtigten ID-Provider ausgelesen und von diesem dem anfragenden Dienstanbieter zur Verfügung gestellt. Nach Ausführungsformen stellt der ID-Provider dem anfragenden Dienstanbieter nur eine Bestätigung des oder der angefragten Identitätsattribute zur Verfügung. Beispielsweise fragt der Dienstanbieter an, ob die angefragten Identitätsattribute ein oder mehrere Merkmale aufweisen, was von dem ID-Provider-Server anhand der ausgelesenen Identitätsattribute geprüft und gegenüber dem Dienstanbieter entweder bestätigt oder verneint wird.

Eine Zustimmung des Nutzers zur Verwendung der Identitätsattribute und/oder eine Nutzerauthentifizierung erfolgt beispielsweise unter Prüfung ein oder mehrerer Authentifizierungsfaktoren, wie etwa Passwort, PIN, Fingerabdruck oder Gesichtserkennung.

Nach Ausführungsformen steuert das ID-Anwendungsprogramm den Aufbau des verschlüsselten Kommunikationskanals zwischen dem mobilen Endgerät und dem Personalisierungsserver. Beispielsweise umfasst das ID-Anwendungsprogramm eine Personalisierungskomponente, welche auf Seiten des mobilen Endgeräts die Personalisierung steuert. Beispielsweise steuert die Personalisierungskomponente des ID-Anwendungsprogramms auf Seiten des mobilen Endgeräts den Aufbau des verschlüsselten Kommunikationskanals sowie den Aufbau des ersten verschlüsselten Unterkanals und des zweiten verschlüsselten Unterkanals unter Vermittlung des mobilen Endgeräts.

Beispielsweise werden die empfangenen ersten Attribute durch das Sicherheitsapplet in dem ersten Sicherheitselement gespeichert. Beispielsweise werden die Attribute in einem dem Sicherheitsapplet bzw. dem ID-Anwendungsprogramm zugeordneten Speicherbereich des ersten Sicherheitselements gespeichert.

Beispielsweise sendet der Personalisierungsserver zusammen mit den ersten Attributen eine Aufforderung an das erste Sicherheitselement zum Speichern der ersten Attribute. Beispielsweise wird die Aufforderung in Form einer CAPDU (Commando Application Protocol Data Unit) an das Sicherheitsapplet des ersten Sicherheitselements gesendet.

Nach Ausführungsformen ist der verschlüsselte Kommunikationskanal mit einem ersten kanalspezifischen ephemeren symmetrischen kryptographischen Sitzungsschlüssel verschlüsselt. Nach Ausführungsformen ist der erste verschlüsselte Unterkanal mit einem zweiten kanalspezifischen ephemeren symmetrischen kryptographischen Sitzungsschlüssel verschlüsselt. Nach Ausführungsformen ist der zweite verschlüsselte Unterkanal mit einem dritten kanalspezifischen ephemeren symmetrischen kryptographischen Sitzungsschlüssel verschlüsselt.

Ausführungsformen können den Vorteil haben, dass die Verschlüsselung im Kommunikationskanal sowie in den beiden verschlüsselten Unterkanälen jeweils kanalspezifische ephemere symmetrische kryptographische Sitzungsschlüssel zugeordnet sind. Somit können die Unterkanäle jeweils mit dem Kommunikationskanal kombiniert bzw. innerhalb desselben ausgeführt werden, indem eine doppelte Verschlüsselung durch die den entsprechenden Kanälen zugeordneten kryptographischen Sitzungsschlüssel verwendet wird.

Nach Ausführungsformen sind der erste kanalspezifische ephemere symmetrische kryptographische Sitzungsschlüssel, der zweite kanalspezifische ephemere symmetrische kryptographische Sitzungsschlüssel und der dritte kanalspezifische ephemere symmetrische kryptographische Sitzungsschlüssel jeweils unabhängig voneinander.

Beispielsweise ist dem ersten und dem zweiten verschlüsselten Unterkanal ferner jeweils ein kanalspezifischer ephemerer symmetrischer kryptographischer Authentisierungsschlüssel zum Authentisieren von Daten zugeordnet, welche über den entsprechenden ersten bzw. zweiten verschlüsselten Unterkanal übertragen werden. Beispielsweise wird für die entsprechenden Daten unter Verwendung des jeweiligen kanalspezifischer ephemerer symmetrischer kryptographischer Authentisierungsschlüssel jeweils ein MAC erzeugt. Bei den entsprechenden Authentisierungsschlüsseln handelt es sich beispielsweise um kryptographische Schlüssel zum Erzeugen des entsprechenden MAC.

Ein MAC wird beispielsweise unter Verwendung eines MAC-Algorithmus berechnet, welchem zu schützende Daten, z.B. die Identitätsattribute, und ein kryptographischer Schlüssel, beispielsweise ein symmetrischer kryptographischer Schlüssel, als Eingabedaten zur Verfügung gestellt werden. Unter Verwendung dieser Eingabedaten berechnet der MAC-Algorithmus eine Prüfsumme, welche als MAC dient. Zum Berechnen von MACs können beispielsweise Blockchiffren oder Hash-Funktionen verwendet werden. Als MAC kann beispielsweise ein HMAC (Keyed-Hash Message Authentication Code) verwendet werden, für dessen Konstruktion eine kryptografische Hash-Funktion, wie beispielsweise der Secure Hash Algorithm (SHA), und ein geheimer kryptographischer Schlüssel, beispielsweise ein symmetrischer kryptographischer Schlüssel, verwendet wird.

Zur Sicherung einer Datenübertragung, beispielsweise einer Übertragung von Identitätsattributen, wird zwischen Sender, beispielsweise dem ID-Token, und Empfänger, beispielsweise einem Personalisierungsserver, ein kryptographischer Schlüssel, beispielsweise ein symmetrischer kryptographischer Schlüssel, vereinbart. Der Sender verwendet diesen kryptographischen Schlüssel zum Berechnen eines MACs der zu übertragenden Daten und sendet den berechneten MAC zusammen mit den zu übertragenden Daten an den Empfänger. Der Empfänger berechnet seinerseits einen MAC für die empfangenen Daten unter Verwendung des kryptographischen Schlüssels und vergleicht das Ergebnis mit dem empfangenen MAC. Im Falle einer Übereinstimmung zwischen berechnetem MAC und empfangenen MAC ist die Integritätsprüfung erfolgreich und die empfangenen Daten werden als authentisch angesehen.

Im Falle eines MAC müssen sowohl Sender als auch Empfänger Kenntnis von dem verwendeten kryptographischen Schlüssel haben im Gegensatz zu einer Verwendung von reinen Hashfunktionen oder von Signaturen. Im Falle von reinen Hashfunktionen kommen beispielsweise keine kryptographischen Schlüssel zum Einsatz. Falls die Hashfunktionen öffentlich sind, kann jeder den Hashwert berechnen, insbesondere für manipulierte Nachrichten. Im Falle einer Signatur kennt nur der Signierende den zum Erstellen der Signatur verwendeten privaten kryptographischen Schlüssel, d.h. Signaturschlüssel, eines für die Signatur verwendeten asymmetrischen Schlüsselpaars. Der Signaturempfänger verfügt lediglich über den öffentlichen kryptographischen Schlüssel, d.h. Signaturprüfschlüssel, des für die Signatur verwendeten asymmetrischen Schlüsselpaars. Der Signaturempfänger kann die Signatur mithin prüfen unter Verwendung des Signaturprüfschlüssels, aber nicht selbst berechnen.

Nach Ausführungsformen handelt es sich bei der Verschlüsselung des verschlüsselten Kommunikationskanals um eine Ende-zu-Ende-Verschlüsselung zwischen dem mobilen Endgerät und dem Personalisierungsserver.

Ausführungsformen können den Vorteil haben, dass sichergestellt werden kann, dass stets dasselbe mobile Endgerät einen Endpunkt des verschlüsselten Kommunikationskanals bildet. Solange also über denselben verschlüsselten Kommunikationskanal kommuniziert wird, weiß der Personalisierungsserver, dass er mit demselben mobilen Endgerät kommuniziert. Somit kann sichergestellt werden, dass es sich bei dem mobilen Endgerät, über welches der ID-Token ausgelesen wird, um dasselbe mobile Endgerät handelt, welches mit den ausgelesenen Daten, d.h. Attributen des ID-Tokens, personalisiert wird.

Nach Ausführungsformen erfolgt die Verschlüsselung des verschlüsselten Kommunikationskanal seitens des mobilen Endgeräts unter Verwendung eines zweiten Sicherheitselements des mobilen Endgeräts, welches einem Betriebssystem des mobilen Endgeräts zugeordnet ist. Das zweite Sicherheitselement stellt beispielsweise kryptographische Schlüssel und/oder kryptographische Protokolle für das Betriebssystem bereit.

Nach Ausführungsformen handelt es sich bei der Verschlüsselung des ersten verschlüsselten Unterkanals um eine Ende-zu-Ende-Verschlüsselung zwischen dem ersten ID-Token und dem Personalisierungsserver.

Ausführungsformen können den Vorteil haben, dass die zwischen dem ID-Token und dem Personalisierungsserver verschlüsselt übertragenen Daten zumindest zwischen dem mobilen Endgerät und dem Personalisierungsserver innerhalb des verschlüsselten Kommunikationskanals übertragen werden können. Zugleich erlangt das mobile Endgerät an diesem Punkt noch keinen Zugriff auf die über den verschlüsselten Unterkanal übertragenen Daten. Somit kann sichergestellt werden, dass ein Zugriff auf die entsprechenden Daten ausschließlich durch den Personalisierungsserver im Zuge einer Personalisierung erfolgt. Mithin kann einem Missbrauch bzw. einem unberechtigten Auslesen von Attributen entgegengewirkt werden. Vielmehr kann ein entsprechendes Auslesen und Verwenden der Attribute zum Personalisieren ausschließlich über eine vertrauenswürdige Instanz in Form des Personalisierungsservers erfolgen.

Nach Ausführungsformen handelt es sich bei der Verschlüsselung des zweiten verschlüsselten Unterkanals um eine Ende-zu-Ende-Verschlüsselung zwischen dem Sicherheitsapplet und dem Personalisierungsserver.

Ausführungsformen können den Vorteil haben, dass durch die Ende-zu-Ende-Verschlüsselung zwischen dem zu personalisierenden Sicherheitsapplet des Sicherheitselements und dem Personalisierungsserver sichergestellt werden kann, dass tatsächlich das zu personalisierende Sicherheitsapplet des ersten Sicherheitselements des mobilen Endgeräts personalisiert wird und dass die zur Personalisierung verwendeten Daten ausschließlich dem entsprechenden Sicherheitsapplet zur Verfügung gestellt werden. Somit können beispielsweise unberechtigte Zugriffe auf die entsprechende Personalisierungsdaten verhindert werden.

Nach Ausführungsformen umfasst das Personalisieren ferner:
- Erzeugen eines dem ID-Anwendungsprogramm zugeordneten asymmetrischen kryptographischen Schlüsselpaars durch das Sicherheitsapplet, welches einen privaten kryptographischen Schlüssel und einen öffentlichen kryptographischen Schlüssel des ID-Anwendungsprogramms umfasst, wobei das asymmetrische Schlüsselpaar zu einem Authentisieren des ID-Anwendungsprogramms im Zuge einer Verwendung der ersten Attribute dient,

Nach Ausführungsformen sendet das Sicherheitsapplet den öffentlichen kryptographischen Schlüssel des ID-Anwendungsprogramms an den Personalisierungsserver über den zweiten verschlüsselten Unterkanal innerhalb des verschlüsselten Kommunikationskanals.

Ausführungsformen können den Vorteil haben, dass durch das Sicherheitsapplet auf dem ersten Sicherheitselement ein individuelles asymmetrisches Schlüsselpaar für das individuelle ID-Anwendungsprogramm erzeugt und zur Verwendung durch das ID-Anwendungsprogramm bereitgestellt werden kann. Beispielsweise ist das asymmetrisches Schlüsselpaar der individuellen elektronischen Identität zugeordnet, welche im Zuge der Personalisierung in das mobile Endgerät eingebracht wird. Der öffentliche kryptographische Schlüssel des entsprechenden asymmetrischen Schlüsselpaars wird über den verschlüsselten Unterkanal zwischen Sicherheitsapplet und Personalisierungsserver in dem verschlüsselten Kommunikationskanal übertragen. Somit wird der entsprechende öffentliche kryptographische Schlüssel, der im Zuge der Personalisierung auf dem personalisierten Sicherheitselement erzeugt wird, dem Personalisierungsserver zur Verfügung gestellt. Dieser kann den entsprechenden öffentlichen kryptographischen Schlüssel beispielsweise als Signaturprüfschlüssel anderen Instanzen zur Verfügung stellen. Mit dem entsprechendem Signaturprüfschlüssel kann sichergestellt werden, dass mit dem zugehörigen privaten kryptographischen Schlüssel signierte Daten tatsächlich von dem personalisierten Sicherheitsapplet des ersten Sicherheitselements stammen. Beispielsweise kann der Personalisierungsserver ein Zertifikat für bzw. mit dem entsprechenden öffentlichen kryptographischen Schlüssel ausstellen. Durch das entsprechende Zertifikat, bei welchem es sich beispielsweise um ein Zertifikat einer Zertifikatskette, insbesondere einer PKI handelt, kann durch den Personalisierungsserver die Authentizität des entsprechenden öffentlichen kryptographischen Schlüssels bzw. dessen Zuordnung zu dem personalisierten Sicherheitselement und damit zu dem entsprechenden personalisierten ID-Anwendungsprogramm bestätigt werden.

Beispielsweise sendet der Personalisierungsserver zum Initiieren des Erzeugens des dem ID-Anwendungsprogramm zugeordneten asymmetrischen kryptographischen Schlüsselpaars eine Aufforderung an das Sicherheitsapplet des ersten Sicherheitselements, welche das Sicherheitsapplet zum Erzeugen des dem ID-Anwendungsprogramm zugeordneten asymmetrischen kryptographischen Schlüsselpaars auffordert. Beispielsweise wird die Aufforderung in Form einer CAPDU an das Sicherheitsapplet des ersten Sicherheitselements gesendet.

Nach Ausführungsformen umfasst das Personalisieren ferner:
- Empfangen ein oder mehrere Wurzelsignaturprüfschlüssel durch das Sicherheitsapplet von dem Personalisierungsserver über den zweiten verschlüsselten Unterkanal innerhalb des verschlüsselten Kommunikationskanals, wobei die empfangenen Wurzelsignaturprüfschlüssel zum Verifizieren von Zertifikatsignaturen ein oder mehrerer Wurzelinstanzen dienen, welche Zertifikate aufweisen, die jeweils im Zuge eines Auslesens der ersten Attribute zum Authentisieren eines auslesenden Computersystems gegenüber dem ID-Anwendungsprogramm verwendet werden,
- Speichern der empfangenen Wurzelsignaturprüfschlüssel durch das Sicherheitsapplet in dem ersten Sicherheitselement.

Ausführungsformen können den Vorteil haben, dass im Zuge der Personalisierung auf dem entsprechenden Sicherheitselement Wurzelsignaturprüfschlüssel in dem Sicherheitsapplet hinterlegt werden können. Mit den entsprechenden Wurzelsignaturprüfschlüsseln wird das Sicherheitsapplet dazu in die Lage versetzt, Signaturen von Wurzelinstanzen, insbesondere Zertifikatsignaturen von Wurzelinstanzen, zu verifizieren. Wird dem ID-Anwendungsprogramm und damit dem Sicherheitsapplet eine Zertifikatskette zum Authentifizieren eines Computersystems vorgelegt, beispielsweise eines Computersystems, welches zum Nachweis der Identität des Nutzers des mobilen Endgeräts auf die ausgelesenen und in dem personalisierten Sicherheitselement hinterlegten Attribute zugreifen möchte. So kann mit dem Wurzelsignaturprüfschlüssel beispielsweise ein erstes innerhalb der Zertifikatskette ausgestelltes Ausgangszertifikat der entsprechenden Zertifikatskette verifiziert werden. Erweist sich das entsprechende Ausgangszertifikat als authentisch, so kann dadurch sukzessive die Authentizität der vollständigen Zertifikatskette geprüft und verifiziert werden. Beispielsweise ist jedes Zertifikat der Zertifikatskette jeweils unter Verwendung eines privaten kryptographischen Schlüssels einer ausstellenden Instanz als Signaturschlüssel signiert. Die entsprechende Signatur kann beispielsweise jeweils durch einen von dem vorangehenden Zertifikat als Signaturprüfschlüssel bereitgestellten zugehörigen öffentlichen kryptographischen Schlüssel verifiziert werden. Lediglich das Ausgangszertifikat, welchem kein Zertifikat vorangeht, ist mit einem Wurzelsignaturschlüssel einer Wurzelinstanz signiert. Diese Wurzelsignatur kann unter Verwendung eines entsprechenden in dem personalisierten Sicherheitselement hinterlegten Wurzelsignaturprüfschlüssel geprüft und verifiziert werden.

Beispielsweise sendet der Personalisierungsserver zusammen mit den ein oder mehrere Wurzelsignaturprüfschlüssel eine Aufforderung an das Sicherheitsapplet des ersten Sicherheitselements zum Speichern der Wurzelsignaturprüfschlüssel. Beispielsweise wird die Aufforderung in Form einer CAPDU an das Sicherheitsapplet des ersten Sicherheitselements gesendet.

Nach Ausführungsformen umfasst das Personalisieren ferner:
- Empfangen einer Signatur der ersten Attribute von dem Personalisierungsserver durch das Sicherheitsapplet des ersten Sicherheitselements über den zweiten verschlüsselten Unterkanal innerhalb des verschlüsselten Kommunikationskanals, wobei die Signatur als Authentizitätsnachweis der ersten Attribute dient,
- Speichern der empfangenen Signatur der ersten Attribute durch das Sicherheitsapplet in dem ersten Sicherheitselement.

Ausführungsformen können den Vorteil haben, dass mittels der entsprechenden Signatur der Attribute deren Authentizität verifizierbar ist. Mithin kann das mobile Endgerät, welches eine entsprechende Signatur der zum Personalisieren verwendeten Attribute umfasst, auch offline zum Nachweis der Identität des Nutzers des mobilen Endgeräts verwendet werden. Hierzu zeigt das mobile Endgerät die entsprechenden Attribute inklusive Signatur beispielsweise auf einer Anzeigevorrichtung an, etwa in Form eines ein- oder zweidimensionalen lesbaren Maschinencodes, beispielsweise eines QR-Codes. Die entsprechenden Attribute mit der Signatur können dann beispielsweise von einem Lesegerät erfasst und anhand der Signatur verifiziert werden. Ferner wäre beispielsweise eine kontaktlose Übertragung der entsprechenden Attribute mit der Signatur zum Nachweis der Identität des Nutzers des mobilen Endgeräts an ein weiteres Computersystem, beispielsweise ein weiteres mobiles Endgerät, möglich. Auch in diesem Fall könnte die Authentizität der entsprechenden Attribute und damit die Identität des Nutzers des mobilen Endgeräts anhand der Signatur nachgewiesen werden.

Beispielsweise sendet der Personalisierungsserver zusammen mit der Signatur der ersten Attribute eine Aufforderung an das Sicherheitsapplet des ersten Sicherheitselements zum Speichern der Signatur der ersten Attribute. Beispielsweise wird die Aufforderung in Form einer CAPDU an das Sicherheitsapplet des ersten Sicherheitselements gesendet.

Nach Ausführungsformen umfasst das Aufbauen des verschlüsselten Kommunikationskanals ein Aushandeln des ersten kanalspezifischen ephemeren symmetrischen kryptographischen Sitzungsschlüssels.

Nach Ausführungsformen umfasst das Aushandeln des ersten kanalspezifischen ephemeren symmetrischen kryptographischen Sitzungsschlüssels:
- Erzeugen eines ersten Zufallswerts durch das mobile Endgerät,
- Erzeugen des ersten kanalspezifischen ephemeren symmetrischen kryptographischen Sitzungsschlüssel unter Verwendung des ersten Zufallswerts durch das mobile Endgerät,
- Empfangen eines ersten Zertifikats des Personalisierungsservers mit einem ersten öffentlichen kryptographischen Schlüssel eines ersten asymmetrischen kryptographischen Schlüsselpaars des Personalisierungsservers durch das mobile Endgerät von dem Personalisierungsserver,
- Verschlüsseln des ersten Zufallswerts unter Verwendung des empfangenen ersten öffentlichen kryptographischen Schlüssels des Personalisierungsservers durch das mobile Endgerät,
- Senden des verschlüsselten ersten Zufallswerts an den Personalisierungsserver durch das mobile Endgerät zum Erzeugen des ersten kanalspezifischen ephemeren symmetrischen kryptographischen Sitzungsschlüssel durch den Personalisierungsserver.

Ausführungsformen können den Vorteil haben, dass ein sicheres Verfahren zum Bereitstellen des ersten kanalspezifischen ephemeren symmetrischen kryptographischen Sitzungsschlüssels zum Verschlüsseln des Kommunikationskanals zwischen dem mobilen Endgerät und dem Personalisierungsserver bereitgestellt werden kann. Beispielsweise wird zunächst ein erster initialer Zufallswert durch das mobile Endgerät erzeugt und an den Personalisierungsserver gesendet. Nach dem Empfang des entsprechenden ersten initialen Zufallswerts erzeugt der Personalisierungsserver einen zweiten initialen Zufallswert, welchen er an das mobile Endgerät sendet. Somit verfügen beide Teilnehmer, das mobile Endgerät sowie der Personalisierungsserver, über beide initialen Zufallswerte. Ferner sendet der Server beispielsweise sein Zertifikat an das mobile Endgerät und empfängt von dem mobilen Endgerät nach einer erfolgreichen Prüfung des entsprechenden Zertifikats ein Zertifikat des mobilen Endgeräts. Bei dem Zertifikat des mobilen Endgeräts kann es sich beispielsweise um ein dem Anwendungsprogramm zugeordnetes Zertifikat handeln. Das durch den Personalisierungsserver empfangene Zertifikat des mobilen Endgeräts wird ebenfalls verifiziert. Die beiden Zertifikate umfassen dabei jeweils einen öffentlichen kryptographischen Schlüssel, d.h. das Zertifikat des Personalisierungsservers umfasst einen öffentlichen kryptographischen Schlüssel eines asymmetrischen Schlüsselpaars des Personalisierungsservers und das Zertifikat des mobilen Endgeräts umfasst einen öffentlichen kryptographischen Schlüssel eines asymmetrischen Schlüsselpaars des mobilen Endgeräts. Somit verfügen nun beide Teilnehmer jeweils über öffentliche kryptographische Schlüssel der Gegenseite, deren Authentizität jeweils durch ein Zertifikat belegt ist. Daraufhin erzeugt das mobile Endgerät beispielsweise den ersten Zufallswert, welchen es an den Personalisierungsserver sendet. Somit verfügen nun beide Teilnehmer der Kommunikation jeweils über drei Zufallswerte, aus welchen beispielsweise der kanalspezifische ephemere symmetrische kryptographische Sitzungsschlüssel berechnet werden kann. Ferner sendet das mobile Endgerät beispielsweise eine Signatur einer, mehrerer oder aller vorangehenden im Zuge des Kanalaufbaus ausgetauschten Nachrichten an den Personalisierungsserver. Durch Prüfung der entsprechenden Signatur unter Verwendung von dem Zertifikat des mobilen Endgeräts bereitgestellten öffentlichen kryptographischen Schlüssel als Signaturprüfschlüssel kann der Personalisierungsserver das mobile Endgerät authentifizieren. Sendet im Folgenden der Personalisierungsserver eine mit dem ersten kanalspezifischen ephemeren symmetrischen kryptographischen Sitzungsschlüssel verschlüsselte Nachricht an das mobile Endgerät, so wird dadurch auch der Personalisierungsserver gegenüber dem mobilen Endgerät authentifiziert. Der Personalisierungsserver kann den ersten kanalspezifischen ephemeren symmetrischen kryptographischen Sitzungsschlüssel nur berechnen, wenn er über einen privaten kryptographischen Schlüssel verfügt, mit welchem er den von dem mobilen Endgerät empfangenen ersten Zufallswert entschlüsseln kann. Somit ist nur der im Besitz des entsprechenden privaten kryptographischen Schlüssels befindliche Personalisierungsserver, welchem das Zertifikat des Personalisierungsservers zugeordnet ist, zu einer verschlüsselten Kommunikation über den verschlüsselten Kommunikationskanal in der Lage.

Nach Ausführungsformen umfasst das Aufbauen des verschlüsselten Kommunikationskanals ferner ein gegenseitiges Authentisieren des ID-Anwendungsprogramms und/oder des mobilen Endgeräts und des Personalisierungsservers.

Ausführungsformen können den Vorteil haben, dass durch eine gegenseitige Authentifizierung sichergestellt werden kann, welche Teilnehmer miteinander kommunizieren und zwischen welchen Teilnehmern mithin der verschlüsselte Kommunikationskanal aufgebaut wird. Insbesondere kann dadurch die Identität des mobilen Endgeräts festgestellt werden und sichergestellt werden, welchem Endgerät die elektronische Identität des Nutzers zugeordnet wird bzw. welches mobile Endgerät personalisiert wird

Nach Ausführungsformen umfasst das mobile Endgerät ferner ein zweites Sicherheitselement. Beispielsweise wird aufseiten des mobilen Endgeräts das zweite Sicherheitselement zum Authentisieren des mobilen Endgerätes bzw. des Anwendungsprogramms verwendet. Das zweite Sicherheitselement umfasst einen ersten initialen privaten kryptographischen Schlüssel eines ersten initialen asymmetrischen kryptographischen Schlüsselpaars des ID-Anwendungsprogramms. Ferner umfasst das mobile Endgerät ferner ein initiales Zertifikat des ID-Anwendungsprogramms, welches den initialen öffentlichen kryptographischen Schlüssel des initialen asymmetrischen kryptographischen Schlüsselpaars des ID-Anwendungsprogramms umfasst. Das mobile Endgerät sendet zum Authentisieren gegenüber dem Personalisierungsserver beispielsweise das initiale Zertifikat des ID-Anwendungsprogramms an den Personalisierungsserver sowie eine von dem zweiten Sicherheitselement mit dem ersten initialen privaten kryptographischen Schlüssel des ID-Anwendungsprogramms signierte Nachricht.

Ausführungsformen können den Vorteil haben, dass sich das mobile Endgerät so gegenüber dem Personalisierungsserver anhand des entsprechenden Zertifikats des ID-Anwendungsprogramms authentisieren kann.

Nach Ausführungsformen umfasst das mobile Endgerät ferner ein oder mehrere Authentifizierungssensoren zum Erfassen von ein oder mehreren Authentifizierungsfaktoren des Nutzers. Ein auf dem mobilen Endgerät installiertes Betriebssystem ist dazu konfiguriert, die Authentifizierungssensor zu steuern. Das zweite Sicherheitselement ist dem Betriebssystem zugeordnet. Voraussetzung für das Signieren mit dem ersten initialen privaten kryptographischen Schlüssel des ID-Anwendungsprogramms ist eine erfolgreiche Authentifizierung des Nutzers gegenüber dem zweiten Sicherheitselement. Der Nutzer ist auf dem mobilen Endgerät registriert und in dem zweiten Sicherheitselement ist zumindest ein Referenzwert des registrierten Nutzers zum Verifizieren zumindest eines erfassten Authentifizierungsfaktors gespeichert.

Ausführungsformen können den Vorteil haben, dass eine Authentifizierung eines Nutzers des mobilen Endgeräts ermöglicht wird. Diese Authentifizierung des registrierten Nutzers ist dann beispielsweise eine notwendige Voraussetzung für eine erfolgreiche Authentisierung des mobilen Endgeräts gegenüber dem Personalisierungsserver. Somit kann sichergestellt werden, dass ein registrierter Nutzer der Verwendung des mobilen Endgeräts zum Aufbau des verschlüsselten Kommunikationskanals zustimmt.

Nach Ausführungsformen umfasst das Aufbauen des ersten verschlüsselten Unterkanals ein Authentisieren des Nutzers gegenüber dem ID-Token über das mobile Endgerät.

Ausführungsformen können den Vorteil haben, dass beim Auslesen des ID-Tokens sichergestellt werden kann, dass ein entsprechendes Auslesen von einem Inhaber des ID-Tokens freigegeben wird. Beispielsweise erfolgt das Authentisieren des Nutzers gegenüber dem ID-Token unter Verwendung des mobilen Endgeräts.

Nach Ausführungsformen umfasst das Authentisieren des Nutzers gegenüber dem ID-Token:
- Empfangen eines weiteren von den ein oder mehreren Authentifizierungssensoren erfassten Authentifizierungsfaktors des Nutzers durch das ID-Anwendungsprogramm,
- Erzeugen eines symmetrischen kryptographischen Schlüssels durch das zweite Sicherheitselement unter Verwendung des empfangenen weiteren Authentifizierungsfaktor,
- Empfangen eines verschlüsselten zweiten Zufallswert durch das ID-Anwendungsprogramm von dem ID-Token, wobei der verschlüsselte zweite Zufallswert unter Verwendung des symmetrischen kryptographischen Schlüssels verschlüsselt ist, welchen der ID-Token unter Verwendung eines in dem ID-Token zum Verifizieren des weiteren Authentifizierungsfaktors gespeicherten weiteren Referenzwert des registrierten Nutzers erzeugt,
- Entschlüsseln des empfangenen verschlüsselten zweiten Zufallswerts durch das zweite Sicherheitselement unter Verwendung des erzeugten symmetrischen kryptographischen Schlüssels,
- Erzeugen eines ersten ephemeren asymmetrischen kryptographischen Schlüsselpaars des ID-Anwendungsprogramms durch das zweite Sicherheitselement, welches einen ersten ephemeren privaten kryptographischen Schlüssel und einen ersten ephemeren öffentlichen kryptographischen Schlüssel des ID-Anwendungsprogramms umfasst,
- Senden des ersten ephemeren öffentlichen kryptographischen Schlüssels des ID-Anwendungsprogramms an den ID-Token,
- Empfangen eines ephemeren öffentlichen kryptographischen Schlüssels des ID-Tokens,
- Erzeugen eines mit dem ID-Token geteilten ersten Geheimnisses unter Verwendung des entschlüsselten zweiten Zufallswerts, des ersten ephemeren privaten kryptographischen Schlüssels des ID-Anwendungsprogramms und des ephemeren öffentlichen kryptographischen Schlüssels des ID-Tokens,
- Erzeugen eines ersten gemeinsamen Authentisierungsschlüssel zum gegenseitigen Authentisieren von ID-Anwendungsprogramm und ID-Token durch das zweite Sicherheitselement unter Verwendung des geteilten ersten Geheimnisses,
- Erzeugen eines ersten Authentisierungstoken unter Verwendung des ersten Authentisierungsschlüssels und des ersten ephemeren öffentlichen kryptographischen Schlüssels des ID-Tokens durch das zweite Sicherheitselement,
- Senden des ersten Authentisierungstoken an den ID-Token durch das zweite Sicherheitselement,
- Empfangen eines zweiten Authentisierungstoken von dem ID-Token durch das zweite Sicherheitselement,
- Verifizieren des empfangenen zweiten Authentisierungstoken unter Verwendung des ersten Authentisierungsschlüssels und des ersten ephemeren öffentlichen kryptographischen Schlüssels des ID-Anwendungsprogramms.

Unter Verwendung eines erfassten Authentifizierungsfaktors des Nutzers wird beispielsweise ein ephemerer symmetrischer kryptographischer Schlüssel abgeleitet. Dabei dienen der von dem mobilen Endgerät erfasste Authentifizierungsfaktor einerseits und ein auf dem ID-Token hinterlegter Referenzwert andererseits jeweils als ein geteiltes Passwort zum beidseitigen Ableiten des ephemeren symmetrischen kryptographischen Schlüssels. Das mobile Endgerät empfängt einen Zufallswert von dem ID-Token, welcher mit demselben ephemeren symmetrischen kryptographischen Schlüssel verschlüsselt ist. Den entsprechenden ephemeren symmetrischen kryptographischen Schlüssel leitet der ID-Token beispielsweise aus einem Referenzwert für den Authentifizierungsfaktor ab oder der entsprechend abgeleitete ephemere symmetrische kryptographische Schlüssel ist auf dem ID-Token gespeichert. Ist das mobile Endgerät dazu in der Lage, den empfangenen verschlüsselten Zufallswert korrekt zu entschlüsseln, stellt dies einen Nachweis dar, dass dem mobilen Endgerät der korrekte Authentifizierungsfaktor vorliegt. Das mobile Endgerät erzeugt ein ephemeres asymmetrisches Schlüsselpaar, dessen öffentlichen kryptographischen Schlüssel das mobile Endgerät an den ID-Token sendet. Im Gegenzug empfängt das mobile Endgerät den öffentlichen kryptographischen Schlüssel des ID-Tokens. An dieser Stelle des Verfahrens sind mithin keine statischen kryptographischen Schlüssel notwendig, sondern es können ausschließlich zufallsbasiert erzeugte ephemere asymmetrische Schlüsselpaar verwendet werden. Das mobile Endgerät erzeugt unter Verwendung des entschlüsselten Zufallswerts, des ephemeren privaten kryptographischen Schlüssels des ID-Anwendungsprogramms sowie des ephemeren öffentlichen kryptographischen Schlüssels des ID-Tokens ein mit dem ID-Token geteiltes Geheimnis. Der ID-Token ist ebenfalls dazu in der Lage, das entsprechende Geheimnis unter Verwendung des von ihm erzeugten Zufallswerts, des ephemeren privaten kryptographischen Schlüssels des ID-Tokens sowie des von dem mobilen Endgerät empfangenen ephemeren öffentlichen kryptographischen Schlüssels des mobilen Endgeräts zu berechnen.

Das mobile Endgerät kann nun das so erzeugte geteilte Geheimnis zum Berechnen eines gemeinsamen Authentisierungsschlüssels zum gegenseitigen Authentisieren von ID-Anwendungsprogramm und ID-Token verwenden. So kann beispielsweise das mobile Endgerät einen ersten Authentisierungstoken unter Verwendung des entsprechenden Authentisierungsschlüssels und des ephemeren öffentlichen kryptographischen Schlüssels des ID-Tokens erzeugen. Der entsprechende Authentisierungstoken kann von dem mobilen Endgerät an das ID-Token gesendet werden, welches den empfangenen Authentisierungstoken unter Verwendung des gemeinsamen Authentisierungsschlüssels und des ephemeren privaten kryptographischen Schlüssels des ID-Tokens verifizieren kann. Somit kann sich das mobile Endgerät gegenüber dem ID-Token authentisieren. Ebenso kann im Gegenzug der ID-Token einen Authentisierungstoken an das mobile Endgerät senden. Das mobile Endgerät empfängt den Authentisierungstoken, welcher beispielsweise unter Verwendung des geteilten Geheimnisses sowie den ephemeren öffentlichen kryptographischen Schlüssel des mobilen Endgeräts erzeugt ist. Unter Verwendung des Authentisierungsschlüssels und des öffentlichen kryptographischen Schlüssels des ID-Anwendungsprogramms kann der Authentisierungstoken verifiziert werden.

Nach Ausführungsformen wird zum Erzeugen des geteilten ersten Geheimnisses ferner ein Anwendungsbereichsidentifikator eines Anwendungsbereichs des ID-Tokens verwendet, wobei der Anwendungsbereichsidentifikator zusammen mit dem verschlüsselten zweiten Zufallswert von dem ID-Token durch das ID-Anwendungsprogramm empfangen wird.

Nach Ausführungsformen handelt es sich bei dem ersten Authentisierungsschlüssel um einen kryptographischen Schlüssel zum Erzeugen eines Message Authentication Codes, wobei es sich bei dem ersten Authentisierungstoken um einen unter Verwendung des ersten Authentisierungsschlüssels erzeugten ersten MAC des ersten ephemeren öffentlichen kryptographischen Schlüssels des ID-Anwendungsprogramms handelt.

Nach Ausführungsformen erzeugt das zweite Sicherheitselement ferner einen fünften ephemeren symmetrischen kryptographischen Schlüssel unter Verwendung des geteilten ersten Geheimnisses zum Verschlüsseln der Kommunikation zwischen dem mobilen Endgerät und dem ID-Token.

Ausführungsformen können den Vorteil haben, dass ein ephemerer symmetrischer kryptographischer Schlüssel bereitgestellt werden kann, mit welchem die Kommunikation zwischen dem mobilen Endgerät und dem ID-Token verschlüsselt werden kann. Somit kann beispielsweise die weitere Kommunikation zwischen dem IT-Token und dem mobilen Endgerät, der ID-Token mit dem Personalisierungsserver im Zuge des Aufbaus des zweiten Unterkanals kommuniziert, verschlüsselt werden. Beispielsweise wird die Kommunikation solange mit dem entsprechenden ephemeren symmetrischen kryptographischen Schlüssel verschlüsselt, bis der verschlüsselte Unterkanal zwischen dem ID-Token und dem Personalisierungsserver aufgebaut ist, der eine Ende-zu-Ende-Verschlüsselung zwischen dem ID-Token und dem Personalisierungsserver ermöglicht.

Nach Ausführungsformen umfasst das Aufbauen des ersten verschlüsselten Unterkanals ein Authentifizieren des Personalisierungsservers durch den ID-Token über das mobile Endgerät.

Ausführungsformen können den Vorteil haben, dass die Teilnehmer, welche den verschlüsselten Unterkanal aufbauen, sichergehen können, mit wem sie kommunizieren. Insbesondere kann somit der ID-Token sichergehen, mit wem er kommuniziert. Zum Authentifizieren des Personalisierungsservers durch den ID-Token kommt beispielsweise ein entsprechendes Authentisierungsverfahren zum Einsatz.

Nach Ausführungsformen umfasst das Authentifizieren des Personalisierungsservers durch den ID-Token:
- Empfangen eines zweiten Zertifikats des Personalisierungsservers, welches einen zweiten öffentlichen kryptographischen Schlüssel eines zweiten asymmetrischen kryptographischen Schlüsselpaars des Personalisierungsservers umfasst, über den verschlüsselten Kommunikationskanal,
- Verifizieren einer Signatur des empfangenen zweiten Zertifikats des Personalisierungsservers,
- Erzeugen eines dritten Zufallswerts durch den ID-Token,
- Senden des dritten Zufallswerts als Challenge an den Personalisierungsserver über den verschlüsselten Kommunikationskanal,
- Empfangen einer ersten Signatur der Challenge als Response von dem Personalisierungsserver über den verschlüsselten Kommunikationskanal, wobei die Challenge unter Verwendung eines zweiten privaten kryptographischen Schlüssels des Personalisierungsservers signiert ist,
- Verifizieren der empfangenen ersten Signatur unter Verwendung des zweiten öffentlichen kryptographischen Schlüssels des Personalisierungsservers und des gesendeten dritten Zufallswerts.

Nach Ausführungsformen wird ferner ein zweiter ephemerer öffentlicher kryptographischer Schlüssel des Personalisierungsservers, beispielsweise in komprimierter Form, durch den ID-Token über den verschlüsselten Kommunikationskanal empfangen.

Nach Ausführungsformen wird zum Erzeugen der Response eine erste Datenkombination signiert, welche die Challenge umfasst. Beispielsweise umfasst die erste Datenkombination neben dem als Challenge gesendeten dritten Zufallswert und den zweiten ephemeren öffentlichen kryptographischen Schlüssel des Personalisierungsservers, beispielsweise in komprimierter Form.

Ausführungsformen können den Vorteil haben, dass der Personalisierungsserver durch den ID-Token in kryptographisch gesicherter Weise authentifiziert werden kann. Hierzu empfängt der ID-Token beispielsweise ein Zertifikat des Personalisierungsservers, welches einen öffentlichen kryptographischen Schlüssel des Personalisierungsservers zum Authentifizieren bereitstellt. Der ID-Token verifiziert die Signatur des empfangenen Zertifikats. Beispielsweise wird das entsprechende Zertifikat als Teil einer Zertifikatskette empfangen, für deren Prüfung entsprechende Signaturprüfschlüssel, insbesondere Wurzelsignaturprüfschlüssel, auf dem ID-Token hinterlegt sind. Somit kann der ID-Token die Authentizität des bereitgestellten Zertifikats anhand der Zertifikatskette, beispielsweise einer PKI, verifizieren. Ferner empfängt der ID-Token beispielsweise einen ephemeren öffentlichen kryptographischen Schlüssel des Personalisierungsservers. Beispielsweise empfängt der ID-Token den ephemeren öffentlichen kryptographischen Schlüssel des Personalisierungsservers in komprimierter Form. Im Gegenzug zum Empfang des Zertifikats des Personalisierungsservers erzeugt der ID-Token einen Zufallswert, welchen er als Challenge über den verschlüsselten Kommunikationskanal an den Personalisierungsserver sendet. Der Personalisierungsserver erstellt unter Verwendung eines privaten kryptographischen Schlüssels, welcher mit dem öffentlichen kryptographischen Schlüssel des zuvor bereitgestellten Zertifikats ein asymmetrisches Schlüsselpaar bildet, eine Signatur der Challenge als Response auf die Challenge. Beispielsweise wird zum Erzeugen der Response eine Datenkombination signiert, welche den Zufallswert als Challenge und den ephemeren öffentlichen kryptographischen Schlüssel des Personalisierungsservers, beispielsweise in komprimierter Form, umfasst. Der ID-Token empfängt die entsprechende Signatur über den verschlüsselten Kommunikationskanal und prüft mit dem zuvor empfangenen öffentlichen kryptographischen Schlüssel des Personalisierungsservers als Signaturprüfschlüssel. Hierzu verwendet der ID-Token beispielsweise ferner den zuvor als Challenge gesendeten Zufallswert sowie den zuvor empfangenen ephemeren öffentlichen kryptographischen Schlüssel des Personalisierungsservers.

Nach Ausführungsformen handelt es sich bei dem ersten und dem zweiten Zertifikat des Personalisierungsservers um unterschiedliche Zertifikate mit unterschiedlichen öffentlichen kryptographischen Schlüsseln des Personalisierungsservers. Somit handelt es sich in diesem Fall bei dem ersten und dem zweiten öffentlichen kryptographischen Schlüssel des Personalisierungsservers beispielsweise um unterschiedliche öffentliche kryptographische Schlüssel unterschiedlicher asymmetrischer kryptographischen Schlüsselpaare.

Nach Ausführungsformen handelt es sich bei dem ersten und dem zweiten Zertifikat des Personalisierungsservers um dasselbe Zertifikat mit demselben öffentlichen kryptographischen Schlüsseln des Personalisierungsservers. Somit handelt es sich in diesem Fall bei dem ersten und dem zweiten öffentlichen kryptographischen Schlüssel des Personalisierungsservers beispielsweise um denselben öffentlichen kryptographischen Schlüssel desselben asymmetrischen kryptographischen Schlüsselpaars.

Nach Ausführungsformen handelt es sich bei dem zweiten Zertifikat des Personalisierungsservers um ein Lesezertifikats, welches eine Leseberechtigung des Personalisierungsservers zum Lesen der aus dem ersten ID-Token auszulesenden ersten Attribute nachweist.

Ausführungsformen können den Vorteil haben, dass der Personalisierungsserver mittels des entsprechenden Zertifikats eine Leseberechtigung zum Lesen der auszulesenden Attribute aus dem ID-Token nachweisen kann.

Nach Ausführungsformen wird das zweite Zertifikat des Personalisierungsservers als Teil einer Zertifikatskette empfangen, wobei das Verifizieren der Signatur des empfangenen Zertifikats ein Prüfen einer Signaturkette der Zertifikate der Zertifikatskette umfasst. Nach Ausführungsformen beginnt die Zertifikatskette mit einem Ausgangszertifikat, welches von einer Wurzelinstanz signiert ist, deren Signatur mit einem Wurzelsignaturprüfschlüssel verifizierbar ist, welcher in dem ID-Token gespeichert ist. Nach Ausführungsformen endet die Zertifikatskette mit dem Zertifikat des Personalisierungsservers.

Nach Ausführungsformen umfasst die Kombination ferner einen Identifikator des ID-Tokens, wobei der Identifikator des ID-Tokens ferner zum Verifizieren der empfangenen Signatur verwendet wird.

Nach Ausführungsformen wird der Identifikator des ID-Tokens beispielsweise unter Verwendung des ephemeren öffentlichen kryptographischen Schlüssels des ID-Tokens erzeugt. Beispielsweise handelt es sich bei dem Identifikator des ID-Tokens um den komprimierten ersten ephemeren öffentlichen kryptographischen Schlüssel des ID-Tokens.

Ausführungsformen können den Vorteil haben, dass anhand des Identifikators der ID-Token identifiziert werden kann. Beispielsweise kann als Identifikator des ID-Tokens ein ephemerer öffentlicher kryptographischer Schlüssel des ID-Tokens verwendet werden, welcher beispielsweise zuvor im Zuge des Authentifizierens des Nutzers gegenüber dem ID-Token erzeugt wurde. Der entsprechende ephemere öffentliche kryptographische Schlüssel des ID-Tokens kann beispielsweise von dem mobilen Endgerät an den Personalisierungsserver weitergeleitet werden. Somit erhält der Personalisierungsserver beispielsweise Zugriff auf den entsprechenden ephemeren öffentlichen kryptographischen Schlüssel und kann anhand dieses als Identifikator sicherstellen, dass der ID-Token, gegenüber welchem er sich authentisiert, derselbe ID-Token ist, gegenüber dem sich zuvor der Nutzer des mobilen Endgeräts authentisiert hat.

Nach Ausführungsformen umfasst das Aufbauen des ersten verschlüsselten Unterkanals ein Authentisieren des ID-Tokens gegenüber dem Personalisierungsserver über das mobile Endgerät.

Ausführungsformen können den Vorteil haben, dass eine gegenseitige Authentisierung zwischen ID-Token und Personalisierungsserver im Zuge des Aufbaus des verschlüsselten Unterkanals stattfindet.

Nach Ausführungsformen umfasst das Authentisieren des ID-Tokens gegenüber Personalisierungsserver:
- Senden des öffentlichen kryptographischen Schlüssels des ID-Tokens von dem ID-Token über den verschlüsselten Kommunikationskanal an den Personalisierungsserver,
- Empfangenen des zweiten ephemeren öffentlichen kryptographischen Schlüssels des Personalisierungsservers durch den ID-Token von dem Personalisierungsserver über den verschlüsselten Kommunikationskanal,
- Erzeugen eines mit dem Personalisierungsserver geteilten zweiten Geheimnisses durch den ID-Token unter Verwendung des privaten kryptographischen Schlüssels des ID-Tokens und des zweiten ephemeren öffentlichen kryptographischen Schlüssels des Personalisierungsservers,
- Erzeugen eines vierten Zufallswerts durch den ID-Token,
- Erzeugen eines zweiten gemeinsamen Authentisierungsschlüssels zum Authentisieren von über den ersten verschlüsselten Unterkanal gesendeten Daten durch den ID-Token, wobei der zweite gemeinsame Authentisierungsschlüssel unter Verwendung des geteilten zweiten Geheimnisses und des vierten Zufallswerts erzeugt wird,
- Erzeugen eines dritten Authentisierungstoken durch den ID-Token unter Verwendung des zweiten Authentisierungsschlüssels und des zweiten ephemeren öffentlichen kryptographischen Schlüssels des Personalisierungsservers zum Authentisieren des ID-Tokens gegenüber dem Personalisierungsserver,
- Senden des vierten Zufallswerts zusammen mit dem dritten Authentisierungstoken zum Authentifizieren des ID-Tokens durch den ID-Token über den verschlüsselten Kommunikationskanal an den Personalisierungsserver.

Ausführungsformen können den Vorteil haben, dass sich der ID-Token in kryptographisch gesicherter Weise gegenüber dem Personalisierungsserver authentisieren kann. Hierzu sendet der ID-Token einen öffentlichen kryptographischen Schlüssel an den Personalisierungsserver. Dies erfolgt über den verschlüsselten Kommunikationskanal. Im Gegenzug empfängt der ID-Token einen ephemeren öffentlichen kryptographischen Schlüssel des Personalisierungsservers über den verschlüsselten Kommunikationskanal. Der ID-Token berechnet ein mit dem Personalisierungsserver geteiltes Geheimnis unter Verwendung des privaten kryptographischen Schlüssels des ID-Tokens und des empfangen ephemeren öffentlichen kryptographischen Schlüssels des Personalisierungsservers. Der Personalisierungsserver kann dasselbe geteilte Geheimnis unter Verwendung des öffentlichen kryptographischen Schlüssels des ID-Tokens und des ephemeren privaten kryptographischen Schlüssels des Personalisierungsservers berechnen. Der ID-Token erzeugt einen Zufallswert, welchen er zum Berechnen eines gemeinsamen Authentisierungsschlüssels verwendet. Der Authentisierungsschlüssel dient zum Authentisieren von Daten, welche über den verschlüsselten Unterkanal gesendet werden. Den entsprechenden gemeinsamen Authentisierungsschlüssel erzeugt der ID-Token unter Verwendung des Zufallswerts und des geteilten Geheimnisses. Ferner erzeugt der ID-Token einen Authentisierungstoken unter Verwendung des entsprechenden Authentisierungsschlüssels und des ephemeren Schlüssels des Personalisierungsservers. Den so erzeugten Authentisierungstoken sendet der ID-Token zusammen mit dem Zufallswert an den Personalisierungsserver im Kommunikationskanal. Der Personalisierungsserver wird durch den Empfang des Zufallswerts dazu in die Lage versetzt, ebenfalls den Authentisierungsschlüssel unter Verwendung des geteilten Geheimnisses zu berechnen. Mit diesem gemeinsamen Authentisierungsschlüssel und dem ephemeren öffentlichen kryptographischen Schlüssel des Personalisierungsservers kann der Personalisierungsserver den empfangenen Authentisierungstoken verifizieren. Ist die Verifikation erfolgreich, so ist auch der ID-Token erfolgreich gegenüber dem Personalisierungsserver authentisiert und eine erfolgreiche gegenseitige Authentisierung von ID-Token und Personalisierungsserver verwirklicht. Ferner kann der so berechnete gemeinsame Authentisierungsschlüssel zum Authentisieren von Daten verwendet werden, welche über den verschlüsselten Unterkanal zwischen ID-Token und Personalisierungsserver ausgetauscht werden.

Nach Ausführungsformen wird der im Zuge des Authentifizierens des Personalisierungsservers, beispielsweise in komprimierter Form, empfangene ephemere öffentliche kryptographische Schlüssel des Personalisierungsservers mit dem im Zuge des Authentisierens des ID-Tokens empfangenen ephemeren öffentlichen kryptographischen Schlüssel des Personalisierungsservers verglichen, wobei eine Übereinstimmung beider ephemerer öffentlicher kryptographischer Schlüssel des Personalisierungsservers eine Voraussetzung für das Erzeugen des geteilten zweiten Geheimnisses ist. Beispielsweise wird der im Zuge des Authentisierens des ID-Tokens empfangene ephemere öffentliche kryptographische Schlüssel des Personalisierungsservers zum Zwecke des Vergleichs komprimiert.

Ausführungsformen können den Vorteil haben, dass eine Bindung zwischen dem Personalisierungsserver und dem Authentisierungsserver, mit dem im Zuge des Authentisierens des ID-Tokens kommuniziert wird, hergestellt werden kann.

Nach Ausführungsformen wird zum Erzeugen des geteilten zweiten Geheimnisses ferner ein Anwendungsbereichsidentifikator eines Anwendungsbereichs des ID-Tokens verwendet, wobei der Anwendungsbereichsidentifikator zusammen mit dem öffentlichen kryptographischen Schlüssel des ID-Tokens von dem ID-Token an den Personalisierungsserver gesendet wird.

Ausführungsformen können den Vorteil haben, dass der ID-Token einem bestimmten Anwendungsbereich zugeordnet werden kann.

Nach Ausführungsformen handelt es sich bei dem zweiten Authentisierungsschlüssel um einen kryptographischen Schlüssel zum Erzeugen eines Message Authentication Codes, wobei es sich bei dem zweiten Authentisierungstoken um einen unter Verwendung des zweiten Authentisierungsschlüssels erzeugten zweiten MAC des zweiten ephemeren öffentlichen kryptographischen Schlüssels des Personalisierungsservers handelt.

Nach Ausführungsformen erzeugt der ID-Token ferner den zweiten kanalspezifischen ephemeren symmetrischen kryptographischen Sitzungsschlüssel unter Verwendung des geteilten zweiten Geheimnisses und vierten Zufallswerts.

Ausführungsformen können den Vorteil haben, dass in kryptographisch gesicherter Weise ein kanalspezifischer ephemerer symmetrischer kryptographischer Sitzungsschlüssel für den Unterkanal bereitgestellt werden kann, welcher nur dem ID-Token und dem Personalisierungsserver bekannt ist. Mithin kann eine Ende-zu-Ende-Verschlüsselung über den verschlüsselten Unterkanal zwischen dem ID-Token und dem Personalisierungsserver ermöglicht werden.

Nach Ausführungsformen umfasst das Aufbauen des zweiten verschlüsselten Unterkanals ein Authentifizieren des Nutzers durch das zweite Sicherheitselement. Das Aufbauen des zweiten verschlüsselten Unterkanals umfasst ferner ein Ausführen eines Challenge-Response-Verfahrens zwischen dem zweiten Sicherheitselement und dem ersten Sicherheitselement. Ein erfolgreiches Ausführen des Challenge-Response-Verfahrens bestätigt eine erfolgreiche Authentifizierung des Nutzers durch das zweite Sicherheitselement.

Ausführungsformen können den Vorteil haben, dass nach dem Auslesen der Attribute aus dem ID-Token vor dem Personalisieren des ersten Sicherheitselements, d.h. im Zuge des Aufbaus des zweiten Kanals, zunächst eine Authentifizierung des Nutzers durch das mobile Endgerät erfolgt. Diese Authentifizierung wird dem zu personalisierenden ersten Sicherheitselement durch ein weiteres Sicherheitselement des mobilen Endgeräts, welches dem Betriebssystem des mobilen Endgeräts zugeordnet ist und für die Authentifizierung des registrierten Nutzers des mobilen Endgeräts unter Verwendung des Authentifizierungssensors des mobilen Endgeräts konfiguriert ist, ausgeführt. Das entsprechende weitere Sicherheitselement authentifiziert den Nutzer und bestätigt auf einer erfolgreichen Authentifizierung hin den personalisierenden Sicherheitselement die erfolgreiche Authentifizierung. Somit kann nicht nur sichergestellt werden, dass die Personalisierung auf demselben mobilen Endgerät erfolgt, welches bereits zum Auslesen der Attribute aus dem ID-Token verwendet wurde, sondern auch dass die Personalisierung unter Zustimmung des registrierten Nutzers des mobilen Endgeräts erfolgt.

Nach Ausführungsformen umfasst das Challenge-Response-Verfahren, auf eine Authentifizierungsanfrage des ID-Anwendungsprogramms hin, ein Authentifizieren des Nutzers durch das Betriebssystem des mobilen Endgeräts unter Verwendung des Authentifizierungssensors und des zweiten Sicherheitselement, ein Erzeugen einer Response durch das zweite Sicherheitselement, ein Senden der Response durch das zweite Sicherheitselement an das erste Sicherheitselement und ein Validieren der Response durch das erste Sicherheitselement bzw. das Sicherheitsapplet, wobei das Erzeugen der Response ein Verschlüsseln der Challenge umfasst und wobei das Validieren der Response ein Entschlüsseln der Response umfasst.

Das mobile Endgerät kann beispielsweise als Authentisierungstoken, Autorisierungstoken und/oder als Identitätsnachweis, d.h. ID-Token, dienen, etwa in elektronischen Geschäftsprozessen. Zu diesem Zweck kann der Nutzer durch das mobile Endgerät sicher authentifiziert werden. Nach Ausführungsformen kann die lokale Authentifizierung des Nutzers durch das Endgerät als Grundlage für eine weitere Authentifizierung des Nutzers unter Verwendung von, beispielsweise auf dem mobilen Endgerät gespeicherten, Identitätsattributen für eine weiteren Authentifizierung durch einen ID-Provider-Dienst dienen.

Das mobile Endgerät ist für eine sichere Nutzerauthentifizierung unter Verwendung des Authentifizierungssensors und des Betriebssystems bzw. des zweiten Sicherheitselements konfiguriert. Die Authentifizierung kann beispielsweise auf einem Erfassen und Auswerten biometrischer Merkmale des Nutzers beruhen.

Ausführungsformen können den Vorteil haben, dass Hersteller von Anwendungsprogrammen bzw. die entsprechenden Anwendungsprogramme die Authentifizierungsfunktionalität des mobilen Endgeräts zur Nutzerauthentifizierung zurückgreifen können. Die Authentifizierungsfunktionalität des Endgeräts unter Verwendung des Authentifizierungssensors und des ersten Sicherheitselements implementieren eine sichere Bindung des Nutzers mit dem Endgerät. Es fehlt aber an einer sicheren Bindung des Endgeräts an das entsprechende Anwendungsprogramm. Eine solche sichere Bindung kann durch Verwendung des ersten Sicherheitselements mit einem Applet des Anwendungsprogramms implementiert werden. Dabei stellt das zweite Sicherheitselement, bei welchem es sich beispielsweise um ein hardwarebasiertes Sicherheitselement des Geräteherstellers handelt, kryptographische Mittel, wie etwa kryptographisches Schlüsselmaterial und Protokolle, zur Verfügung, welche für eine sichere Zurverfügungstellung der Authentifizierungsergebnisse des Nutzers des mobilen Endgeräts für ein auf dem mobilen Endgerät installiertes Anwendungsprogramm genutzt werden können. Mithin stellt das zweite Sicherheitselement die kryptographische Sicherheit des Betriebssystems sicher bzw. stellt dem Betriebssystem kryptographische Sicherungsfunktionalität zur Verfügung. Nach Ausführungsformen kann es sich bei dem zweiten Sicherheitselement beispielsweise auch um ein softwarebasiertes und/oder firmwarebasiertes Sicherheitselement des Geräteherstellers handeln. Das erste Sicherheitselement, welches unter Verwendung des Challenge-Response-Protokolls sicher mit dem zweiten Sicherheitselement kommuniziert und das Applet des Anwendungsprogramms umfasst, kann eine sichere Verbindung mit dem zweiten Sicherheitselement gewährleisten. Das erste Sicherheitselement stellt kryptographische Mittel, wie etwa kryptographisches Schlüsselmaterial und Protokolle, zur Verfügung, welche dem Anwendungsprogramm zugeordnet sind und unter dessen Verfügungshoheit und/oder der Verfügungshoheit des Herstellers des Anwendungsprogramms stehen. Mithin stellt das erste Sicherheitselement die kryptographische Sicherheit des Anwendungsprogramms sicher bzw. stellt dem Anwendungsprogramm kryptographische Sicherungsfunktionalität zur Verfügung. Bei dem zweiten Sicherheitselement handelt es sich beispielsweise um ein hardware-, software- und/oder firmwarebasiertes Sicherheitselement. Beispielsweise umfasst das erste Sicherheitselement eine eSIM oder eine eUICC.

Ausführungsformen beschreiben ein Verfahren zur sicheren Authentisierung eines Nutzers an einem mobilen Endgerät sowie der sicheren Authentifizierung des Nutzers durch ein weiteres Sicherheitselement auf dem entsprechenden mobilen Endgerät mit einer geräteherstellerunabhängigen Sicherheitsapplikation bzw. Sicherheitsapplet.

Insbesondere wird eine sichere Verwendung von Merkmalen zur Nutzerauthentifizierung, wie etwa biometrische Merkmale, zur Authentifizierung gegenüber einem geräteherstellerunabhängigen Anwendungsprogramm bzw. Sicherheitsapplet des Anwendungsprogramms ermöglicht.

Nach Ausführungsformen wird zur Authentifizierung des Nutzers gegenüber dem Anwendungsprogramm ein Challenge-Response Verfahren verwendet, welches zwischen dem betriebssystemzugeordneten und damit gerätespezifischen zweiten Sicherheitselement und dem geräteunabhängigen ersten Sicherheitselement ausgeführt wird, welches nicht dem Betriebssystem zugeordnet ist. Bei dem ersten Sicherheitselement bzw. dem Sicherheitsapplet des Anwendungsprogramms handelt es sich beispielsweise um ein anwendungsspezifisches Sicherheitselement bzw. Sicherheitsapplet.

Zum Implementieren der kryptographisch gesicherten Verbindung zwischen dem ersten und dem zweiten Sicherheitselement wird beispielsweise in das geräteherstellerabhängige zweite Sicherheitselement kryptographisches Schlüsselmaterial eingebracht und/oder in diesem erzeugt. Dies geschieht beispielsweise im Zuge einer Initialisierung des mobilen Endgeräts. Ferner wird in das geräteherstellerunabhängige Sicherheitsapplet des ersten Sicherheitselements kryptographisches Schlüsselmaterial eingebracht und/oder in diesem erzeugt. Dies geschieht beispielsweise im Zuge einer Initialisierung des Sicherheitsapplets bzw. des ersten Sicherheitselements. Das kryptographisch initialisierte zweite Sicherheitselement kann einen kryptographischen Schlüssel des zweiten Sicherheitselements in das Sicherheitsapplet des ersten Sicherheitselements einbringen bzw. diesem zur Verfügung stellen und/oder das Sicherheitsapplet des ersten Sicherheitselements kann einen kryptographischen Schlüssel des Sicherheitsapplets in das zweite Sicherheitselement einbringen bzw. diesem zur Verfügung stellen. Bei dem kryptographischen Schlüssel des zweiten Sicherheitselements handelt es sich beispielsweise um einen öffentlichen kryptographischen Schlüssel eines dem Anwendungsprogramm zugeordneten asymmetrischen kryptographischen Schlüsselpaars des zweiten Sicherheitselements. Bei dem kryptographischen Schlüssel des Sicherheitsapplets handelt es sich beispielsweise um einen öffentlichen kryptographischen Schlüssel eines dem Sicherheitsapplet zugeordneten asymmetrischen kryptographischen Schlüsselpaars. Nach Ausführungsformen wird ein kryptographisches Geheimnis, beispielsweise ein kryptographischer Schlüssel, insbesondere ein symmetrischer kryptographischer Schlüssel zum Ausführen des Challenge-Response-Verfahren, erzeugt und übertragen. Beispielsweise erzeugt das zweite Sicherheitselement das kryptographische Geheimnis und überträgt dieses unter Verwendung des von dem Sicherheitsapplet bereitgestellten öffentlichen kryptographischen Schlüssel in kryptographisch abgesicherter Weise an das Sicherheitsapplet. Beispielsweise erzeugt das Sicherheitsapplet das kryptographische Geheimnis und überträgt dieses unter Verwendung des von dem zweiten Sicherheitselement bereitgestellten öffentlichen kryptographischen Schlüssel in kryptographisch abgesicherter Weise an das zweite Sicherheitselement.

Ausführungsformen können den Vorteil haben, dass ein sicheres Verfahren zum Authentifizieren eines Nutzers des mobilen Endgeräts gegenüber dem Anwendungsprogram bereitgestellt wird. Das Verfahren ermöglicht ein Authentifizieren des Nutzers des mobilen Endgeräts unter Verwendung zweier Sicherheitselemente gegenüber dem Anwendungsprogramm bzw. dem Sicherheitsapplet, welches dem Anwendungsprogramm zugeordnet ist. Die Verwendung zweier unabhängiger Sicherheitselemente erlaubt es neben einem Sicherheitselement, d.h. dem zweiten Sicherheitselement, welches dem Betriebssystem zugeordnet und beispielsweise unter Kontrolle des Herstellers des mobilen Endgeräts steht, zusätzlich ein Sicherheitselement zu verwenden, d.h. das erste Sicherheitselement, welches unabhängig von dem zweiten Sicherheitselement ist und beispielsweise nicht unter der Kontrolle des Geräteherstellers steht. Nach Ausführungsformen steht das dem Anwendungsprogramm zugeordnete Sicherheitsapplet des ersten Sicherheitselement beispielsweise unter der Kontrolle eines Herstellers des entsprechenden Anwendungsprogramms. Damit ermöglicht das Verfahren auch eine Authentisierung Nutzers gegen über dem Anwendungsprogramm unter Verwendung des mobilen Endgeräts.

Ausführungsformen können den Vorteil haben, dass eine gleichzeitige Bindung des Nutzers an zwei voneinander unabhängige Sicherheitselemente mit einer gegenseitigen sicheren Verschränkung der beiden Sicherheitselemente auf einem mobilen Endgerät implementiert wird. Die Bindung des Nutzers wird beispielsweise dadurch implementiert, dass das zweite Sicherheitselement Zugriff auf Referenzwerte für die ein oder mehreren Authentifizierungsfaktoren des Nutzers besitzt. Beispielsweise sind die entsprechenden Referenzwerte in einem dem zweiten Sicherheitselement zugeordneten Speicherbereich des mobilen Endgeräts gespeichert. Beispielsweise umfasst das Sicherheitselement den entsprechenden Speicherbereich. Beispielsweise sind die Referenzwerte außerhalb des zweiten Sicherheitselements gespeichert. Nach Ausführungsformen sind die Referenzwerte in einer kryptographisch gesicherten Form gespeichert, beispielsweise in verschlüsselter oder gehashter Form. Nach Ausführungsformen ist das zweite Sicherheitselement unter Verwendung der entsprechenden Referenzwerte in der Lage den Nutzer anhand von mit dem Authentifizierungssensor erfassten Authentifizierungsfaktoren bzw. Authentifizierungsdaten zu authentifizieren. Dadurch kann eine Bindung des Nutzers an das zweite Sicherheitselement implementiert werden. Das Ergebnis der Authentifizierung kann mittels des Challenge-Response-Verfahrens in kryptographisch gesicherter Weise an das erste Sicherheitselement weitergeleitete werden, wodurch eine Bindung des Nutzers an das erste Sicherheitselement implementiert werden kann. Im Ergebnis kann der Nutzer mithin gleichzeitig an beide Sicherheitselemente gebunden werden. Mittels des Challenge-Response-Verfahrens und den diesem zugrundeliegenden kryptographischen Mitteln der Sicherheitselemente kann somit eine gegenseitige sichere Verschränkung der beiden Sicherheitselemente auf dem mobilen Endgerät implementiert werden. Beispielsweise umfassen die kryptographischen Mittel einen symmetrischen Schlüssel, welcher in dem ersten Sicherheitselement und in dem zweiten Sicherheitselement gespeichert ist und eine kryptographische Verschränkung der beiden Sicherheitselement bereitstellt.

Eine Authentifizierung bezeichnet eine Verifizierung einer behaupteten Eigenschaft einer Entität, wie etwa einem Nutzer des mobilen Endgeräts. Im Zuge einer Authentifizierung wird beispielsweise ein entsprechender von dem Nutzer erbrachter Nachweis verifiziert. Die Entität führt durch ihren Beitrag zur Authentifizierung, d.h. durch Bereitstellen entsprechender Nachweise wie Authentifizierungsdaten bzw. Authentifizierungsfaktoren zur Prüfung, eine Authentisierung durch.

Eine Authentifizierung des Nutzers bezüglich der behaupteten Eigenschaft der Authentizität, beispielsweise der Authentizität seiner Person bzw. Identität, erlaubt es dem authentifizierten Nutzer weitere Aktionen durchzuführen. Beispielsweise werden dem Nutzer Zugangsrechte eingeräumt. Ein erfolgreich authentifizierter Nutzer gilt als authentisch. Eine abschließende Bestätigung einer Authentifizierung kann eine Autorisierung umfassen.

Der Nutzer kann sich auf verschiedene Weisen authentisieren. Er kann beispielsweise einen Nachweis einer Kenntnis, wie einer PIN oder einem Passwort, vorlegen, einen Nachweis eines Besitzes, wie etwa eines kryptographischen Schlüssels, eines Zertifikats oder eines elektronischen Geräts, und/oder einen Nachweis von Eigenschaften seiner Person selbst, wie biometrische Merkmale oder Verhaltensmerkmale. Beispielsweise wird der entsprechende Nachweis durch einen Authentifizierungssensor des mobilen Endgeräts in Form von Authentifizierungsdaten ein oder mehrerer Authentifizierungsfaktoren des Nutzers erfasst und von einem Sicherheitselement des mobilen Endgeräts mit einem oder mehreren hinterlegten Referenzwerten verglichen. Bei dem die erfassten Authentifizierungsdaten auswertenden Sicherheitselement handelt es sich beispielsweise um ein Sicherheitselement des Betriebssystems des mobilen Endgeräts. Im Falle einer ausreichenden Übereinstimmung zwischen den erfassten Authentifizierungsdaten und den hinterlegten Referenzwerten, bestätigt das Sicherheitselement eine erfolgreiche Authentifizierung des Nutzers. Beispielsweise umfasst eine Bestätigung der erfolgreichen Authentifizierung des Nutzers ein Ausführen eines Challenge-Response-Verfahrens durch das bestätigende Sicherheitselement. Beispielsweise bestätigt das bestätigende Sicherheitselement auf eine erfolgreiche Authentifizierung des Nutzers hin diese erfolgreiche Authentifizierung gegenüber einem anderen Sicherheitselement des mobilen Endgeräts, wie etwa dem Sicherheitselement mit dem Sicherheitsapplet des Anwendungsprogramms mittels einer korrekten Response auf eine Challenge des entsprechenden anderen Sicherheitselements.

Unter einem mobilen Endgerät wird ein mobiles tragbares Kommunikationsgerät, wie beispielsweise ein Smartphone, ein Tablet oder eine Smartwatch verstanden.

Unter einem Authentifizierungssensor wird ein Sensor zum Erfassen von Authentifizierungsdaten ein oder mehrerer Authentifizierungsfaktoren des Nutzers des mobilen Endgeräts verstanden. Die Authentifizierungsdaten können beispielsweise biometrische Daten des Nutzers umfassen. Der Authentifizierungssensor kann zum Erfassen biometrischer Daten des Nutzers konfiguriert sein. Biometrische Daten können beispielsweise umfassen: Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster. Der Authentifizierungssensor kann beispielsweise eine Kamera des mobilen Endgeräts umfassen. Die Authentifizierungsdaten können beispielsweise ein Wissen des Nutzers umfassen, wie eine PIN oder Passwort. Der Authentifizierungssensor kann eine Eingabevorrichtung zur Eingabe von Authentifizierungsdaten, wie etwa eine PIN oder ein Passwort umfassen. Die Eingabevorrichtung kann beispielsweise eine Tastatur und/oder einen Touchscreen umfassen.

Ein Challenge-Response-Verfahren stellt ein sicheres Authentifizierungsverfahren einer ersten Instanz gegenüber einer zweiten Instanz auf Basis von Wissen dar. Beispielsweise wird ein sich authentisierende Sicherheitselement eines mobilen Endgeräts, etwa ein Sicherheitselement des Betriebssystems des mobilen Endgeräts, durch ein anderes authentifizierende Sicherheitselement des mobilen Endgeräts unter Verwendung eines Challenge-Response-Verfahrens authentifiziert. Gleichzeitig stellt die Response eine Bestätigung einer erfolgreichen Nutzerauthentifizierung dar, falls die Response nur unter der Voraussetzung einer erfolgreichen Nutzerauthentifizierung durch das sich authentisierende Sicherheitselement erzeugt wird. Somit weiß das authentifizierende Sicherheitselement, im Falle eines erfolgreichen Challenge-Response-Verfahrens nicht nur, dass die Nutzerauthentifizierung bestätigt wurde, sondern dass diese durch das sich authentisierende Sicherheitselement bestätigt wurde und somit valide ist.

Im Zuge eines Challenge-Response-Verfahren stellt eine erste Instanz einer zweiten Instanz eine Aufgabe ("Challenge"), für welche die zweite Instanz eine korrekte Antwort ("Response") liefern muss.

Beispielsweise erzeugt die erste Instanz eine Zufallszahl ("Nonce") und sendet diese an die zweite Instanz. Die zweite Instanz verwendet beispielsweise ein gemeinsames Geheimnis für eine kryptographische Transformation des Nonce und sendet das Resultat als Response zum Zwecke einer Authentifizierung der zweiten Instanz an die erste Instanz. Beispielsweise wird das Nonce mit dem gemeinsamen Geheimnis kombiniert und eine kryptographische Hashfunktion oder eine Verschlüsselung auf diese Kombination angewendet. Alternativer Weise kann das gemeinsame Geheimnis, etwa ein symmetrischer kryptographischer Schlüssel, zum Verschlüsseln des Nonce verwendet werden. Die erste Instanz, welche sowohl das Nonce als auch das gemeinsame Geheimnis kennt kann beispielsweise dieselbe Berechnung wie die zweite Instanz ausführen und/oder eine inverse Berechnung ausführen, z.B. das verschlüsselte Nonce unter Verwendung des gemeinsamen Geheimnisses wieder entschlüsseln. Stimmt das Ergebnis der Berechnung durch die erste Instanz mit dem Ergebnis der Berechnung der zweiten Instanz oder mit der Challenge überein, ist das Challenge-Response-Verfahren erfolgreich und die zweite Instanz erfolgreich authentifiziert.

Ferner kann ein Challenge-Response-Verfahren auch auf einem asymmetrischen Kryptosystem beruhen und dem Nachweis eines Besitzes eines privaten und damit geheimen kryptographischen Schlüssels durch die zweite Instanz gegenüber der ersten Instanz dienen. Dabei kennt nur die zweite Instanz den entsprechenden privaten kryptographischen Schlüssel, welchen sie für eine kryptographische Transformation der Challenge, e.g. eines Nonce, verwendet. Bei der entsprechenden kryptographischen Transformation kann es sich beispielsweise um ein digitales Signieren handeln. Die erste Instanz kann unter Verwendung eines dem privaten kryptographischen Schlüssel zugehörigen öffentlichen kryptographischen Schlüssels anhand der Response prüfen, ob die zweite Instanz tatsächlich über Kenntnis des privaten kryptographischen Schlüssels verfügt, ohne dass die erste Instanz im Zuge der Prüfung selbst Kenntnis von dem privaten kryptographischen Schlüssel erlangt.

Nach Ausführungsformen erfolgt das Verschlüsseln und Entschlüsseln unter Verwendung eines symmetrischen kryptographischen Schlüssels erfolgt. Nach Ausführungsformen erfolgt das Verschlüsseln unter Verwendung eines privaten kryptographischen Schlüssels eines asymmetrischen kryptographischen Schlüsselpaars des ersten Sicherheitselements und das Entschlüsseln erfolgt unter Verwendung eines öffentlichen kryptographischen Schlüssels des asymmetrischen kryptographischen Schlüsselpaars des ersten Sicherheitselements.

Nach Ausführungsformen umfasst das Aufbauen des zweiten verschlüsselten Unterkanals ferner ein Authentifizieren des Personalisierungsservers durch das Sicherheitsapplet des ersten Sicherheitselements.

Ausführungsformen können den Vorteil haben, dass eine Voraussetzung für den Aufbau des zweiten verschlüsselten Unterkanals ein erfolgreiches Authentifizieren des Personalisierungsservers durch das Sicherheitselement ist. Somit kann das Sicherheitselement nicht nur sicher sein, dass die Personalisierung durch denselben Personalisierungsserver erfolgt, die Attribute aus dem ID-Token ausgelesen hat, sondern dass der entsprechende auch zum Personalisieren des entsprechenden Sicherheitselements berechtigt ist.

Nach Ausführungsformen umfasst das Authentifizieren des Personalisierungsservers durch das Sicherheitsapplet des ersten Sicherheitselements:
- Empfangen eines dritten Zertifikats des Personalisierungsservers, welches einen dritten öffentlichen kryptographischen Schlüssel des Personalisierungsservers umfasst, durch das Sicherheitsapplet des ersten Sicherheitselements über den verschlüsselten Kommunikationskanal,
- Verifizieren einer Signatur des empfangenen dritten Zertifikats des Personalisierungsservers durch das Sicherheitsapplet des ersten Sicherheitselements,
- Erzeugen eines fünften Zufallswerts durch das Sicherheitsapplet des ersten Sicherheitselements,
- Senden des fünften Zufallswerts als Challenge durch das Sicherheitsapplet des ersten Sicherheitselements über den verschlüsselten Kommunikationskanal an den Personalisierungsserver,
- Empfangen einer zweiten Signatur der Challenge als Response von dem Personalisierungsserver, wobei die Challenge unter Verwendung eines dritten ephemeren privaten kryptographischen Schlüssels des Personalisierungsservers signiert ist,
- Verifizieren der empfangenen zweiten Signatur unter Verwendung des dritten öffentlichen kryptographischen Schlüssels des Personalisierungsservers und des gesendeten fünften Zufallswerts.

Nach Ausführungsformen wird ferner ein dritter ephemerer öffentlicher kryptographischer Schlüssel des Personalisierungsservers, beispielsweise in komprimierter Form, durch das Sicherheitsapplet über den verschlüsselten Kommunikationskanal empfangen.

Nach Ausführungsformen wird zum Erzeugen der Response eine zweite Datenkombination signiert, welche die Challenge umfasst. Beispielsweise umfasst die zweite Datenkombination neben dem als Challenge gesendeten fünften Zufallswert und den dritten ephemeren öffentlichen kryptographischen Schlüssel des Personalisierungsservers, beispielsweise in komprimierter Form.

Ausführungsformen können den Vorteil haben, dass das zu personalisierende erste Sicherheitselement zunächst ein Zertifikat des Personalisierungsservers über den verschlüsselten Kommunikationskanal empfängt. Das entsprechende Zertifikat kann von dem Sicherheitselement verifiziert werden. Beispielsweise wird das entsprechende Zertifikat als Teil einer Zertifikatskette bereitgestellt, welche das Sicherheitselement mit hinterlegten Wurzelsignaturprüfschlüsseln verifizieren kann. Somit kann der ID-Token die Authentizität des bereitgestellten Zertifikats anhand der Zertifikatskette, beispielsweise einer PKI, verifizieren. Ferner empfängt das Sicherheitselement einen ephemeren öffentlichen kryptographischen Schlüssel des Personalisierungsservers. Beispielsweise empfängt das Sicherheitselement den ephemeren öffentlichen kryptographischen Schlüssel des Personalisierungsservers in komprimierter Form. Im Gegenzug zum Empfang des Zertifikats des Personalisierungsservers erzeugt das Sicherheitselement einen Zufallswert und sendet den entsprechenden Zufallswert als Challenge an den Personalisierungsserver. In Antwort auf das Senden des Zufallswerts als Challenge empfängt das Sicherheitselement über den verschlüsselten Kommunikationskanal von dem Personalisierungsserver eine Signatur der Challenge als Response. Zum Erstellen der Signatur wird der private kryptographische Schlüssel des Personalisierungsservers verwendet, welcher mit dem öffentlichen kryptographischen Schlüssel des zuvor bereitgestellten Zertifikats ein asymmetrisches Schlüsselpaar bildet. Beispielsweise wird zum Erzeugen der Response eine Datenkombination signiert. Die entsprechende Datenkombination umfasst beispielsweise den zuvor als Challenge gesendeten Zufallswert sowie den ephemeren öffentlichen kryptographischen Schlüssel des Personalisierungsservers, beispielsweise in komprimierter Form. Das Sicherheitselement kann unter Verwendung des zuvor empfangenen öffentlichen kryptographischen Schlüssels des Personalisierungsservers als Signaturprüfschlüssel die entsprechende Signatur prüfen. Hierzu verwendet das Sicherheitselement beispielsweise ferner den ephemeren öffentlichen kryptographischen Schlüssel des Personalisierungsservers und den zuvor als Challenge gesendeten Zufallswert. Ist die Signaturprüfung erfolgreich, so gilt der Personalisierungsserver als erfolgreich authentifiziert.

Nach Ausführungsformen handelt es sich bei dem ersten, zweiten und/oder dritten Zertifikat des Personalisierungsservers um unterschiedliche Zertifikate mit unterschiedlichen öffentlichen kryptographischen Schlüsseln des Personalisierungsservers. Somit handelt es sich in diesem Fall bei dem ersten, zweiten und/oder dritten öffentlichen kryptographischen Schlüssel des Personalisierungsservers beispielsweise um unterschiedliche öffentliche kryptographische Schlüssel unterschiedlicher asymmetrischer kryptographischen Schlüsselpaare.

Nach Ausführungsformen handelt es sich bei dem ersten, zweiten und/oder dritten Zertifikat des Personalisierungsservers um dasselbe Zertifikat mit demselben öffentlichen kryptographischen Schlüsseln des Personalisierungsservers. Somit handelt es sich in diesem Fall bei dem ersten, zweiten und/oder dritten öffentlichen kryptographischen Schlüssel des Personalisierungsservers beispielsweise um denselben öffentlichen kryptographischen Schlüssel desselben asymmetrischen kryptographischen Schlüsselpaars.

Nach Ausführungsformen wird das Zertifikat als Teil einer Zertifikatskette empfangen wird, wobei das Verifizieren der Signatur des empfangenen Zertifikats ein Prüfen einer Signaturkette der Zertifikate der Zertifikatskette umfasst. Nach Ausführungsformen beginnt die Zertifikatskette mit einem Ausgangszertifikat, welches von einer Wurzelinstanz signiert ist, deren Signatur mit einem Wurzelsignaturprüfschlüssel verifizierbar ist, auf welchen das Sicherheitsapplet des ersten Sicherheitselements Zugriff besitzt. Nach Ausführungsformen endet die Zertifikatskette mit dem Zertifikat des Personalisierungsservers.

Nach Ausführungsformen umfasst das Aufbauen des zweiten verschlüsselten Unterkanals ferner ein Authentisieren des Sicherheitsapplets des ersten Sicherheitselements gegenüber dem Personalisierungsserver.

Ausführungsformen können den Vorteil haben, dass eine Authentisierung des Sicherheitselements gegenüber dem Personalisierungsserver ausgeführt wird. Somit kann beispielsweise eine gegenseitige Authentisierung zwischen dem zu personalisierenden Sicherheitsapplet und dem Personalisierungsserver implementiert werden.

Nach Ausführungsformen umfasst das Authentisieren des Sicherheitsapplets des ersten Sicherheitselements gegenüber dem Personalisierungsserver:
- Empfangenen des dritten ephemeren öffentlichen kryptographischen Schlüssels des Personalisierungsservers durch das Sicherheitsapplet des ersten Sicherheitselements von dem Personalisierungsserver über den verschlüsselten Kommunikationskanal,
- Erzeugen eines mit dem Personalisierungsserver geteilten dritten Geheimnisses durch das Sicherheitsapplet des ersten Sicherheitselements unter Verwendung des privaten kryptographischen Schlüssels des Sicherheitsapplets des ersten Sicherheitselements und des ephemeren öffentlichen kryptographischen Schlüssels des Personalisierungsservers,
- Erzeugen eines sechsten Zufallswerts durch das Sicherheitsapplet des ersten Sicherheitselements,
- Erzeugen eines dritten gemeinsamen Authentisierungsschlüssels zum Authentisieren von über den zweiten verschlüsselten Unterkanal gesendeten Daten, wobei der dritte gemeinsame Authentisierungsschlüssel unter Verwendung des geteilten dritten Geheimnisses und des sechsten Zufallswerts erzeugt wird,
- Erzeugen eines vierten Authentisierungstoken durch das Sicherheitsapplet des ersten Sicherheitselements unter Verwendung des dritten Authentisierungsschlüssels und des dritten ephemeren öffentlichen kryptographischen Schlüssels des Personalisierungsservers zum Authentisieren des Sicherheitsapplets des ersten Sicherheitselements gegenüber dem Personalisierungsserver,
- Senden des sechsten Zufallswerts zusammen mit dem vierten Authentisierungstoken zum Authentifizieren des Sicherheitsapplets des ersten Sicherheitselements durch das Sicherheitsapplet des ersten Sicherheitselements über den verschlüsselten Kommunikationskanal an den Personalisierungsserver.

Ausführungsformen können den Vorteil haben, dass sich das noch nicht personalisierte Sicherheitsapplet des ersten Sicherheitselements gegenüber dem Personalisierungsserver authentisieren kann. Hierzu verwendet das entsprechende zu personalisierende Sicherheitsapplet zunächst einen hinterlegten initialen kryptographischen Schlüssel des Sicherheitsapplets. Bei diesem initialen kryptographischen Schlüssel handelt es sich beispielsweise um einen initialen privaten kryptographischen Schlüssel. Der entsprechende initiale kryptographischen Schlüssel wird beispielsweise im Zuge einer Provisionierung des Sicherheitsapplets auf dem ersten Sicherheitselements hinterlegt. Beispielsweise wird ein initiales asymmetrisches Schlüsselpaar hinterlegt. Zum Authentisieren des Sicherheitsapplets empfängt das entsprechende Sicherheitsapplets zunächst beispielsweise einen zum Zwecke des Authentisierens erzeugten ephemeren öffentlichen kryptographischen Schlüssel von dem Personalisierungsserver. Den entsprechenden ephemeren öffentlichen kryptographischen Schlüssel erzeugt der Personalisierungsserver beispielsweise für die Authentifizierung des zu personalisierenden Sicherheitsapplets. Den ephemeren öffentlichen kryptographischen Schlüssel empfängt das Sicherheitsapplet auf dem ersten Sicherheitselement beispielsweise über den verschlüsselten Kommunikationskanal. Das Sicherheitsapplet berechnet ein geteiltes Geheimnis unter Verwendung des initialen privaten kryptographischen Schlüssels des Sicherheitsapplets und des empfangenen ephemeren öffentlichen kryptographischen Schlüssels des Personalisierungsservers. Das zu personalisierende Sicherheitsapplet erzeugt einen Zufallswert. Den entsprechenden Zufallswert verwendet das zu personalisierende Sicherheitsapplet zum Erzeugen eines gemeinsamen Authentisierungsschlüssels. Zum Erzeugen des entsprechenden gemeinsamen Authentisierungsschlüssels wird ferner das geteilte Geheimnis verwendet. Zudem erzeugt das Sicherheitsapplet einen Authentisierungstoken. Den entsprechenden Authentisierungstoken erzeugt das Sicherheitsapplet unter Verwendung des zuvor empfangenen ephemeren öffentlichen kryptographischen Schlüssels des Personalisierungsservers sowie des zuvor erzeugten gemeinsamen Authentisierungsschlüssels. Diesen Authentisierungstoken sendet das zu personalisierende Sicherheitsapplet zusammen mit dem Zufallswert über den verschlüsselten Kommunikationskanal an den Personalisierungsserver. Der Personalisierungsserver kann zunächst ebenfalls das geteilte Geheimnis berechnen. Hierzu verwendet der Personalisierungsserver einen initialen öffentlichen kryptographischen Schlüssel des Sicherheitsapplets, welcher dem Personalisierungsserver bekannt ist. Dieser wurde beispielsweise im Zuge der Registrierung des ID-Anwendungsprogramms beim Provisionieren auf dem Personalisierungsserver hinterlegt. Beispielsweise wurde der entsprechende initiale öffentliche kryptographische Schlüssel im Zuge einer Provisionierung des zu personalisierenden Sicherheitsapplets erzeugt und dem Personalisierungsserver zur Verfügung gestellt. Ferner verwendet der Personalisierungsserver den ephemeren privaten kryptographischen Schlüssel des Personalisierungsservers zum Berechnen des geteilten Geheimnisses. Mit dem entsprechenden geteilten Geheimnis ist der Personalisierungsserver dazu in der Lage, den gemeinsamen Authentisierungsschlüssel zu berechnen. Hierzu verwendet der Personalisierungsserver den empfangenen Zufallswert und das zuvor berechnete geteilte Geheimnis. Somit kann der Personalisierungsserver den empfangenen Authentisierungstoken verifizieren unter Verwendung des gemeinsamen Authentisierungsschlüssels und des ephemeren öffentlichen kryptographischen Schlüssels des Personalisierungsservers.

Somit kann das zu personalisierende Sicherheitsapplet authentifiziert werden. Dies kann beispielsweise den Vorteil haben, dass den Teilnehmern des verschlüsselten Unterkanals zwischen zu personalisierenden Sicherheitsapplet des ersten Sicherheitselements und Personalisierungsserver bekannt, mit wem sie kommunizieren bzw. sie können sicherstellen, dass sie mit dem richtigen Teilnehmer kommunizieren. Ferner kann der gemeinsame Authentisierungsschlüssel zum Authentisieren von Daten verwendet werden, welche über den zweiten verschlüsselten Unterkanal zwischen zum personalisierenden Sicherheitsapplet und dem Personalisierungsserver ausgetauscht werden.

Nach Ausführungsformen wird der im Zuge des Authentifizierens des Personalisierungsservers empfangenen ephemeren öffentlichen kryptographischen Schlüssels des Personalisierungsservers mit dem im Zuge des Authentisierens des Sicherheitsapplets des ersten Sicherheitselements empfangenen ephemeren öffentlichen kryptographischen Schlüssels des Personalisierungsservers verglichen, wobei eine Übereinstimmung beider ephemeren öffentlichen kryptographischen Schlüssels des Personalisierungsservers eine Voraussetzung für das Erzeugen des geteilten Geheimnisses ist.

Nach Ausführungsformen handelt es sich bei dem dritten Authentisierungsschlüssel um einen kryptographischen Schlüssel zum Erzeugen eines Message Authentication Codes, wobei es sich bei dem dritten Authentisierungstoken um einen unter Verwendung des dritten Authentisierungsschlüssels erzeugten dritten MAC des dritten ephemeren öffentlichen kryptographischen Schlüssels des Personalisierungsservers handelt.

Nach Ausführungsformen erzeugt das Sicherheitsapplet des ersten Sicherheitselements ferner den dritten kanalspezifischen ephemeren symmetrischen kryptographischen Sitzungsschlüssel unter Verwendung des geteilten dritten Geheimnisses und des sechsten Zufallswerts.

Ausführungsformen können den Vorteil haben, dass ein kanalspezifischer ephemerer symmetrischer kryptographischer Sitzungsschlüssel für das zu personalisierende Sicherheitselement und den Personalisierungsserver bereitgestellt werden kann, mittels dessen der zweite Unterkanal verschlüsselt werden kann. Insbesondere kann somit eine Ende-zu-Ende-Verschlüsselung zwischen den Endpunkten des entsprechenden Unterkanals, d.h. dem zu personalisierenden Sicherheitselement und dem Personalisierungsserver realisiert werden.

Nach Ausführungsformen ist der dritte kanalspezifische ephemere symmetrische kryptographische Sitzungsschlüssel zum Verschlüsseln des zweiten verschlüsselten Unterkanals zwischen dem Sicherheitsapplet des ersten Sicherheitselements und dem Personalisierungsserver als initialer Schlüssel zur Verwendung durch das Sicherheitsapplet in dem ersten Sicherheitselement und in dem Personalisierungsserver hinterlegt.

Beispielsweise wird die das Sicherheitsapplet für die Personalisierung durch den Personalisierungsserver in einer Subsecuritydomain des ersten Sicherheitselements bereitgestellt, welche ansonsten leer ist und beispielsweise kein Schlüsselmaterial für eine gegenseitige Authentifizierung mit dem Personalisierungsserver umfasst. In diesem Fall erfolgt beispielsweise im Zuge des Aufbaus des zweiten verschlüsselten Unterkanals keine entsprechende gegenseitige Authentifizierung mit dem Personalisierungsserver. Vielmehr ist beispielsweise lediglich der initiale Schlüssel zur Verwendung durch das Sicherheitsapplet in dem ersten Sicherheitselement hinterlegt.

Nach Ausführungsformen ist in dem ersten Sicherheitselement zur Verwendung durch das Sicherheitsapplet und in dem Personalisierungsserver ferner ein kanalspezifischer ephemerer symmetrischer kryptographischer Authentisierungsschlüssel zum Authentisieren von Daten hinterlegt, welche über den entsprechenden zweiten verschlüsselten Unterkanal übertragen werden.

Nach Ausführungsformen wird für die Personalisierung eine Mehrzahl von ID-Token verwendet.

Nach Ausführungsformen wird für die Personalisierung ferner ein zweites ID-Token verwendet. Die Personalisierung umfasst ferner:
- Aufbauen eines dritten verschlüsselten Unterkanals zwischen dem zweiten ID-Token und dem Personalisierungsserver innerhalb des verschlüsselten Kommunikationskanals über das mobile Endgerät, wobei zum Aufbauen des dritten verschlüsselten Unterkanals das ID-Anwendungsprogramm verwendet wird,
- Auslesen von ein oder mehreren der zweiten Attribute aus dem zweiten ID-Token durch den Personalisierungsserver über den dritten verschlüsselten Unterkanal innerhalb des verschlüsselten Kommunikationskanals,
- Aufbauen eines vierten verschlüsselten Unterkanals zwischen dem Sicherheitsapplet des ersten Sicherheitselements und dem Personalisierungsserver innerhalb des verschlüsselten Kommunikationskanals, wobei zum Aufbauen des vierten verschlüsselten Unterkanals das ID-Anwendungsprogramm verwendet wird,
- Empfangen der ausgelesenen zweiten Attribute durch das Sicherheitsapplet des ersten Sicherheitselements von dem Personalisierungsserver über den vierten verschlüsselten Unterkanal innerhalb des verschlüsselten Kommunikationskanals,
- Speichern der empfangenen zweiten Attribute durch das Sicherheitsapplet, wobei das ID-Anwendungsprogramm dazu konfiguriert ist, die zweiten Attribute zum Nachweis einer Identität des Nutzers gegenüber einem weiteren Computersystem zu verwenden.

Ausführungsformen können den Vorteil haben, dass Attribute aus unterschiedlichen ID-Token ausgelesen und im Zuge der Personalisierung in dem zu personalisierenden Sicherheitselement des mobilen Endgeräts hinterlegt werden können. Somit können auf dem mobilen Endgerät nicht nur digitale Identitäten, welche Identitäten widerspiegeln, die von einem ID-Token, d.h. elektronischem Identitätsdokument, bereitgestellt werden, sondern Identitäten, welche Kombinationen aus Attributen entsprechender ID-Token darstellen. Beispielsweise werden die Attribute aus unterschiedlichen ID-Token über denselben verschlüsselten Kommunikationskanal ausgelesen.

Beispielsweise werden Attribute aus unterschiedlichen ID-Token über verschiedene verschlüsselte Kommunikationskanäle ausgelesen. Nach Ausführungsformen wird ein dritter verschlüsselter Kommunikationskanals zwischen dem mobilen Endgerät und dem Personalisierungsserver über das Netzwerk aufgebaut, innerhalb dessen das Aufbauen eines dritten und vierten verschlüsselten Unterkanals erfolgt.

Beispielsweise ist das ID-Anwendungsprogramm dazu konfiguriert, die zweiten Attribute in Kombination mit den ersten Attributen zum Nachweis einer Identität des Nutzers gegenüber einem weiteren Computersystem zu verwenden.

Nach Ausführungsformen ist das ID-Anwendungsprogramm dazu konfiguriert, ein oder mehrere der ersten und/oder zweiten Attribute des Nutzers an ein weiteres Endgerät zu senden.

Nach Ausführungsformen ist das ID-Anwendungsprogramm dazu konfiguriert, ein oder mehrere der ersten und/oder zweiten Attribute des Nutzers unter Verwendung einer Kommunikationsschnittstelle des mobilen Endgeräts über das Netzwerk an einen ID-Provider-Server zum Bereitstellen für einen Service-Provider-Server und/oder zur Bestätigung gegenüber dem Service-Provider-Server zu senden.

Ausführungsformen umfassen ferner ein mobiles Endgerät, welches einen Prozessor und einen Speicher umfasst. In dem Speicher ist ein ID-Anwendungsprogramm gespeichert. Das mobile Endgerät umfasst ferner ein Sicherheitselement mit einem dem ID-Anwendungsprogramm zugeordneten Sicherheitsapplet. Der Prozessor ist dazu konfiguriert, ein Verfahren zum Personalisieren des Sicherheitsapplets unter Verwendung eines ID-Tokens und eines Personalisierungsservers auszuführen. Ferner umfasst das mobile Endgerät ferner eine Kommunikationsschnittstelle zur kontaktlosen Kommunikation mit dem ID-Token und zur Kommunikation über ein Netzwerk mit dem Personalisierungsserver.

Das Personalisieren umfasst:
- Aufbauen eines verschlüsselten Kommunikationskanals zwischen dem mobilen Endgerät und dem Personalisierungsserver über ein Netzwerk, wobei zum Aufbauen des verschlüsselten Kommunikationskanals das ID-Anwendungsprogramm verwendet wird,
- Aufbauen eines ersten verschlüsselten Unterkanals zwischen dem ersten ID-Token und dem Personalisierungsserver innerhalb des verschlüsselten Kommunikationskanals über das mobile Endgerät, wobei zum Aufbauen des ersten verschlüsselten Unterkanals das ID-Anwendungsprogramm verwendet wird,
- Auslesen von ein oder mehreren der ersten Attribute aus dem ID-Token durch den Personalisierungsserver über den ersten verschlüsselten Unterkanal innerhalb des verschlüsselten Kommunikationskanals,
- Aufbauen eines zweiten verschlüsselten Unterkanals zwischen dem Sicherheitsapplet des Sicherheitselements und dem Personalisierungsserver innerhalb des verschlüsselten Kommunikationskanals, wobei zum Aufbauen des zweiten verschlüsselten Unterkanals das ID-Anwendungsprogramm verwendet wird,
- Empfangen der ausgelesenen Attribute durch das Sicherheitsapplet des Sicherheitselements von dem Personalisierungsserver über den zweiten verschlüsselten Unterkanal innerhalb des verschlüsselten Kommunikationskanals,
- Speichern der empfangenen Attribute durch das Sicherheitsapplet, wobei das ID-Anwendungsprogramm dazu konfiguriert ist, die Attribute zum Nachweis einer Identität des Nutzers gegenüber einem weiteren Computersystem zu verwenden.

Nach Ausführungsformen ist das mobile Endgerät dazu konfiguriert, jede der vorangehend beschriebenen Ausführungsformen des Verfahrens zum Personalisieren eines Sicherheitsapplets auszuführen.

Ausführungsformen umfassen ferner ein System. Das System umfasst ein mobiles Endgerät sowie einen Personalisierungsserver. Der Personalisierungsserver ist zum Auslesen von Attributen aus einem ID-Token über das mobile Endgerät und zum Personalisieren des Sicherheitsapplets des mobilen Endgeräts konfiguriert.

Nach Ausführungsformen ist das System dazu konfiguriert, jede der vorangehend beschriebenen Ausführungsformen des Verfahrens zum Personalisieren eines Sicherheitsapplets auszuführen.

Nach Ausführungsformen umfasst das System ferner den ID-Token, in welchem die auszulesenden Attribute gespeichert sind.

Im Weiteren werden Ausführungsformen der Erfindung mit Bezugnahme auf die Zeichnungen näher erläutert. Es zeigen:
- Figur 1: ein schematisches Diagramm eines exemplarischen mobilen Endgeräts,
- Figur 2: ein schematisches Diagramm eines exemplarischen mobilen Endgeräts,
- Figur 3: ein schematisches Diagramm eines exemplarischen Systems,
- Figur 4: ein Flussdiagramm eines exemplarischen Verfahrens zum Personalisieren eines Sicherheitsapplets,
- Figur 5: ein schematisches Diagramm exemplarischer verschlüsselter Kanäle, und
- Figuren 6A,B: ein Flussdiagramm eines exemplarischen Verfahrens zum Personalisieren des Sicherheitsapplets.

Elemente der nachfolgenden Ausführungsformen, die einander entsprechen, werden mit denselben Bezugszeichen gekennzeichnet.

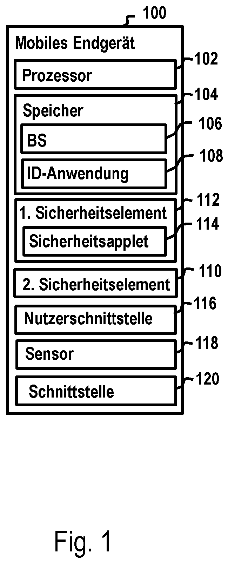

Figur 1 zeigt ein exemplarisches mobiles Endgerät 100, beispielsweise ein Smartphone, welches einen Speicher 104 mit Programminstruktionen umfasst, welche von einem Prozessor 102 ausgeführt werden. Die Programminstruktionen können beispielsweise ein auf dem mobiles Endgerät 100 installiertes Betriebssystem 106 und ein ID-Anwendungsprogramms 108 umfassen. Das ID-Anwendungsprogramm 108, ist dazu konfiguriert in personalisiertem Zustand Attribute bzw. Identitätsattribute eines Nutzers zu verwalten und beispielsweise zum Nachweis einer Identität des Nutzers gegenüber einem weiteren Computersystem bereitzustellen. Ferner umfasst das ID-Anwendungsprogramm 108 beispielsweise eine Personalisierungskomponente, welche eine Personalisierung eines dem ID-Anwendungsprogramm 108 zugeordneten Sicherheitsapplet 114 steuert. Insbesondere steuert die Personalisierungskomponente beispielsweise einen Aufbau von verschlüsselten Kanälen zur Kommunikation im Zuge einer entsprechenden Personalisierung. Die entsprechenden Attribute sind Teil bzw. bilden eine von dem ID-Anwendungsprogramms 108 verwaltete elektronische Identität des Nutzers, welche dieser mittels des mobilen Endgeräts 100 nutzen kann. Ferner umfasst das mobile Endgerät 100 beispielsweise zwei Sicherheitselemente 110, 112, welche beispielsweise jeweils als eSim und/oder eUICC implementiert sein können. Eines der beiden Sicherheitselement 110 ist dem Betriebssystem 106 zugeordnet und stellt für dieses kryptographische Mittel bereit, wie beispielsweise kryptographische Schlüssel, kryptographische Funktionen und/oder kryptographische Protokolle. Beispielsweise stellt das Sicherheitselement 110 einen Key Store bzw. Schlüsselspeicher zum Speichern von kryptographischen Schlüsseln bereit, wie etwa symmetrischer, öffentlicher und/oder privater kryptographischer Schlüssel, und von Zertifikaten, wie beispielsweise Lesezertifikate, Public-Key-Zertifikate und/oder Attributzertifikate. Die von dem Sicherheitselement 110 bereitgestellten kryptographischen Mittel versetzten das Betriebssystem 106 dazu in die Lage, ein Challenge Response-Verfahrens auszuführen bzw. an diesem teilzunehmen. Auf dem anderen Sicherheitselement 112 ist beispielsweise das dem ID-Anwendungsprogramm 108 zugeordnetes Sicherheitsapplet 114 installiert. Dieses Sicherheitsapplet 114 stellt kryptographische Mittel für das ID-Anwendungsprogramm 108 bereit, wie beispielsweise kryptographische Schlüssel, kryptographische Funktionen und/oder kryptographische Protokolle. Das Sicherheitsapplet 114 bzw. ein dem Sicherheitsapplet 114 zugeordneter Speicherbereich des Sicherheitselements 112 stellt beispielsweise einen Key Store bzw. Schlüsselspeicher zum Speichern von kryptographischen Schlüsseln bereit, wie etwa symmetrischer, öffentlicher und/oder privater kryptographischer Schlüssel, und von Zertifikaten, wie beispielsweise Lesezertifikate, Public-Key-Zertifikate und/oder Attributzertifikate. Die von dem Sicherheitselement 112 bereitgestellten kryptographischen Mittel versetzten das ID-Anwendungsprogramm 108 dazu in die Lage, ein Challenge Response-Verfahrens auszuführen bzw. an diesem teilzunehmen. Beispielsweise dient ein solches Challenge Response-Verfahren einer Bestätigung einer erfolgreichen Nutzerauthentifizierung durch das Sicherheitselement 110 gegenüber dem ID-Anwendungsprogramm 108 bzw. dem Sicherheitsapplet 114 des Sicherheitselements 112, welches dem Anwendungsprogramm 108 zugeordnet ist. Ferner umfasst das mobile Endgerät 100 eine Nutzerschnittelle 116, welche beispielsweise ein Display, insbesondere ein Touchscreen umfasst. Unter Verwendung des Nutzerschnittelle 116, kann der Nutzer mit dem mobiles Endgerät 100 interagieren. Beispielsweise kann der Nutzer zum Bereitstellen von Authentifizierungsfaktoren bzw. Authentifizierungsmerkmalen aufgefordert werden. Zum Erfassen von Authentifizierungsdaten der Authentifizierungsfaktoren des Nutzers umfasst das mobile Endgerät 100 einen Authentifizierungssensor 118, welcher beispielsweise in die Nutzerschnittstelle 116 integriert oder als eigenständige Komponente implementiert sein kann. Schließlich umfasst das mobile Endgerät 100 eine Kommunikationsschnittstelle bzw. Antenne 120, welche konfiguriert ist für eine kabellose Kommunikation, beispielsweise über ein Netzwerk.

Unter Verwendung der Kommunikationsschnittstelle 120 kann das mobile Endgerät 100 beispielsweise mit einem Personalisierungsserver zum Zwecke der Personalisierung des Sicherheitsapplets 114 in dem Sicherheitselement 112 und damit des ID-Anwendungsprogramms 108 kommunizieren. Ferner ist die Kommunikationsschnittstelle 120 beispielsweise zu einer kabellosen Kommunikation mit einem ID-Token konfiguriert, welcher die Attribute des Nutzers bereitstellt. Für unterschiedliche Kommunikationsverfahren umfasst die Kommunikationsschnittstelle 120 beispielsweise unterschiedliche Kommunikationskomponenten. Das mobile Endgerät 100 mit der Kommunikationsschnittstelle 120 kann mithin als Transceiver eine Kommunikation zwischen dem ID-Token und dem Personalisierungsserver zum Auslesen der Attribute durch den Personalisierungsserver aus dem ID-Token ermöglichen. Dabei baut das mobile Endgerät 100 unter Verwendung des Sicherheitselements 110 einen verschlüsselten Kommunikationskanal zwischen zu dem Personalisierungsserver über ein Netzwerk auf. Der entsprechende Kommunikationskanal wird beispielsweise mittels Ende-zu-Ende-Verschlüsselung verschlüsselt. Innerhalb des verschlüsselten Kommunikationskanal wird ein erster verschlüsselter Unterkanal zwischen dem ID-Token und dem Personalisierungsserver unter Vermittlung des mobilen Endgeräts 100 bzw. einer Personalisierungskomponente des ID-Anwendungsprogramms 108 aufgebaut. Der entsprechende erste Unterkanal ist beispielsweise ebenfalls mittels Ende-zu-Ende-Verschlüsselung verschlüsselt. Dieser erste verschlüsselte Unterkanal dient beispielsweise einer Kommunikation zwischen dem ID-Token und dem Personalisierungsserver, beispielsweise zum Auslesen der von dem ID-Token bereitgestellten Attribute durch den Personalisierungsserver. Ferner kann innerhalb des verschlüsselten Kommunikationskanal ein zweiter verschlüsselter Unterkanal zwischen dem zu personalisierenden Sicherheitsapplet 114 des Sicherheitselements 112 und dem Personalisierungsserver aufgebaut werden. Der Aufbau erfolgt beispielsweise wiederum unter Vermittlung des Personalisierungskomponente des ID-Anwendungsprogramms 108. Der entsprechende zweite Unterkanal ist beispielsweise ebenfalls mittels Ende-zu-Ende-Verschlüsselung verschlüsselt. Dieser zweite verschlüsselte Unterkanal dient beispielsweise einer Kommunikation zwischen dem Sicherheitsapplet 114 des Sicherheitselements 112 und dem Personalisierungsserver, beispielsweise zum Personalisieren des Sicherheitsapplets 114 mit den aus dem ID-Token ausgelesenen Attributen durch den Personalisierungsserver.

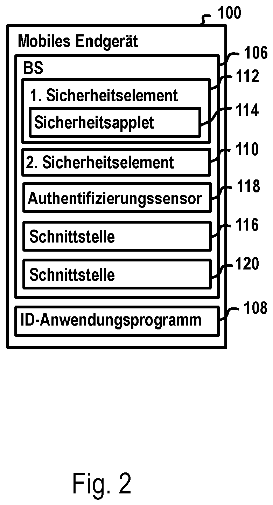

Figur 2 zeigt ein exemplarisches mobiles Endgerät 100, auf welchem ein Betriebssystem 106 installiert ist, welches die Ressourcen des mobiles Endgerät 100 verwaltet und dem ID-Anwendungsprogramm 108 zur Verfügung stellt. Die verwalteten Ressourcen umfassen beispielsweise die beiden Sicherheitselemente 110, 112, den Authentifizierungssensor 118, die Nutzerschnittstelle 116 und die Kommunikationsschnittstelle 120. Dabei wird das Sicherheitselement 112 zwar beispielsweise von dem Betriebssystem 106 bereitgestellt bzw. verwaltet, das von dem entsprechenden Sicherheitselement 112 umfasste Sicherheitsapplet 114 ist jedoch dem ID-Anwendungsprogramm 108 zugeordnet, d.h. das Sicherheitsapplet 114 stellt nur dem ID-Anwendungsprogramm 108 kryptographische Mittel zur Verfügung. Das Betriebssystem 106 kann diese kryptographische Mittel nicht nutzen. Für kryptographische Aufgaben, etwa im Zuge einer Verwendung des Authentifizierungssensors 118 oder der Kommunikationsschnittelle 120, steht dem Betriebssystem 106 vielmehr das andere Sicherheitselement 110 mit seinen kryptographischen Mitteln zur Verfügung.

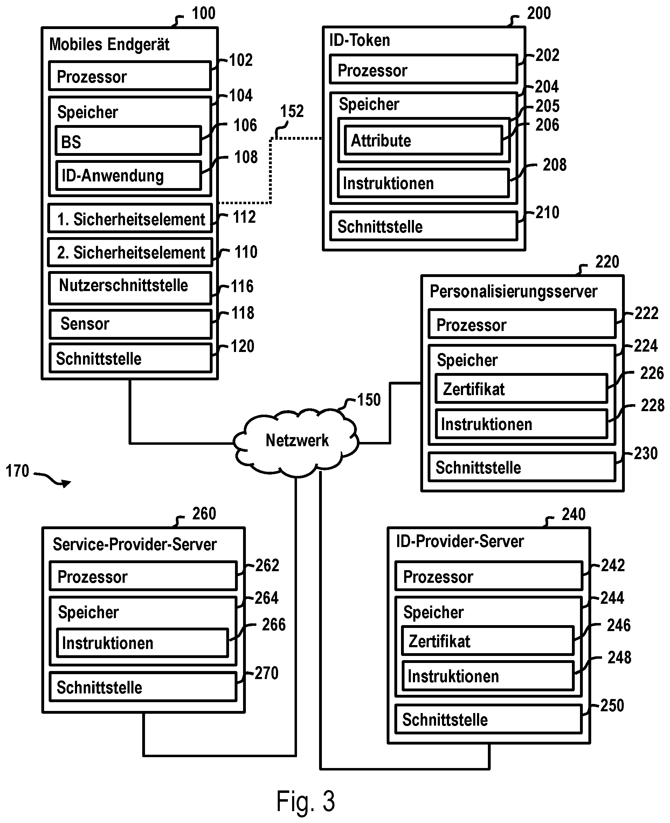

Figur 3 zeigt ein exemplarisches System 170, welches ein mobiles Endgerät 100 umfasst, das über ein Netzwerk 150, beispielsweise das Internet, mit einem Personalisierungsserver 220 verbunden ist. Zudem kann das mobile Endgerät 100 über das Netzwerk 150 beispielsweise mit einem ID-Provider-Server 240 und/oder einem Service-Provider-Server 260 kommunizieren. Ferner ist das mobile Endgerät 100 beispielsweise über eine kabellose direkte Kommunikationsverbindung 152 mit einem ID-Token 200 verbindbar. Das mobile Endgerät 100 ist beispielsweise wie in Figur 1 beschrieben aufgebaut und weist die entsprechenden Funktionalitäten auf. Zum Personalisieren des Sicherheitsapplets des Sicherheitselements 112 werden beispielsweise Attribute 206 verwendet, welche ein ID-Token 200 bereitstellt. Der ID-Token 200 umfasst einen Prozessor 202 und einen Speicher 204. In einem geschützten Speicherbereich 205 des Speichers 204 sind die Attribute 206 gespeichert, bei welchen es sich um Identitätsattribute des Inhabers des ID-Tokens 200 handelt. Ferner sind in dem Speicher 204 Programminstruktionen 208 gespeichert, deren Ausführen durch den Prozessor 202 den Prozessor dazu veranlasst ein Auslesen der Attribute 206 durch eine dazu berechtigte Instanz, wie etwa den Personalisierungsserver 220, zu ermöglichen. Hierzu stellt der ID-Token 200 beispielsweise unter Verwendung seiner Kommunikationsschnittstelle 210 eine kabellose Direktverbindung 152 mit dem mobilen Endgerät 100, über welche der Personalisierungsserver 220 die Attribute 206 auslesen kann.

Der Personalisierungsserver 220 umfasst einen Prozessor 222, einen Speicher 224 und eine Kommunikationsschnittstelle 230. In dem Speicher 224 sind Programminstruktionen 228 gespeichert, bei deren Ausführung der Prozessor 222 den Personalisierungsserver 220 zum Aufbau verschlüsselter Kanäle mit dem mobilen Endgerät 100, dem ID-Token 200 über das mobile Endgerät 100 sowie mit dem Sicherheitsapplet in dem Sicherheitselement 112 des mobilen Endgeräts 100 steuert. Diese Kanäle verwendet der Personalisierungsserver 220 zum Auslesen von Attributen 206 aus dem ID-Token 200 und Einbringen der ausgelesenen Attribute 206 in das Sicherheitselement 112 im Zuge der Personalisierung. Zum Nachweis einer Leseberechtigung der Attribute 206 aus dem ID-Token 200 sowie einer Schreibberechtigung zum Schreiben der ausgelesenen Attribute 206 in das Sicherheitselement 112 des mobile Endgeräts 100 verwendet der Personalisierungsserver 220 beispielsweise entsprechende Zertifikate 226.

Ferner umfasst das System beispielsweise einen Service-Provider-Server 260. Der Service-Provider-Server 260 umfasst einen Prozessor 262, einen Speicher 264 und eine Kommunikationsschnittstelle 270. In dem Speicher 264 sind Programminstruktionen 268 gespeichert, bei deren Ausführung der Prozessor 262 den Service-Provider-Server 260 zum Bereitstellen von Dienstleistungen steuert, welche beispielsweise von dem mobilen Endgerät 100 über das Netzwerk 150 angefragt und/oder genutzt werden können. Eine Inanspruchnahme von Dienstleistungen des Service-Provider-Server 260 setzt beispielsweise ein Bereitstellen und/oder Nachweis eines oder mehrerer Identitätsattribute des Nutzers voraus. Auf eine Anfrage einer Dienstleistung des Service-Provider-Servers 260 durch das mobile Endgerät 100 sendet das Service-Provider-Servers 260 eine Identitätsattributsanfrage nach Identitätsattributen des Nutzers des mobilen Endgeräts 100 an einen ID-Provider-Server 240. Die Identitätsattributsanfrage kann von dem Service-Provider-Servers 260 beispielsweise direkt oder über das mobile Endgerät 100 an den ID-Provider-Server 240 gesendet werden.

Der ID-Provider-Server 240 umfasst einen Prozessor 242, einen Speicher 244 und eine Kommunikationsschnittstelle 250. In dem Speicher 244 sind Programminstruktionen 248 gespeichert, bei deren Ausführung der Prozessor 242 den Service-Provider-Server 240 zum Auslesen der in der Identitätsattributsanfrage spezifizierten Identitätsattribute aus einem Speicher des mobilen Endgeräts 100. Hierzu baut der ID-Provider-Server 240 einen kryptographisch gesicherten Kommunikationskanal mit dem mobilen Endgerät 100 auf. Bei dem einen kryptographisch gesicherten Kommunikationskanal kann es sich beispielsweise um einen Ende-zu-Ende-verschlüsselten Kommunikationskanal handeln. Beispielsweise setzt dies eine gegenseitiges Authentifizieren von ID-Provider-Server 240 und mobilem Endgerät 100 voraus. Für einen Lesezugriff auf die Identitätsattribute verwendet der ID-Provider-Server 240 ein ID-Anwendungsprogramm 108 auf dem mobilen Endgerät 100, welches die Identitätsattribute verwaltet. Eine Leseberechtigung zum Auslesen der in der Identitätsattributsanfrage spezifizierten Identitätsattribute weist der ID-Provider-Server 240 beispielsweise mit dem Berechtigungszertifikat 248 nach. Ferner setzt ein Lesezugriff des ID-Provider-Server 240 auf die in der Identitätsattributsanfrage spezifizierten Identitätsattribute eine Zustimmung des Nutzers des mobilen Endgeräts 100 voraus. Hierzu muss sich der Nutzer gegenüber dem ID-Anwendungsprogramm 108 erfolgreich authentisieren. Beispielsweise wird dem Nutzer über eine Anzeigevorrichtung der Nutzerschnittstelle 116 angezeigt, welche Identitätsattribut an den ID-Provider-Server 240 gesendet werden sollen, und dem Nutzer ermöglicht diese Auswahl zu bearbeiten. Beispielsweise kann der Nutzer selektieren, welche der angefragten Identitätsattribute tatsächlich gesendet werden. Auf einen erfolgreichen Nachweis der Leseberechtigung und eine erfolgreiche Nutzerauthentifizierung werden dem ID-Provider-Server 240 die freigegebenen Identitätsattribute zugesendet. Der ID-Provider-Server 240 signiert die empfangenen Identitätsattribute und sendet diese an den Service-Provider-Server 260.

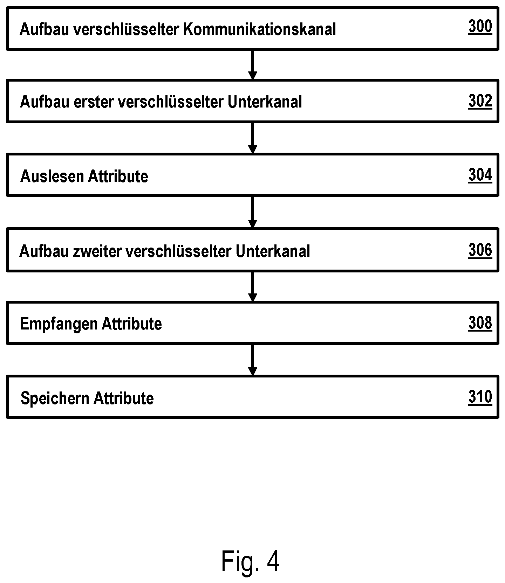

Figur 4 zeigt ein exemplarisches Verfahren zum Personalisieren eines Sicherheitsapplets. Das zu personalisierende Sicherheitsapplet ist auf einem Sicherheitselement eines mobilen Endgeräts installiert und einem auf dem mobilen Endgerät installierten ID-Anwendungsprogramm zugeordnet. Die Personalisierung erfolgt unter Verwendung eines ID-Tokens, auf welchem Attribute eines Nutzers gespeichert sind, und eines Personalisierungsservers, welcher sowohl eine Berechtigung zum Auslesen der Attribute aus dem ID-Token besitzt, als auch eine Berechtigung zum Einbringen der ausgelesenen Attribute in das Sicherheitsapplet zum Zwecke einer Personalisierung. Die entsprechenden Berechtigungen weist der Personalisierungsserver unter Verwendung von Zertifikaten und/oder dem Besitz und Verwendung bestimmter kryptographischer Schlüssel nach.

Das Personalisieren umfasst in Block 300 ein Aufbauen eines verschlüsselten Kommunikationskanals zwischen dem mobilen Endgerät und dem Personalisierungsserver über ein Netzwerk. Hierbei wird beispielsweise das ID-Anwendungsprogramm bzw. eine Personalisierungskomponente des ID-Anwendungsprogramm verwendet, welche den Aufbau steuert. Im Zuge des Aufbaus erfolgt beispielsweise eine gegenseitige Authentifizierung von mobilem Endgerät und Personalisierungsserver, etwa unter Verwendung von Challenge-Response-Verfahren. Ferner wird beispielsweise ein erster kanalspezifischer ephemerer symmetrischer kryptographischer Sitzungsschlüssel zum Verschlüsseln des Kommunikationskanals zwischen dem mobilen Endgerät und dem Personalisierungsserver ausgehandelt.

In Block 302 wird ein erster verschlüsselter Unterkanal zwischen dem ID-Token und dem Personalisierungsserver innerhalb des verschlüsselten Kommunikationskanals über das mobile Endgerät aufgebaut. Hierbei wird beispielsweise das ID-Anwendungsprogramm bzw. eine Personalisierungskomponente des ID-Anwendungsprogramm verwendet, welche den Aufbau steuert. Im Zuge des Aufbaus erfolgt beispielsweise eine gegenseitige Authentifizierung von ID-Token und Personalisierungsserver, etwa unter Verwendung von Challenge-Response-Verfahren. Ferner wird beispielsweise ein zweiter kanalspezifischer ephemerer symmetrischer kryptographischer Sitzungsschlüssel zum Verschlüsseln des ersten Unterkanals zwischen dem ID-Token und dem Personalisierungsserver ausgehandelt. In Block 304 werden ein oder mehreren der Attribute aus dem ID-Token durch den Personalisierungsserver über den ersten verschlüsselten Unterkanal innerhalb des verschlüsselten Kommunikationskanals ausgelesen.

Ferner wird in Block 306 ein zweiter verschlüsselter Unterkanal zwischen dem Sicherheitsapplet des Sicherheitselements und dem Personalisierungsserver innerhalb des verschlüsselten Kommunikationskanals aufgebaut. Hierbei wird beispielsweise das ID-Anwendungsprogramm bzw. eine Personalisierungskomponente des ID-Anwendungsprogramm verwendet, welche den Aufbau steuert. Im Zuge des Aufbaus erfolgt beispielsweise eine gegenseitige Authentifizierung von dem ID-Anwendungsprogramm bzw. dem zugeordneten Sicherheitsapplet und dem Personalisierungsserver, etwa unter Verwendung von Challenge-Response-Verfahren. Ferner wird beispielsweise ein dritter kanalspezifischer ephemerer symmetrischer kryptographischer Sitzungsschlüssel zum Verschlüsseln des zweiten Unterkanals zwischen dem Sicherheitsapplet und dem Personalisierungsserver ausgehandelt. In Block 308 empfängt das Sicherheitsapplet die ausgelesenen Attribute von dem Personalisierungsserver über den zweiten verschlüsselten Unterkanal innerhalb des verschlüsselten Kommunikationskanals. In Block 310 speichert das Sicherheitsapplet die empfangenen Attribute, womit es dem entsprechenden Nutzer zugeordnet bzw. personalisiert ist. Das ID-Anwendungsprogramm ist dazu konfiguriert, die gespeicherten Attribute zum Nachweis einer elektronischen Identität des entsprechenden Nutzers gegenüber einem weiteren Computersystem zu verwenden. Im Zuge der Personalisierung wird ferner beispielsweise ein Erzeugen eines dem ID-Anwendungsprogramm zugeordneten asymmetrischen kryptographischen Schlüsselpaars durch das Sicherheitsapplet seitens des Personalisierungsservers initiiert. Das asymmetrische kryptographische Schlüsselpaar umfasst einen privaten kryptographischen Schlüssel und einen öffentlichen kryptographischen Schlüssel des ID-Anwendungsprogramms, welche beispielsweise zu einem Authentisieren des ID-Anwendungsprogramms im Zuge einer Verwendung der Attribute dienen. Der öffentliche kryptographische Schlüssel des ID-Anwendungsprogramms wird beispielsweise von dem Sicherheitsapplet an den Personalisierungsserver über den zweiten verschlüsselten Unterkanal innerhalb des verschlüsselten Kommunikationskanals gesendet. Ferner empfängt das Sicherheitsapplet beispielsweise ein oder mehrere Wurzelsignaturprüfschlüssel durch von dem Personalisierungsserver über den zweiten verschlüsselten Unterkanal innerhalb des verschlüsselten Kommunikationskanals. Diese empfangenen Wurzelsignaturprüfschlüssel werden gespeichert und dienen zum Verifizieren von Zertifikatsignaturen ein oder mehrerer Wurzelinstanzen, welche Zertifikate aufweisen, die jeweils im Zuge eines Auslesens der ersten Attribute zum Authentisieren eines auslesenden Computersystems gegenüber dem ID-Anwendungsprogramm verwendet werden. Zudem empfängt und speichert das Sicherheitsapplet beispielsweise eine Signatur der empfangenen Attribute von dem Personalisierungsserver über den zweiten verschlüsselten Unterkanal innerhalb des verschlüsselten Kommunikationskanals. Die Signatur dient als Authentizitätsnachweis der Attribute, insbesondere im Falle einer Verwendung der Attribute zum Zwecke eines Identitätsnachweises im Offlinemodus.

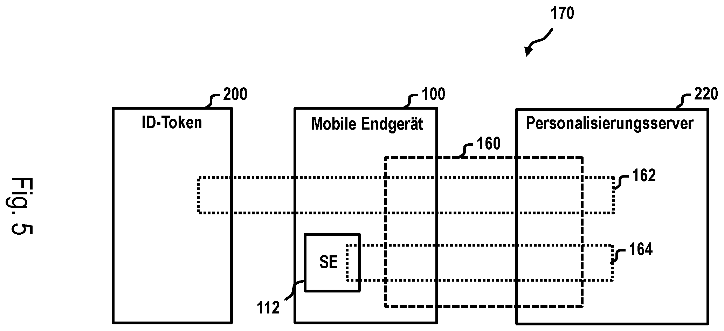

Figur 5 zeigt exemplarische verschlüsselte Kanäle 160, 162, 164, welche im Zuge der Personalisierung des Sicherheitsapplets auf dem Sicherheitselement 112 aufgebaut werden. Zwischen dem mobilen Endgerät 100 und dem Personalisierungsserver 220 wird ein verschlüsselter Kommunikationskanal 160 aufgebaut. Dieser dient der Sicherung der Kommunikation zwischen dem mobilen Endgerät 100 und dem Personalisierungsserver 220. Zugleich wird durch diesen das mobile Endgerät 100 im Zuge der Kommunikation an den Personalisierungsserver 220 gebunden. Der Personalisierungsserver 220 kann somit sicherstellen, dass sämtliche Kommunikation über den verschlüsselten Kommunikationskanal 160 über dasselbe mobile Endgerät 100 erfolgt. Dabei wird beispielsweise dasselbe mobile Endgerät 100 zum Auslesen von Attributen aus dem ID-Token verwendet, welches nachfolgend mit den ausgelesenen Attributen personalisiert wird.

Im Zuge der weiteren Personalisierung erfolgt die Kommunikation zwischen dem mobilen Endgerät 100 und dem Personalisierungsserver 220 über den ein verschlüsselter Kommunikationskanal 160. Dies schließt auch eine Kommunikation zwischen dem Personalisierungsserver 220 und dem ID-Token 200 ein, welche über das mobile Endgerät 100 erfolgt. Der verschlüsselte Kommunikationskanal 160 ist beispielsweise mittels Ende-zu-Ende-Verschlüsselung verschlüsselt. Das Verschlüsseln und entschlüsseln der Kommunikation erfolgt auf Seiten des mobilen Endgeräts 100 beispielsweise mittels des weiteren Sicherheitselements des Betriebssystems des mobilen Endgeräts 100. Innerhalb des verschlüsselten Kommunikationskanals 160 wird ferner ein erster verschlüsselter Unterkanal 162 zwischen dem ID-Token 200 und dem Personalisierungsserver 220 unter Vermittlung des mobilen Endgeräts 100 bzw. einer Personalisierungskomponente des ID-Anwendungsprogramms aufgebaut. Dieser erste verschlüsselte Unterkanal 162 dient beispielsweise einer Kommunikation zwischen dem ID-Token 200 und dem Personalisierungsserver 220, beispielsweise zum Auslesen der von dem ID-Token 200 bereitgestellten Attribute durch den Personalisierungsserver 220. Der entsprechende erste Unterkanal 162 ist beispielsweise ebenfalls mittels Ende-zu-Ende-Verschlüsselung verschlüsselt. Die Datenübertragung zwischen mobilem Endgerät 100 und Personalisierungsserver220 erfolgt beispielsweise über ein Netzwerk, während die Datenübertragung zwischen mobilem Endgerät 100 und ID-Token 200 beispielsweise über eine direkte Funkverbindung erfolgt.

In diesem Kontext heißt Unterkanal, dass über den entsprechenden Unterkanal zu übertragende Daten zunächst mittels eines kryptographischen Sitzungsschlüssels des entsprechenden Unterkanals verschlüsselt werden. Beispielsweise wird zusätzlich noch ein MAC der Daten unter Verwendung eines kryptographischen Authentisierungsschlüssels des entsprechenden Unterkanals erzeugt und mit den verschlüsselten Daten zusammen übertragen. Zusätzlich werden die zu übertragende Daten mittels eines weiteren kryptographischen Sitzungsschlüssels des Kommunikationskanals verschlüsselt, welcher dem Unterkanal übergeordnet ist. Beispielsweise wird zusätzlich noch ein weiteren MAC der Daten unter Verwendung eines weiteren kryptographischen Authentisierungsschlüssels des entsprechenden Kommunikationskanals erzeugt und mit den verschlüsselten Daten zusammen übertragen. Gelangen die übertragenen Daten ans Ende des Kommunikationskanals, werden zuerst die Verschlüsslung des Kommunikationskanals entschlüsselt. Gelangen die übertragenen Daten dann ans Ende des Unterkanals wird auch noch die Verschlüsslung des Unterkanals entschlüsselt. Bei einer Übertragung über einen verschlüsselten Unterkanal innerhalb eines verschlüsselten Kommunikationskanals handelt es sich mithin um eine doppelte Verschlüsselung mit zwei voneinander unabhängigen Sitzungsschlüsseln. Unabhängig sind die Sitzungsschlüssel insofern, als dass sich aus einem Zugriff auf einen der beiden Sitzungsschlüssel kein automatischer Zugriff auf den anderen Sitzungsschlüssel ergibt.

Innerhalb des verschlüsselten Kommunikationskanals 160 wird ferner ein zweiter verschlüsselter Unterkanal 164 zwischen dem Sicherheitselement 112 bzw. einem zu personalisierenden Sicherheitsapplet 114 des Sicherheitselements 112 und dem Personalisierungsserver 220 unter Vermittlung der Personalisierungskomponente des ID-Anwendungsprogramms aufgebaut. Der entsprechende zweite Unterkanal 164 ist beispielsweise ebenfalls mittels Ende-zu-Ende-Verschlüsselung verschlüsselt. Dieser zweite verschlüsselte Unterkanal 164 dient beispielsweise einer Kommunikation zwischen dem Sicherheitselements 112 und dem Personalisierungsserver 220, beispielsweise zum Personalisieren des Sicherheitsapplets 114 des Sicherheitselements 112 mit den aus dem ID-Token 200 ausgelesenen Attributen durch den Personalisierungsserver 220.

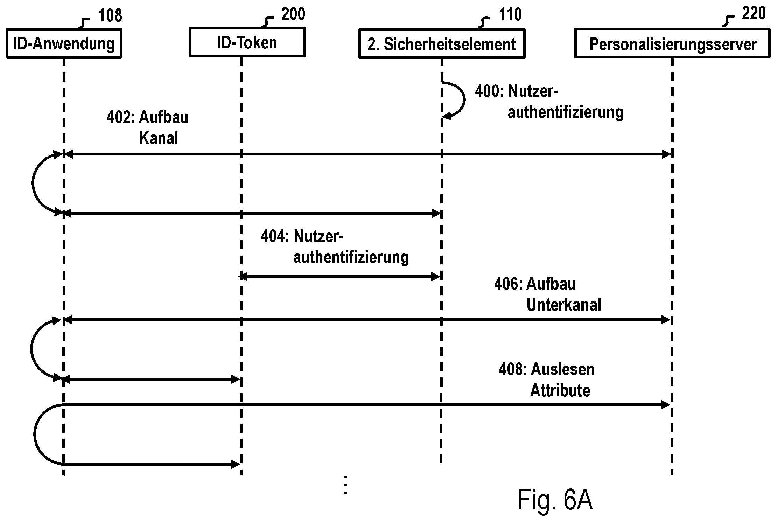

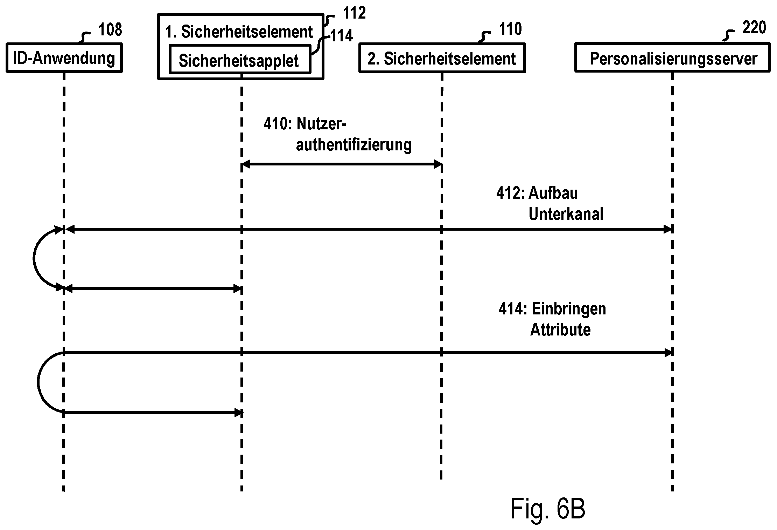

Figur 6, welche die Figuren 6A und 6B umfasst, zeigt ein exemplarisches Verfahren zum Personalisieren eines Sicherheitsapplets 114 in einem Sicherheitselement 112. Zunächst authentisiert sich ein Nutzer des mobilen Endgeräts in Schritt 400 gegenüber einem dafür konfigurierten Sicherheitselement 110 des mobilen Endgeräts 100. Beispielsweise sind in dem Sicherheitselement 110 Referenzwerte für ein oder mehrere Authentifizierungsfaktoren, wie etwa biometrische Merkmale oder eine PIN, eines auf dem mobilen Endgerät registrierten Nutzes hinterlegt. Im Zuge einer Nutzerauthentifizierung werden ein oder mehrere Authentifizierungsfaktoren des Nutzers erfasst und mit den Referenzwerten abgeglichen. Im Falle einer Übereinstimmung gilt der Nutzer beispielsweise als erfolgreich authentifiziert. In Schritt 402 wird ein verschlüsselter Kommunikationskanal zwischen dem mobilen Endgerät, beispielsweise dem Sicherheitselement 110 und dem Personalisierungsserver 220 aufgebaut. Dies umfasst beispielsweise ein gegenseitiges Authentifizieren von mobilem Endgerät bzw. Sicherheitselement 110 und Personalisierungsserver 220, etwa mittels Challenge-Response-Verfahrens, sowie ein Aushandeln eines kryptographischen Schlüssels, beispielsweise eines kanalspezifischen ephemeren symmetrischen kryptographischen Sitzungsschlüssels, zum Verschlüsseln des Kommunikationskanals.

Beispielsweise wird zunächst ein erster initialer Zufallswert durch das mobile Endgerät bzw. das Sicherheitselement 110 erzeugt und an den Personalisierungsserver 220 gesendet. Nach dem Empfang des entsprechenden ersten initialen Zufallswerts erzeugt der Personalisierungsserver 220 einen zweiten initialen Zufallswert, welchen er an das mobile Endgerät 100 sendet. Somit verfügen beide Teilnehmer, das mobile Endgerät sowie der Personalisierungsserver 220, über beide initialen Zufallswerte. Ferner sendet der Server beispielsweise sein Zertifikat an das mobile Endgerät und empfängt von dem mobilen Endgerät nach einer erfolgreichen Prüfung des entsprechenden Zertifikats ein Zertifikat des mobilen Endgeräts. Bei dem Zertifikat des mobilen Endgeräts kann es sich beispielsweise um ein dem Anwendungsprogramm zugeordnetes Zertifikat handeln. Das durch den Personalisierungsserver 220 empfangene Zertifikat des mobilen Endgeräts wird ebenfalls verifiziert. Die beiden Zertifikate umfassen dabei jeweils einen öffentlichen kryptographischen Schlüssel, d.h. das Zertifikat des Personalisierungsservers 220 umfasst einen öffentlichen kryptographischen Schlüssel eines asymmetrischen Schlüsselpaars des Personalisierungsservers 220 und das Zertifikat des mobilen Endgeräts umfasst einen öffentlichen kryptographischen Schlüssel eines asymmetrischen Schlüsselpaars des mobilen Endgeräts. Somit verfügen nun beide Teilnehmer jeweils über öffentliche kryptographische Schlüssel der Gegenseite, dessen Authentizität durch ein Zertifikat belegt ist. Daraufhin erzeugt das mobile Endgerät beispielsweise den ersten Zufallswert, welchen es an den Personalisierungsserver 220 sendet. Somit verfügen nun beide Teilnehmer der Kommunikation jeweils über drei Zufallswerte, aus welchen beispielsweise der kanalspezifische ephemere symmetrische kryptographische Sitzungsschlüssel berechnet werden kann. Ferner sendet das mobile Endgerät beispielsweise eine Signatur einer, mehrerer oder aller vorangehenden im Zuge des Kanalaufbaus ausgetauschten Nachrichten an den Personalisierungsserver 220. Durch Prüfung der entsprechenden Signatur unter Verwendung von dem Zertifikat des mobilen Endgeräts bereitgestellten öffentlichen kryptographischen Schlüssel als Signaturprüfschlüssel kann der Personalisierungsserver 220 das mobile Endgerät authentifizieren. Sendet im Folgenden der Personalisierungsserver 220 eine mit dem ersten kanalspezifischen ephemeren symmetrischen kryptographischen Sitzungsschlüssel verschlüsselte Nachricht an das mobile Endgerät, so wird dadurch auch der Personalisierungsserver 220 gegenüber dem mobilen Endgerät authentifiziert. Der Personalisierungsserver 220 kann den ersten kanalspezifischen ephemeren symmetrischen kryptographischen Sitzungsschlüssel nur berechnen, wenn er über einen privaten kryptographischen Schlüssel verfügt, mit welchem er den von dem mobilen Endgerät empfangenen ersten Zufallswert entschlüsseln kann. Somit ist nur der im Besitz des entsprechenden privaten kryptographischen Schlüssels befindliche Personalisierungsserver 220, welchem das Zertifikat des Personalisierungsservers 220 zugeordnet ist, zu einer verschlüsselten Kommunikation über den verschlüsselten Kommunikationskanal in der Lage.

Zum Freigeben eines Aufbauens eines ersten verschlüsselten Unterkanals wird in Schritt 404 der Nutzer des mobilen Endgeräts durch den ID-Token 200 unter Verwendung des mobilen Endgeräts bzw. des Sicherheitselements 110 authentifiziert. Beispielsweise erfolgt das Authentisieren des Nutzers gegenüber dem ID-Token 200 unter Verwendung des mobilen Endgeräts. Beispielsweise wird unter Verwendung der erfassten Authentifizierungsfaktors des Nutzers ein ephemerer symmetrischer kryptographischer Schlüssel abgeleitet. Das mobile Endgerät empfängt einen Zufallswert von dem ID-Token 200, welcher mit demselben ephemeren symmetrischen kryptographischen Schlüssel verschlüsselt ist. Den entsprechenden ephemeren symmetrischen kryptographischen Schlüssel leitet der ID-Token 200 beispielsweise aus einem Referenzwert für den Authentifizierungsfaktor ab oder der entsprechend abgeleitete ephemere symmetrische kryptographische Schlüssel ist auf dem ID-Token 200 gespeichert. Ist das mobile Endgerät dazu in der Lage, den empfangenen verschlüsselten Zufallswert korrekt zu entschlüsseln, stellt dies einen Nachweis dar, dass dem mobilen Endgerät der korrekte Authentifizierungsfaktor vorliegt. Das mobile Endgerät erzeugt ein ephemeres asymmetrisches Schlüsselpaar, dessen öffentlichen kryptographischen Schlüssel das mobile Endgerät an den ID-Token 200 sendet. Im Gegenzug empfängt das mobile Endgerät den öffentlichen kryptographischen Schlüssel des ID-Tokens 200. An dieser Stelle des Verfahrens sind mithin keine statischen kryptographischen Schlüssel notwendig, sondern es können ausschließlich zufallsbasiert erzeugte ephemere asymmetrische Schlüsselpaar verwendet werden. Das mobile Endgerät erzeugt unter Verwendung des entschlüsselten Zufallswerts, des ephemeren privaten kryptographischen Schlüssels des ID-Anwendungsprogramms sowie des ephemeren öffentlichen kryptographischen Schlüssels des ID-Tokens 200 ein mit dem ID-Token 200 geteiltes Geheimnis. Der ID-Token 200 ist ebenfalls dazu in der Lage, das entsprechende Geheimnis unter Verwendung des von ihm erzeugten Zufallswerts, des ephemeren privaten kryptographischen Schlüssels des ID-Tokens 200 sowie des von dem mobilen Endgerät empfangenen ephemeren öffentlichen kryptographischen Schlüssels des mobilen Endgeräts zu berechnen.

Das mobile Endgerät kann nun das so erzeugte geteilte Geheimnis zum Berechnen eines gemeinsamen Authentisierungsschlüssels zum gegenseitigen Authentisieren von ID-Anwendungsprogramm und ID-Token 200 verwenden. So kann beispielsweise das mobile Endgerät einen ersten Authentisierungstoken unter Verwendung des entsprechenden Authentisierungsschlüssels und des ephemeren öffentlichen kryptographischen Schlüssels des ID-Tokens 200 erzeugen. Der entsprechende Authentisierungstoken kann von dem mobilen Endgerät an das ID-Token 200 gesendet werden, welches den empfangenen Authentisierungstoken unter Verwendung des gemeinsamen Authentisierungsschlüssels und des ephemeren privaten kryptographischen Schlüssels des ID-Tokens 200 verifizieren kann. Somit kann sich das mobile Endgerät gegenüber dem ID-Token 200 authentisieren. Ebenso kann im Gegenzug der ID-Token 200 einen Authentisierungstoken an das mobile Endgerät senden. Das mobile Endgerät empfängt den Authentisierungstoken, welcher beispielsweise unter Verwendung des geteilten Geheimnisses sowie den ephemeren öffentlichen kryptographischen Schlüssel des mobilen Endgeräts erzeugt ist. Unter Verwendung des Authentisierungsschlüssels und des öffentlichen kryptographischen Schlüssels des ID-Anwendungsprogramms kann der Authentisierungstoken verifiziert werden.

In Schritt 406 wird auf eine erfolgreiche Authentifizierung des Nutzers in Schritt 404 hin ein erster verschlüsselter Unterkanal aufgebaut. Der Aufbau des ersten verschlüsselten Unterkanals umfasst beispielsweise ein gegenseitiges Authentisieren von ID-Token 200 und Personalisierungsserver 220 sowie ein Aushandeln eines kryptographischen Schlüssels zum Verschlüsseln des entsprechenden Unterkanals.

Beispielsweise wird zunächst der Personalisierungsserver 220 durch den ID-Token 200 in kryptographisch gesicherter Weise authentifiziert. Hierzu empfängt der ID-Token 200 beispielsweise ein Zertifikat des Personalisierungsservers 220, welches einen öffentlichen kryptographischen Schlüssel des Personalisierungsservers 220 zum Authentifizieren bereitstellt. Der ID-Token 200 verifiziert die Signatur des empfangenen Zertifikats. Beispielsweise wird das entsprechende Zertifikat als Teil einer Zertifikatskette empfangen, für deren Prüfung entsprechende Signaturprüfschlüssel, insbesondere Wurzelsignaturprüfschlüssel, auf dem ID-Token 200 hinterlegt sind. Somit kann der ID-Token 200 die Authentizität des bereitgestellten Zertifikats anhand der Zertifikatskette, beispielsweise einer PKI, verifizieren. Ferner empfängt der ID-Token 200 beispielsweise einen ephemeren öffentlichen kryptographischen Schlüssel des Personalisierungsservers 220. Beispielsweise empfängt der ID-Token 200 den ephemeren öffentlichen kryptographischen Schlüssel des Personalisierungsservers 220 in komprimierter Form. Im Gegenzug zum Empfang des Zertifikats des Personalisierungsservers 220 erzeugt der ID-Token 200 einen Zufallswert, welchen er als Challenge über den verschlüsselten Kommunikationskanal an den Personalisierungsserver 220 sendet. Der Personalisierungsserver 220 erstellt unter Verwendung eines privaten kryptographischen Schlüssels, welcher mit dem öffentlichen kryptographischen Schlüssel des zuvor bereitgestellten Zertifikats ein asymmetrisches Schlüsselpaar bildet, eine Signatur der Challenge als Response auf die Challenge. Beispielsweise wird zum Erzeugen der Response eine Datenkombination signiert, welche den Zufallswert als Challenge und den ephemeren öffentlichen kryptographischen Schlüssel des Personalisierungsservers 220, beispielsweise in komprimierter Form, umfasst. Der ID-Token 200 empfängt die entsprechende Signatur über den verschlüsselten Kommunikationskanal und prüft mit dem zuvor empfangenen öffentlichen kryptographischen Schlüssel des Personalisierungsservers 220 als Signaturprüfschlüssel. Hierzu verwendet der ID-Token 200 beispielsweise ferner den zuvor gesendeten Zufallswert sowie den zuvor als Challenge empfangenen ephemeren öffentlichen kryptographischen Schlüssel des Personalisierungsservers 220.

Anschließend authentisiert sich der ID-Token 200 in kryptographisch gesicherter Weise gegenüber dem Personalisierungsserver 220. Hierzu sendet der ID-Token 200 einen öffentlichen kryptographischen Schlüssel an den Personalisierungsserver 220. Dies erfolgt über den verschlüsselten Kommunikationskanal. Im Gegenzug empfängt der ID-Token 200 einen ephemeren öffentlichen kryptographischen Schlüssel des Personalisierungsservers 220 über den verschlüsselten Kommunikationskanal. Der ID-Token 200 berechnet ein mit dem Personalisierungsserver 220 geteiltes Geheimnis unter Verwendung des privaten kryptographischen Schlüssels des ID-Tokens 200 und des empfangen ephemeren öffentlichen kryptographischen Schlüssels des Personalisierungsservers 220. Der Personalisierungsserver 220 kann dasselbe geteilte Geheimnis unter Verwendung des öffentlichen kryptographischen Schlüssels des ID-Tokens 200 und des ephemeren privaten kryptographischen Schlüssels des Personalisierungsservers 220 berechnen. Der ID-Token 200 erzeugt einen Zufallswert, welchen er zum Berechnen eines gemeinsamen Authentisierungsschlüssels verwendet. Der Authentisierungsschlüssel dient zum Authentisieren von Daten, welche über den verschlüsselten Unterkanal gesendet werden. Den entsprechenden gemeinsamen Authentisierungsschlüssel erzeugt der ID-Token 200 unter Verwendung des Zufallswerts und des geteilten Geheimnisses. Ferner erzeugt der ID-Token 200 einen Authentisierungstoken unter Verwendung des entsprechenden Authentisierungsschlüssels und des ephemeren Schlüssels des Personalisierungsservers 220. Den so erzeugten Authentisierungstoken sendet der ID-Token 200 zusammen mit dem Zufallswert an den Personalisierungsserver 220 im Kommunikationskanal. Der Personalisierungsserver 220 wird durch den Empfang des Zufallswerts dazu in die Lage versetzt, ebenfalls den Authentisierungsschlüssel unter Verwendung des geteilten Geheimnisses zu berechnen. Mit diesem gemeinsamen Authentisierungsschlüssel und dem ephemeren öffentlichen kryptographischen Schlüssel des Personalisierungsservers 220 kann der Personalisierungsserver 220 den empfangenen Authentisierungstoken verifizieren. Ist die Verifikation erfolgreich, so ist auch der ID-Token 200 erfolgreich gegenüber dem Personalisierungsserver 220 authentisiert und eine erfolgreiche gegenseitige Authentisierung von ID-Token 200 und Personalisierungsserver 220 verwirklicht. Ferner kann der so berechnete gemeinsame Authentisierungsschlüssel zum Authentisieren von Daten verwendet werden, welche über den verschlüsselten Unterkanal zwischen ID-Token 200 und Personalisierungsserver 220 ausgetauscht werden.

Ferner können der ID-Token 200 und der Personalisierungsserver 220 jeweils für sich den kanalspezifischen ephemeren symmetrischen kryptographischen Sitzungsschlüssel zum Verschlüsseln des ersten Unterkanals unter Verwendung des geteilten Geheimnisses und des Zufallswerts erzeugen.

Den so aufgebauten ersten verschlüsselten Unterkanal zwischen dem Personalisierungsserver 220 und dem ID-Token 200 innerhalb des verschlüsselten Kommunikationskanal zwischen dem Personalisierungsserver 220 und dem mobilen Endgerät bzw. dem Sicherheitselement 110 verwendet der Personalisierungsserver 220 in Schritt 408 zum Auslesen der Attribute aus dem ID-Token 200 über das mobile Endgerät.

Zum Einbringen der ausgelesenen Attribute wird ein zweiter verschlüsselter Unterkanal zwischen dem Sicherheitsapplet 114 des Sicherheitselements und dem Personalisierungsserver 220 aufgebaut. In Schritt 410 erfolgt beispielsweise eine Authentifizierung des Nutzers durch das Sicherheitselement 110, welches dem Sicherheitsapplet des Sicherheitselements 112 gegenüber die erfolgreiche Authentifizierung, beispielsweise mittels eines Challenge-Response-Verfahrens, bestätigt.

In Schritt 412 wird auf eine erfolgreiche Authentifizierung des Nutzers in Schritt 410 hin ein zweiter verschlüsselter Unterkanal aufgebaut. Der Aufbau des zweiten verschlüsselten Unterkanals umfasst beispielsweise ein gegenseitiges Authentisieren von Sicherheitsapplets und Personalisierungsserver 220 sowie ein Aushandeln eines kryptographischen Schlüssels zum Verschlüsseln des entsprechenden Unterkanals.

Zunächst wird beispielsweise der Personalisierungsserver 220 durch das erste Sicherheitselement 112 bzw. das Sicherheitsapplet 114 in kryptographisch gesicherter Weise authentifiziert. Hierzu empfängt das zu personalisierende Sicherheitselement 112 zunächst ein Zertifikat des Personalisierungsservers 220 über den verschlüsselten Kommunikationskanal empfängt. Das entsprechende Zertifikat kann von dem Sicherheitselement 112verifiziert werden. Beispielsweise wird das entsprechende Zertifikat als Teil einer Zertifikatskette bereitgestellt, welche das Sicherheitselement 112 mit hinterlegten Wurzelsignaturprüfschlüsseln verifizieren kann. Somit kann das Sicherheitselement 112 die Authentizität des bereitgestellten Zertifikats anhand der Zertifikatskette, beispielsweise einer PKI, verifizieren. Ferner empfängt das Sicherheitselement 112 einen ephemeren öffentlichen kryptographischen Schlüssel des Personalisierungsservers 220. Beispielsweise empfängt das Sicherheitselement 112 den ephemeren öffentlichen kryptographischen Schlüssel des Personalisierungsservers 220 in komprimierter Form. Im Gegenzug zum Empfang des Zertifikats des Personalisierungsservers erzeugt das Sicherheitselement 112 einen Zufallswert und sendet den entsprechenden Zufallswert als Challenge an den Personalisierungsserver 220. In Antwort auf das Senden des Zufallswerts als Challenge empfängt das Sicherheitselement 112 über den verschlüsselten Kommunikationskanal von dem Personalisierungsserver 220 eine Signatur der Challenge als Response. Zum Erstellen der Signatur wird der private kryptographische Schlüssel des Personalisierungsservers 220 verwendet, welcher mit dem öffentlichen kryptographischen Schlüssel des zuvor bereitgestellten Zertifikats ein asymmetrisches Schlüsselpaar bildet. Beispielsweise wird zum Erzeugen der Response eine Datenkombination signiert. Die entsprechende Datenkombination umfasst beispielsweise den zuvor als Challenge gesendeten Zufallswert sowie den ephemeren öffentlichen kryptographischen Schlüssel des Personalisierungsservers 220, beispielsweise in komprimierter Form. Das Sicherheitselement 112 kann unter Verwendung des zuvor empfangenen öffentlichen kryptographischen Schlüssels des Personalisierungsservers 220 als Signaturprüfschlüssel die entsprechende Signatur prüfen. Hierzu verwendet das Sicherheitselement 112 beispielsweise ferner den ephemeren öffentlichen kryptographischen Schlüssel des Personalisierungsservers 220 und den zuvor als Challenge gesendeten Zufallswert. Ist die Signaturprüfung erfolgreich, so gilt der Personalisierungsserver 220 als erfolgreich authentifiziert.

Anschließend authentisiert sich das Sicherheitselement 112 bzw. das Sicherheitsapplet 114 in kryptographisch gesicherter Weise gegenüber dem Personalisierungsserver 220. Hierzu verwendet das entsprechende zu personalisierende Sicherheitselement 112 bzw. das Sicherheitsapplet 114 zunächst einen hinterlegten initialen privaten kryptographischen Schlüssel des Sicherheitsapplets 114. Der entsprechende initiale private kryptographische Schlüssel wird beispielsweise im Zuge einer Provisionierung des Sicherheitsapplets 114auf Sicherheitselement 112 hinterlegt. Beispielsweise wird ein den initialen privaten kryptographischen Schlüssel umfassendes asymmetrisches kryptographisches Schlüsselpaar des Sicherheitsapplets 114 hinterlegt. Zum Authentisieren des Sicherheitsapplets 114 empfängt das entsprechende Sicherheitsapplet 114 zunächst beispielsweise einen zum Zwecke des Authentisierens erzeugten ephemeren öffentlichen kryptographischen Schlüssel von dem Personalisierungsserver 220. Den entsprechenden ephemeren öffentlichen kryptographischen Schlüssel erzeugt der Personalisierungsserver 220 beispielsweise für die Authentifizierung des zu personalisierenden Sicherheitsapplets 114. Den ephemeren öffentlichen kryptographischen Schlüssel empfängt das Sicherheitsapplet 114 beispielsweise über den verschlüsselten Kommunikationskanal. Das Sicherheitsapplet 114 112 berechnet ein geteiltes Geheimnis unter Verwendung des initialen privaten kryptographischen Schlüssels des Sicherheitsapplets 114 und des empfangenen ephemeren öffentlichen kryptographischen Schlüssels des Personalisierungsservers 220. Das zu personalisierende Sicherheitsapplet 114 erzeugt einen Zufallswert. Den entsprechenden Zufallswert verwendet das zu personalisierende Sicherheitsapplet 114 zum Erzeugen eines gemeinsamen Authentisierungsschlüssels. Zum Erzeugen des entsprechenden gemeinsamen Authentisierungsschlüssels wird ferner das geteilte Geheimnis verwendet. Zudem erzeugt das Sicherheitsapplet 114 einen Authentisierungstoken. Den entsprechenden Authentisierungstoken erzeugt das Sicherheitsapplets 114 unter Verwendung des zuvor empfangenen ephemeren öffentlichen kryptographischen Schlüssels des Personalisierungsservers 220 sowie des zuvor erzeugten gemeinsamen Authentisierungsschlüssels. Diesen Authentisierungstoken sendet das zu personalisierende Sicherheitsapplet 114 zusammen dem Zufallswert über den verschlüsselten Kommunikationskanal an den Personalisierungsserver 220. Der Personalisierungsserver 220 kann zunächst ebenfalls das geteilte Geheimnis berechnen. Hierzu verwendet der Personalisierungsserver 220 einen initialen öffentlichen kryptographischen Schlüssel des Sicherheitsapplets 114, welcher dem Personalisierungsserver 220 bekannt ist. Beispielsweise wurde der entsprechende initiale öffentliche kryptographische Schlüssel im Zuge einer Provisionierung des zu personalisierenden Sicherheitsapplets 114 erzeugt und dem Personalisierungsserver 220 zur Verfügung gestellt. Ferner verwendet der Personalisierungsserver 220 den ephemeren privaten kryptographischen Schlüssel des Personalisierungsservers 220 zum Berechnen des geteilten Geheimnisses. Mit dem entsprechenden geteilten Geheimnis ist der Personalisierungsserver 220 dazu in der Lage, den gemeinsamen Authentisierungsschlüssel zu berechnen. Hierzu verwendet der Personalisierungsserver 220 den empfangenen Zufallswert und das zuvor berechnete geteilte Geheimnis. Somit kann der Personalisierungsserver 220 den empfangenen Authentisierungstoken verifizieren unter Verwendung des gemeinsamen Authentisierungsschlüssels und des ephemeren öffentlichen kryptographischen Schlüssels des Personalisierungsservers 220.

Ferner können das Sicherheitsapplet 114 des Sicherheitselements 112 und der Personalisierungsserver 220 jeweils für sich den kanalspezifischen ephemeren symmetrischen kryptographischen Sitzungsschlüssel zum Verschlüsseln des zweiten Unterkanals unter Verwendung des geteilten Geheimnisses und des Zufallswerts erzeugen. Den so aufgebauten zweiten verschlüsselten Unterkanal zwischen dem Personalisierungsserver 220 und dem Sicherheitsapplet 114 des Sicherheitselements 112 innerhalb des verschlüsselten Kommunikationskanal verwendet der Personalisierungsserver 220 in Schritt 414 zum Einbringen der Attribute aus dem ID-Token 200 das in zu personalisierende Sicherheitsapplet 114 des ersten Sicherheitselements 112.

### Bezugszeichenliste

- 100: mobiles Endgerät
- 102: Prozessor
- 104: Speicher
- 106: Betriebssystem
- 108: ID-Anwendungsprogramm
- 110: Sicherheitselement
- 112: Sicherheitselement
- 114: Sicherheitsapplet
- 116: Nutzerschnittstelle
- 118: Authentifizierungssensor
- 120: Kommunikationsschnittstelle
- 150: Netzwerk
- 160: verschlüsselter Kommunikationskanal
- 162: verschlüsselter Unterkanal
- 164: verschlüsselter Unterkanal
- 170: System
- 200: ID-Token
- 202: Prozessor
- 204: Speicher
- 205: geschützter Speicherbereich
- 206: Attribute
- 208: Programminstruktionen
- 210: Kommunikationsschnittstelle
- 220: Personalisierungsserver
- 222: Prozessor
- 224: Speicher
- 226: Zertifikat
- 228: Programminstruktionen
- 230: Kommunikationsschnittstelle
- 240: ID-Provider-Server
- 242: Prozessor
- 244: Speicher
- 246: Zertifikat
- 248: Programminstruktionen
- 250: Kommunikationsschnittstelle
- 260: Service-Provider-Server
- 262: Prozessor
- 264: Speicher
- 266: Programminstruktionen
- 270: Kommunikationsschnittstelle

## Patentansprüche

1. Verfahren zum Personalisieren eines Sicherheitsapplets (114), welches auf einem ersten Sicherheitselement (112) eines mobilen Endgeräts (100) installierten ist, unter Verwendung eines ersten ID-Tokens (200) und eines Personalisierungsservers (220), wobei auf dem mobilen Endgerät (100) ein ID-Anwendungsprogramm (108) installiert ist, welchem das Sicherheitsapplet (114) zugeordnet ist, wobei in dem ersten ID-Token (200) erste Attribute (206) eines Nutzers gespeichert sind,
wobei das Personalisieren umfasst:
• Aufbauen eines verschlüsselten Kommunikationskanals (160) zwischen dem mobilen Endgerät (100) und dem Personalisierungsserver (220) über ein Netzwerk (150), wobei zum Aufbauen des verschlüsselten Kommunikationskanals (160) das ID-Anwendungsprogramm (108) verwendet wird,
• Aufbauen eines ersten verschlüsselten Unterkanals (162) zwischen dem ersten ID-Token (200) und dem Personalisierungsserver (220) innerhalb des verschlüsselten Kommunikationskanals (160) über das mobile Endgerät (100), wobei zum Aufbauen des ersten verschlüsselten Unterkanals (162) das ID-Anwendungsprogramm (108) verwendet wird,
• Auslesen von ein oder mehreren der ersten Attribute (206) aus dem ersten ID-Token (200) durch den Personalisierungsserver (220) über den ersten verschlüsselten Unterkanal (162) innerhalb des verschlüsselten Kommunikationskanals (160),
• Aufbauen eines zweiten verschlüsselten Unterkanals (164) zwischen dem Sicherheitsapplet (114) des ersten Sicherheitselements (112) und dem Personalisierungsserver (220) innerhalb des verschlüsselten Kommunikationskanals (160), wobei zum Aufbauen des zweiten verschlüsselten Unterkanals (164) das ID-Anwendungsprogramm (108) verwendet wird,
• Empfangen der ausgelesenen ersten Attribute (206) durch das Sicherheitsapplet (114) des ersten Sicherheitselements (112) von dem Personalisierungsserver (220) über den zweiten verschlüsselten Unterkanal (164) innerhalb des verschlüsselten Kommunikationskanals (160),
• Speichern der empfangenen ersten Attribute (206) durch das Sicherheitsapplet (114), wobei das ID-Anwendungsprogramm (108) dazu konfiguriert ist, die ersten Attribute (206) zum Nachweis einer Identität des Nutzers gegenüber einem weiteren Computersystem zu verwenden.

2. Verfahren nach Anspruch 1, wobei der verschlüsselte Kommunikationskanal (160) mit einem ersten kanalspezifischen ephemeren symmetrischen kryptographischen Sitzungsschlüssel verschlüsselt ist, wobei der erste verschlüsselte Unterkanal (162) mit einem zweiten kanalspezifischen ephemeren symmetrischen kryptographischen Sitzungsschlüssel verschlüsselt ist, wobei der zweite verschlüsselte Unterkanal (162) mit einem dritten kanalspezifischen ephemeren symmetrischen kryptographischen Sitzungsschlüssel verschlüsselt ist.

3. Verfahren nach einem der vorangehenden Ansprüche, wobei es sich bei der Verschlüsselung des verschlüsselten Kommunikationskanals (160) um eine Ende-zu-Ende-Verschlüsselung zwischen dem mobilen Endgerät (100) und dem Personalisierungsserver (220) handelt, und/oder
wobei es sich bei der Verschlüsselung des ersten verschlüsselten Unterkanals (162) um eine Ende-zu-Ende-Verschlüsselung zwischen dem ersten ID-Token (200) und dem Personalisierungsserver (220) handelt, und/oder
wobei es sich bei der Verschlüsselung des zweiten verschlüsselten Unterkanals (164) um eine Ende-zu-Ende-Verschlüsselung zwischen dem Sicherheitsapplet (114) und dem Personalisierungsserver (220) handelt, und/oder

4. Verfahren nach einem der vorangehenden Ansprüche, wobei das Personalisieren ferner umfasst:
• Erzeugen eines dem ID-Anwendungsprogramm (108) zugeordneten asymmetrischen kryptographischen Schlüsselpaars durch das Sicherheitsapplet (114) des ersten Sicherheitselements (112), welches einen privaten kryptographischen Schlüssel und einen öffentlichen kryptographischen Schlüssel des ID-Anwendungsprogramms (108) umfasst, wobei das asymmetrische Schlüsselpaar zu einem Authentisieren des ID-Anwendungsprogramms (108) im Zuge einer Verwendung der ersten Attribute (206) dient, und/oder
wobei das Personalisieren ferner umfasst:
• Empfangen ein oder mehrere Wurzelsignaturprüfschlüssel durch das Sicherheitsapplet (114) des ersten Sicherheitselements (112) von dem Personalisierungsserver (220) über den zweiten verschlüsselten Unterkanal (164) innerhalb des verschlüsselten Kommunikationskanals (160), wobei die empfangenen Wurzelsignaturprüfschlüssel zum Verifizieren von Zertifikatsignaturen ein oder mehrerer Wurzelinstanzen dienen, welche Zertifikate aufweisen, die jeweils im Zuge eines Auslesens der ersten Attribute (206) zum Authentisieren eines auslesenden Computersystems gegenüber dem ID-Anwendungsprogramm (108) verwendet werden,
• Speichern der empfangenen Wurzelsignaturprüfschlüssel durch das Sicherheitsapplet (114) in dem ersten Sicherheitselement (112), und/oder
wobei das Personalisieren ferner umfasst:
• Empfangen einer Signatur der ersten Attribute (206) von dem Personalisierungsserver (220) durch das Sicherheitsapplet (114) des ersten Sicherheitselements (112) über den zweiten verschlüsselten Unterkanal (164) innerhalb des verschlüsselten Kommunikationskanals (160), wobei die Signatur als Authentizitätsnachweis der ersten Attribute (206) dient,
• Speichern der empfangenen Signatur der ersten Attribute (206) durch das Sicherheitsapplet (114) in dem ersten Sicherheitselement (112).

5. Verfahren nach einem der Ansprüche 2 bis 4, wobei das Aufbauen des verschlüsselten Kommunikationskanals (160) ein Aushandeln des ersten kanalspezifischen ephemeren symmetrischen kryptographischen Sitzungsschlüssels umfasst.

6. Verfahren nach Anspruch 5, wobei das Aushandeln des ersten kanalspezifischen ephemeren symmetrischen kryptographischen Sitzungsschlüssels umfasst:
• Erzeugen eines ersten Zufallswerts durch das mobile Endgerät (100),
• Erzeugen des ersten kanalspezifischen ephemeren symmetrischen kryptographischen Sitzungsschlüssel unter Verwendung des ersten Zufallswerts durch das mobile Endgerät (100),
• Empfangen eines ersten Zertifikats (226) des Personalisierungsservers (220) mit einem ersten öffentlichen kryptographischen Schlüssel eines ersten asymmetrischen kryptographischen Schlüsselpaars des Personalisierungsservers (220) durch das mobile Endgerät (100) von dem Personalisierungsserver (220),
• Verschlüsseln des ersten Zufallswerts unter Verwendung des empfangenen ersten öffentlichen kryptographischen Schlüssels des Personalisierungsservers (220) durch das mobile Endgerät (100),
• Senden des verschlüsselten ersten Zufallswerts an den Personalisierungsserver (220) durch das mobile Endgerät (100) zum Erzeugen des ersten kanalspezifischen ephemeren symmetrischen kryptographischen Sitzungsschlüssel durch den Personalisierungsserver (220).

7. Verfahren nach Anspruch 6, wobei das Aufbauen des verschlüsselten Kommunikationskanals (160) ferner ein gegenseitiges Authentisieren des ID-Anwendungsprogramms (108) des mobilen Endgeräts (100) und des Personalisierungsservers (220) umfasst.

8. Verfahren nach Anspruch 7, wobei das mobile Endgerät (100) ferner ein zweites Sicherheitselement (110) umfasst, wobei das zweite Sicherheitselement (110) einen ersten initialen privaten kryptographischen Schlüssel eines ersten initialen asymmetrischen kryptographischen Schlüsselpaars des ID-Anwendungsprogramms (108) umfasst, wobei das mobile Endgerät (100) ferner ein initiales Zertifikat des ID-Anwendungsprogramms (108) umfasst, welches den initialen öffentlichen kryptographischen Schlüssel des initialen asymmetrischen kryptographischen Schlüsselpaars des ID-Anwendungsprogramms (108) umfasst,
wobei das mobile Endgerät (100) zum Authentisieren gegenüber dem Personalisierungsserver (220) das initiale Zertifikat des ID-Anwendungsprogramms (108) an den Personalisierungsserver (220) sendet sowie eine von dem zweiten Sicherheitselement (110) mit dem ersten initialen privaten kryptographischen Schlüssel des ID-Anwendungsprogramms (108) signierte Nachricht.

9. Verfahren nach Anspruch 8, wobei das mobile Endgerät (100) ferner ein oder mehrere Authentifizierungssensoren (118) zum Erfassen von ein oder mehreren Authentifizierungsfaktoren des Nutzers umfasst, wobei ein auf dem mobilen Endgerät (100) installiertes Betriebssystem (106) dazu konfiguriert ist, die Authentifizierungssensor (118) zu steuern, wobei das zweite Sicherheitselement (110) dem Betriebssystem (106) zugeordnet ist, wobei Voraussetzung für das Signieren mit dem ersten initialen privaten kryptographischen Schlüssel des ID-Anwendungsprogramms (108) eine erfolgreiche Authentifizierung des Nutzers gegenüber dem zweiten Sicherheitselement (110) ist, wobei der Nutzer auf dem mobilen Endgerät (100) registriert und in dem zweiten Sicherheitselement (110) zumindest ein Referenzwert des registrierten Nutzers zum Verifizieren zumindest eines erfassten Authentifizierungsfaktors gespeichert ist.

10. Verfahren nach einem der vorangehenden Ansprüche, wobei das Aufbauen des ersten verschlüsselten Unterkanals (162) ein Authentisieren des Nutzers gegenüber dem ID-Token (200) über das mobile Endgerät (100) umfasst,
wobei das Authentisieren des Nutzers gegenüber dem ID-Token (200) insbesondere umfasst:
• Empfangen eines weiteren von den ein oder mehreren Authentifizierungssensoren (118) erfassten Authentifizierungsfaktors des Nutzers durch das ID-Anwendungsprogramm (108),
• Erzeugen eines symmetrischen kryptographischen Schlüssels durch das zweite Sicherheitselement (110) unter Verwendung des empfangenen weiteren Authentifizierungsfaktor,
• Empfangen eines verschlüsselten zweiten Zufallswert durch das ID-Anwendungsprogramm (108) von dem ID-Token (200), wobei der verschlüsselte zweite Zufallswert unter Verwendung des symmetrischen kryptographischen Schlüssels verschlüsselt ist, welchen der ID-Token (200) unter Verwendung eines in dem ID-Token (200) zum Verifizieren des weiteren Authentifizierungsfaktors gespeicherten weiteren Referenzwert des registrierten Nutzers erzeugt,
• Entschlüsseln des empfangenen verschlüsselten zweiten Zufallswerts durch das zweite Sicherheitselement (110) unter Verwendung des erzeugten symmetrischen kryptographischen Schlüssels,
• Erzeugen eines ersten ephemeren asymmetrischen kryptographischen Schlüsselpaars des ID-Anwendungsprogramms (108) durch das zweite Sicherheitselement (110), welches einen ersten ephemeren privaten kryptographischen Schlüssel und einen ersten ephemeren öffentlichen kryptographischen Schlüssel des ID-Anwendungsprogramms (108) umfasst,
• Senden des ersten ephemeren öffentlichen kryptographischen Schlüssels des ID-Anwendungsprogramms (108) an den ID-Token (200),
• Empfangen eines ephemeren öffentlichen kryptographischen Schlüssels des ID-Tokens (200),
• Erzeugen eines mit dem ID-Token (200) geteilten ersten Geheimnisses unter Verwendung des entschlüsselten zweiten Zufallswerts, des ersten ephemeren privaten kryptographischen Schlüssels des ID-Anwendungsprogramms (108) und des ephemeren öffentlichen kryptographischen Schlüssels des ID-Tokens (200),
• Erzeugen eines ersten gemeinsamen Authentisierungsschlüssel zum gegenseitigen Authentisieren von ID-Anwendungsprogramm (108) und ID-Token (200) durch das zweite Sicherheitselement (110) unter Verwendung des geteilten ersten Geheimnisses,
• Erzeugen eines ersten Authentisierungstoken unter Verwendung des ersten Authentisierungsschlüssels und des ephemeren öffentlichen kryptographischen Schlüssels des ID-Tokens (200) durch das zweite Sicherheitselement (110),
• Senden des ersten Authentisierungstoken an den ID-Token (200) durch das zweite Sicherheitselement (110),
• Empfangen eines zweiten Authentisierungstoken von dem ID-Token (200) durch das zweite Sicherheitselement (110),
• Verifizieren des empfangenen zweiten Authentisierungstoken unter Verwendung des ersten Authentisierungsschlüssels und des ersten ephemeren öffentlichen kryptographischen Schlüssels des ID-Anwendungsprogramms (108), und/oder
wobei das Aufbauen des ersten verschlüsselten Unterkanals (162) ein Authentifizieren des Personalisierungsservers (220) durch den ID-Token (200) über das mobile Endgerät (100) umfasst,
wobei das Authentifizieren des Personalisierungsservers (220) durch den ID-Token (200) insbesondere umfasst:
• Empfangen eines zweiten Zertifikats (226) des Personalisierungsservers (220), welches einen zweiten öffentlichen kryptographischen Schlüssel eines zweiten asymmetrischen kryptographischen Schlüsselpaars des Personalisierungsservers (220) umfasst, über den verschlüsselten Kommunikationskanal (160),
• Verifizieren einer Signatur des empfangenen zweiten Zertifikats (226) des Personalisierungsservers (220),
• Erzeugen eines dritten Zufallswerts durch den ID-Token (200),
• Senden des dritten Zufallswerts als Challenge an den Personalisierungsserver (220) über den verschlüsselten Kommunikationskanal (160),
• Empfangen einer ersten Signatur der Challenge als Response von dem Personalisierungsserver (220) über den verschlüsselten Kommunikationskanal (160), wobei die Challenge unter Verwendung eines zweiten privaten kryptographischen Schlüssels des Personalisierungsservers (220) signiert ist,
• Verifizieren der empfangenen ersten Signatur unter Verwendung des zweiten öffentlichen kryptographischen Schlüssels des Personalisierungsservers (220) und des gesendeten dritten Zufallswerts, und/oder
wobei das Aufbauen des ersten verschlüsselten Unterkanals (162) ein Authentisieren des ID-Tokens (200) gegenüber dem Personalisierungsserver (220) über das mobile Endgerät (100) umfasst,
wobei das Authentisieren des ID-Tokens (200) gegenüber Personalisierungsserver (220) insbesondere umfasst:
• Senden des öffentlichen kryptographischen Schlüssels des ID-Tokens (200) von dem ID-Token (200) über den verschlüsselten Kommunikationskanal (160) an den Personalisierungsserver (220),
• Empfangenen des zweiten ephemeren öffentlichen kryptographischen Schlüssels des Personalisierungsservers (220) durch den ID-Token (200) von dem Personalisierungsserver (220) über den verschlüsselten Kommunikationskanal (160),
• Erzeugen eines mit dem Personalisierungsserver (220) geteilten zweiten Geheimnisses durch den ID-Token (200) unter Verwendung des privaten kryptographischen Schlüssels des ID-Tokens (200) und des zweiten ephemeren öffentlichen kryptographischen Schlüssels des Personalisierungsservers (220),
• Erzeugen eines vierten Zufallswerts durch den ID-Token (200),
• Erzeugen eines zweiten gemeinsamen Authentisierungsschlüssels zum Authentisieren von über den ersten verschlüsselten Unterkanal (162) gesendeten Daten durch den ID-Token (200), wobei der zweite gemeinsame Authentisierungsschlüssel unter Verwendung des geteilten zweiten Geheimnisses und des vierten Zufallswerts erzeugt wird,
• Erzeugen eines dritten Authentisierungstoken durch den ID-Token (200) unter Verwendung des zweiten Authentisierungsschlüssels und des zweiten ephemeren öffentlichen kryptographischen Schlüssels des Personalisierungsservers (220) zum Authentisieren des ID-Tokens (200) gegenüber dem Personalisierungsserver (220),
• Senden des vierten Zufallswerts zusammen mit dem dritten Authentisierungstoken zum Authentifizieren des ID-Tokens (200) durch den ID-Token (200) über den verschlüsselten Kommunikationskanal (160) an den Personalisierungsserver (220), und/oder
wobei das Aufbauen des zweiten verschlüsselten Unterkanals (164) ein Authentifizieren des Nutzers durch das zweite Sicherheitselement (110) umfasst, wobei das Aufbauen des zweiten verschlüsselten Unterkanals (164) ferner ein Ausführen eines Challenge-Response-Verfahrens zwischen dem zweiten Sicherheitselement (110) und dem ersten Sicherheitselement (112) umfasst, wobei ein erfolgreiches Ausführen des Challenge-Response-Verfahrens eine erfolgreiche Authentifizierung des Nutzers durch das zweite Sicherheitselement (110) bestätigt, und/oder
wobei das Aufbauen des zweiten verschlüsselten Unterkanals (164) ferner ein Authentifizieren des Personalisierungsservers (220) durch das Sicherheitsapplet (114) des ersten Sicherheitselements (112) umfasst,
wobei das Authentifizieren des Personalisierungsservers (220) durch das Sicherheitsapplet (114) des ersten Sicherheitselements (112) insbesondere umfasst:
• Empfangen eines dritten Zertifikats (226) des Personalisierungsservers (220), welches einen dritten öffentlichen kryptographischen Schlüssel des Personalisierungsservers (220) umfasst, durch das Sicherheitsapplet (114) des ersten Sicherheitselements (112) über den verschlüsselten Kommunikationskanal (160),
• Verifizieren einer Signatur des empfangenen dritten Zertifikats (226) des Personalisierungsservers (220) durch das Sicherheitsapplet (114) des ersten Sicherheitselements (112),
• Empfangen eines dritten ephemeren öffentlichen kryptographischen Schlüssels des Personalisierungsservers (220) durch das Sicherheitsapplet (114) des ersten Sicherheitselements (112),
• Erzeugen eines fünften Zufallswerts als Challenge durch das Sicherheitsapplet (114) des ersten Sicherheitselements (112),
• Senden des fünften Zufallswerts durch das Sicherheitsapplet (114) des ersten Sicherheitselements (112) über den verschlüsselten Kommunikationskanal (160) an den Personalisierungsserver (220),
• Empfangen einer zweiten Signatur der Challenge als Response von dem Personalisierungsserver (220), wobei die Challenge unter Verwendung eines dritten ephemeren privaten kryptographischen Schlüssels des Personalisierungsservers (220) signiert ist,
• Verifizieren der empfangenen zweiten Signatur unter Verwendung des dritten öffentlichen kryptographischen Schlüssels des Personalisierungsservers (220) und des gesendeten fünften Zufallswerts.

11. Verfahren nach einem der vorangehenden Ansprüche, wobei das Aufbauen des zweiten verschlüsselten Unterkanals (164) ferner ein Authentisieren des Sicherheitsapplets (114) des ersten Sicherheitselements (112) gegenüber dem Personalisierungsserver (220) umfasst,
wobei das Authentisieren des Sicherheitsapplets (114) des ersten Sicherheitselements (112) gegenüber dem Personalisierungsserver (220) insbesondere umfasst:
• Empfangenen des dritten ephemeren öffentlichen kryptographischen Schlüssels des Personalisierungsservers (220) durch das Sicherheitsapplet (114) des ersten Sicherheitselements (112) von dem Personalisierungsserver (220) über den verschlüsselten Kommunikationskanal (160),
• Erzeugen eines mit dem Personalisierungsserver (220) geteilten dritten Geheimnisses durch das Sicherheitsapplet (114) des ersten Sicherheitselements (112) unter Verwendung des privaten kryptographischen Schlüssels des Sicherheitsapplets (114) des ersten Sicherheitselements (112) und des ephemeren öffentlichen kryptographischen Schlüssels des Personalisierungsservers (220),
• Erzeugen eines sechsten Zufallswerts durch das Sicherheitsapplet (114) des ersten Sicherheitselements (112),
• Erzeugen eines dritten gemeinsamen Authentisierungsschlüssels zum Authentisieren von über den zweiten verschlüsselten Unterkanal (164) gesendeten Daten, wobei der dritte gemeinsame Authentisierungsschlüssel unter Verwendung des geteilten dritten Geheimnisses und des sechsten Zufallswerts erzeugt wird,
• Erzeugen eines vierten Authentisierungstoken durch das Sicherheitsapplet (114) des ersten Sicherheitselements (112) unter Verwendung des dritten Authentisierungsschlüssels und des dritten ephemeren öffentlichen kryptographischen Schlüssels des Personalisierungsservers (220) zum Authentisieren des Sicherheitsapplets (114) des ersten Sicherheitselements (112) gegenüber dem Personalisierungsserver (220),
• Senden des sechsten Zufallswerts zusammen mit dem vierten Authentisierungstoken zum Authentifizieren des Sicherheitsapplets (114) des ersten Sicherheitselements (112) durch das Sicherheitsapplet (114) des ersten Sicherheitselements (112) über den verschlüsselten Kommunikationskanal (160) an den Personalisierungsserver (220), oder
wobei der dritte kanalspezifische ephemere symmetrische kryptographische Sitzungsschlüssel zum Verschlüsseln des zweiten verschlüsselten Unterkanals (164) zwischen dem Sicherheitsapplet (114) des ersten Sicherheitselements (112) und dem Personalisierungsserver (220) als initialer Schlüssel zur Verwendung durch das Sicherheitsapplet (114) in dem ersten Sicherheitselement (112) und in dem Personalisierungsserver (220) hinterlegt ist,
wobei in dem ersten Sicherheitselement (112) zur Verwendung durch das Sicherheitsapplet (114) und in dem Personalisierungsserver (220) insbesondere ferner ein kanalspezifischer ephemerer symmetrischer kryptographischer Authentisierungsschlüssel zum Authentisieren von Daten hinterlegt ist, welche über den entsprechenden. zweiten verschlüsselten Unterkanal (164) übertragen werden

12. Verfahren nach einem der vorangehenden Ansprüche, wobei für die Personalisierung ferner ein zweites ID-Token verwendet wird, wobei die Personalisierung ferner umfasst:
• Aufbauen eines dritten verschlüsselten Unterkanals zwischen dem zweiten ID-Token und dem Personalisierungsserver (220) innerhalb des verschlüsselten Kommunikationskanals (160) über das mobile Endgerät (100), wobei zum Aufbauen des dritten verschlüsselten Unterkanals das ID-Anwendungsprogramm (108) verwendet wird,
• Auslesen von ein oder mehreren der zweiten Attribute aus dem zweiten ID-Token durch den Personalisierungsserver (220) über den dritten verschlüsselten Unterkanal innerhalb des verschlüsselten Kommunikationskanals (160),
• Aufbauen eines vierten verschlüsselten Unterkanals zwischen dem Sicherheitsapplet (114) des ersten Sicherheitselements (112) und dem Personalisierungsserver (220) innerhalb des verschlüsselten Kommunikationskanals (160), wobei zum Aufbauen des vierten verschlüsselten Unterkanals das ID-Anwendungsprogramm (108) verwendet wird,
• Empfangen der ausgelesenen zweiten Attribute durch das Sicherheitsapplet (114) des ersten Sicherheitselements (112) von dem Personalisierungsserver (220) über den vierten verschlüsselten Unterkanal innerhalb des verschlüsselten Kommunikationskanals (160),
• Speichern der empfangenen zweiten Attribute durch das Sicherheitsapplet (114), wobei das ID-Anwendungsprogramm (108) dazu konfiguriert ist, die zweiten Attribute zum Nachweis einer Identität des Nutzers gegenüber einem weiteren Computersystem zu verwenden.

13. Mobiles Endgerät (100), wobei das mobile Endgerät (100) einen Prozessor (102) und einen Speicher (104) umfasst, wobei in dem (104) Speicher ein ID-Anwendungsprogramm (108) gespeichert ist, wobei das mobile Endgerät (100) ferner ein Sicherheitselement (112) mit einem dem ID-Anwendungsprogramm (108) zugeordneten Sicherheitsapplet (114) umfasst, wobei der Prozessor (102) dazu konfiguriert ist, ein Verfahren zum Personalisieren des Sicherheitsapplets (114) unter Verwendung eines ID-Tokens (200) und eines Personalisierungsservers (220) auszuführen, wobei das mobile Endgerät (100) ferner eine Kommunikationsschnittstelle (120) zur kontaktlosen Kommunikation mit dem ID-Token (200) und zur Kommunikation über ein Netzwerk (150) mit dem Personalisierungsserver (220) umfasst,
wobei das Personalisieren umfasst:
• Aufbauen eines verschlüsselten Kommunikationskanals (160) zwischen dem mobilen Endgerät (100) und dem Personalisierungsserver (220) über ein Netzwerk (150), wobei zum Aufbauen des verschlüsselten Kommunikationskanals (160) das ID-Anwendungsprogramm (108) verwendet wird,
• Aufbauen eines ersten verschlüsselten Unterkanals (162) zwischen dem ersten ID-Token (200) und dem Personalisierungsserver (220) innerhalb des verschlüsselten Kommunikationskanals (160) über das mobile Endgerät (100), wobei zum Aufbauen des ersten verschlüsselten Unterkanals (162) das ID-Anwendungsprogramm (108) verwendet wird,
• Auslesen von ein oder mehreren der ersten Attribute (206) aus dem ID-Token (200) durch den Personalisierungsserver (220) über den ersten verschlüsselten Unterkanal (162) innerhalb des verschlüsselten Kommunikationskanals (160),
• Aufbauen eines zweiten verschlüsselten Unterkanals (164) zwischen dem Sicherheitsapplet (114) des Sicherheitselements (112) und dem Personalisierungsserver (220) innerhalb des verschlüsselten Kommunikationskanals (160), wobei zum Aufbauen des zweiten verschlüsselten Unterkanals (164) das ID-Anwendungsprogramm (108) verwendet wird,
• Empfangen der ausgelesenen Attribute (206) durch das Sicherheitsapplet (114) des Sicherheitselements (112) von dem Personalisierungsserver (220) über den zweiten verschlüsselten Unterkanal (164) innerhalb des verschlüsselten Kommunikationskanals (160),
• Speichern der empfangenen Attribute (206) durch das Sicherheitsapplet (114), wobei das ID-Anwendungsprogramm (108) dazu konfiguriert ist, die Attribute (206) zum Nachweis einer Identität des Nutzers gegenüber einem weiteren Computersystem zu verwenden.

14. System (170), wobei das System (170) ein mobiles Endgerät (100) nach Anspruch 13 sowie einen Personalisierungsserver (220) umfasst, wobei der Personalisierungsserver (220) zum Auslesen von Attributen (206) aus einem ID-Token (200) über das mobile Endgerät (100) und zum Personalisieren des Sicherheitsapplets (114) des mobilen Endgeräts (100) konfiguriert ist.

15. System (170) nach Anspruch 14, wobei das System (170) ferner den ID-Token (200) umfasst, in welchem die auszulesenden Attribute (206) gespeichert sind.

## Claims

1. A method for personalising a security applet (114) installed on a first security element (112) of a mobile terminal (100), using a first ID token (200) and a personalisation server (220), wherein an ID application program (108) is installed on the mobile terminal (100), to which the security applet (114) is assigned, wherein first attributes (206) of a user are stored in the first ID token (200),
wherein the personalisation comprises:
• establishing an encrypted communication channel (160) between the mobile terminal (100) and the personalisation server (220) via a network (150), wherein the ID application program (108) is used to establish the encrypted communication channel (160),
• establishing a first encrypted subchannel (162) between the first ID token (200) and the personalisation server (220) within the encrypted communication channel (160) via the mobile terminal (100), wherein the ID application program (108) is used to establish the first encrypted subchannel (162),
• reading out one or more of the first attributes (206) from the first ID token (200) by the personalisation server (220) via the first encrypted subchannel (162) within the encrypted communication channel (160),
• establishing a second encrypted subchannel (164) between the security applet (114) of the first security element (112) and the personalisation server (220) within the encrypted communication channel (160), wherein the ID application program (108) is used to establish the second encrypted subchannel (164),
• receiving, by the security applet (114) of the first security element (112), the read-out first attributes (206) from the personalisation server (220) via the second encrypted subchannel (164) within the encrypted communication channel (160),
• storing the received first attributes (206) by the security applet (114), wherein the ID application program (108) is configured to use the first attributes (206) to prove an identity of the user to another computer system.

2. The method according to claim 1, wherein the encrypted communication channel (160) is encrypted with a first channel-specific ephemeral symmetric cryptographic session key, wherein the first encrypted subchannel (162) is encrypted with a second channel-specific ephemeral symmetric cryptographic session key, wherein the second encrypted subchannel (162) is encrypted with a third channel-specific ephemeral symmetric cryptographic session key.

3. The method according to any one of the preceding claims, wherein the encryption of the encrypted communication channel (160) is an end-to-end encryption between the mobile terminal (100) and the personalisation server (220), and/or
wherein the encryption of the first encrypted subchannel (162) is an end-to-end encryption between the first ID token (200) and the personalisation server (220), and/or
wherein the encryption of the second encrypted subchannel (164) is an end-to-end encryption between the security applet (114) and the personalisation server (220).

4. The method according to any one of the preceding claims, wherein the personalisation further comprises:
• generating an asymmetric cryptographic key pair associated with the ID application program (108) by the security applet (114) of the first security element (112) comprising a private cryptographic key and a public cryptographic key of the ID application program (108), wherein the asymmetric key pair is used to authenticate the ID application program (108) in the course of using the first attributes (206), and/or
wherein the personalisation further comprises:
• receiving one or more root signature verification keys by the security applet (114) of the first security element (112) from the personalisation server (220) via the second encrypted subchannel (164) within the encrypted communication channel (160), wherein the received root signature verification keys are for verifying certificate signatures of one or more root instances having certificates each used in the course of a readout of the first attributes (206) for authenticating a reading computer system to the ID application program (108),
• storing the received root signature verification keys by the security applet (114) in the first security element (112), and/or
wherein the personalisation further comprises:
• receiving a signature of the first attributes (206) from the personalisation server (220) by the security applet (114) of the first security element (112) via the second encrypted subchannel (164) within the encrypted communication channel (160), wherein the signature serves as proof of authenticity of the first attributes (206),
• storing the received signature of the first attributes (206) by the security applet (114) in the first security element (112).

5. The method according to any one of claims 2 to 4, wherein establishing the encrypted communication channel (160) comprises negotiating the first channel-specific ephemeral symmetric cryptographic session key.

6. The method according to claim 5, wherein negotiating the first channel-specific ephemeral symmetric cryptographic session key comprises:
• generating a first random value by the mobile terminal (100),
• generating the first channel-specific ephemeral symmetric cryptographic session key using the first random value by the mobile terminal (100),
• receiving a first certificate (226) of the personalisation server (220) with a first public cryptographic key of a first asymmetric cryptographic key pair of the personalisation server (220) by the mobile terminal (100) from the personalisation server (220),
• encrypting the first random value using the received first public cryptographic key of the personalisation server (220) by the mobile terminal (100),
• sending the encrypted first random value to the personalisation server (220) by the mobile terminal (100) for generating the first channel-specific ephemeral symmetric cryptographic session key by the personalisation server (220).

7. The method according to claim 6, wherein establishing the encrypted communication channel (160) further comprises mutually authenticating the ID application program (108) of the mobile terminal (100) and the personalisation server (220).

8. The method according to claim 7, wherein the mobile terminal (100) further comprises a second security element (110), wherein the second security element (110) comprises a first initial private cryptographic key of a first initial asymmetric cryptographic key pair of the ID application program (108), wherein the mobile terminal (100) further comprises an initial certificate of the ID application program (108) comprising the initial public cryptographic key of the initial asymmetric cryptographic key pair of the ID application program (108),
wherein the mobile terminal (100) sends the initial certificate of the ID application program (108) to the personalisation server (220) for authentication to the personalisation server (220) as well as a message signed by the second security element (110) with the first initial private cryptographic key of the ID application program (108).

9. The method according to claim 8, wherein the mobile terminal (100) further comprises one or more authentication sensors (118) for detecting one or more authentication factors of the user, wherein an operating system (106) installed on the mobile terminal (100) is configured to control the authentication sensors (118), wherein the second security element (110) is associated with the operating system (106), wherein a prerequisite for signing with the first initial private cryptographic key of the ID application program (108) is successful authentication of the user with respect to the second security element (110), wherein the user is registered on the mobile terminal (100) and at least one reference value of the registered user is stored in the second security element (110) for verifying at least one detected authentication factor.

10. The method according to any one of the preceding claims, wherein establishing the first encrypted subchannel (162) comprises authenticating the user to the ID token (200) via the mobile terminal (100),
wherein authenticating the user to the ID token (200) in particular comprises:
• receiving, by the ID application program (108), a further authentication factor of the user detected by the one or more authentication sensors (118),
• generating a symmetric cryptographic key by the second security element (110) using the received further authentication factor,
• receiving an encrypted second random value by the ID application program (108) from the ID token (200), wherein the encrypted second random value is encrypted using the symmetric cryptographic key generated by the ID token (200) using a further reference value of the registered user stored in the ID token (200) for verifying the further authentication factor,
• decrypting the received encrypted second random value by the second security element (110) using the generated symmetric cryptographic key,
• generating a first ephemeral asymmetric cryptographic key pair of the ID application program (108) by the second security element (110), which comprises a first ephemeral private cryptographic key and a first ephemeral public cryptographic key of the ID application program (108),
• sending the first ephemeral public cryptographic key of the ID application program (108) to the ID token (200),
• receiving an ephemeral public cryptographic key of the ID token (200),
• generating a first secret shared with the ID token (200) using the decrypted second random value, the first ephemeral private cryptographic key of the ID application program (108) and the ephemeral public cryptographic key of the ID token (200),
• generating a first shared authentication key for mutual authentication of the ID application program (108) and the ID token (200) by the second security element (110) using the shared first secret,
• generating a first authentication token using the first authentication key and the ephemeral public cryptographic key of the ID token (200) by the second security element (110),
• sending the first authentication token to the ID token (200) by the second security element (110),
• receiving a second authentication token from the ID token (200) by the second security element (110),
• verifying the received second authentication token using the first authentication key and the first ephemeral public cryptographic key of the ID application program (108), and/or
wherein establishing the first encrypted subchannel (162) comprises authenticating the personalisation server (220) by the ID token (200) via the mobile terminal (100),
wherein authenticating the personalisation server (220) by the ID token (200) in particular comprises:
• receiving a second certificate (226) of the personalisation server (220), comprising a second public cryptographic key of a second asymmetric cryptographic key pair of the personalisation server (220), via the encrypted communication channel (160),
• verifying a signature of the received second certificate (226) of the personalisation server (220),
• generating a third random value by the ID token (200),
• sending the third random value as a challenge to the personalisation server (220) via the encrypted communication channel (160),
• receiving a first signature of the challenge as a response from the personalisation server (220) via the encrypted communication channel (160), wherein the challenge is signed using a second private cryptographic key of the personalisation server (220),
• verifying the received first signature using the second public cryptographic key of the personalisation server (220) and the transmitted third random value, and/or
wherein establishing the first encrypted subchannel (162) comprises authenticating the ID token (200) to the personalisation server (220) via the mobile terminal (100),
wherein authenticating the ID token (200) to personalisation servers (220) in particular comprises:
• sending the public cryptographic key of the ID token (200) from the ID token (200) via the encrypted communication channel (160) to the personalisation server (220),
• receiving the second ephemeral public cryptographic key of the personalisation server (220) by the ID token (200) from the personalisation server (220) via the encrypted communication channel (160),
• generating a second secret shared with the personalisation server (220) by the ID token (200) using the private cryptographic key of the ID token (200) and the second ephemeral public cryptographic key of the personalisation server (220),
• generating a fourth random value by the ID token (200),
• generating a second shared authentication key for authenticating data sent over the first encrypted subchannel (162) by the ID token (200), wherein the second shared authentication key is generated using the shared second secret and the fourth random value,
• generating a third authentication token by the ID token (200) using the second authentication key and the second ephemeral public cryptographic key of the personalisation server (220) to authenticate the ID token (200) to the personalisation server (220),
• sending the fourth random value together with the third authentication token for authenticating the ID token (200) by the ID token (200) via the encrypted communication channel (160) to the personalisation server (220), and/or
wherein establishing the second encrypted subchannel (164) comprises authenticating the user by the second security element (110), wherein establishing the second encrypted subchannel (164) further comprises executing a challenge-response procedure between the second security element (110) and the first security element (112), wherein a successful execution of the challenge-response procedure confirms a successful authentication of the user by the second security element (110), and/or
wherein establishing the second encrypted subchannel (164) further comprises authenticating the personalisation server (220) by the security applet (114) of the first security element (112),
wherein authenticating the personalisation server (220) by the security applet (114) of the first security element (112) in particular comprises:
• receiving a third certificate (226) of the personalisation server (220), comprising a third public cryptographic key of the personalisation server (220), by the security applet (114) of the first security element (112) via the encrypted communication channel (160),
• verifying a signature of the received third certificate (226) of the personalisation server (220) by the security applet (114) of the first security element (112),
• receiving a third ephemeral public cryptographic key of the personalisation server (220) by the security applet (114) of the first security element (112),
• generating a fifth random value as a challenge by the security applet (114) of the first security element (112),
• sending the fifth random value by the security applet (114) of the first security element (112) via the encrypted communication channel (160) to the personalisation server (220),
• receiving a second signature of the challenge as a response from the personalisation server (220), wherein the challenge is signed using a third ephemeral private cryptographic key of the personalisation server (220),
• verifying the received second signature using the third public cryptographic key of the personalisation server (220) and the sent fifth random value.

11. The method according to any one of the preceding claims, wherein establishing the second encrypted subchannel (164) further comprises authenticating the security applet (114) of the first security element (112) to the personalisation server (220),
wherein authenticating the security applet (114) of the first security element (112) to the personalisation server (220) in particular comprises:
• receiving the third ephemeral public cryptographic key of the personalisation server (220) by the security applet (114) of the first security element (112) from the personalisation server (220) via the encrypted communication channel (160),
• generating a third secret shared with the personalisation server (220) by the security applet (114) of the first security element (112) using the private cryptographic key of the security applet (114) of the first security element (112) and the ephemeral public cryptographic key of the personalisation server (220),
• generating a sixth random value by the security applet (114) of the first security element (112),
• generating a third common authentication key for authenticating data sent over the second encrypted subchannel (164), wherein the third common authentication key is generated using the shared third secret and the sixth random value,
• generating a fourth authentication token by the security applet (114) of the first security element (112) using the third authentication key and the third ephemeral public cryptographic key of the personalisation server (220) to authenticate the security applet (114) of the first security element (112) to the personalisation server (220),
• sending the sixth random value together with the fourth authentication token for authenticating the security applet (114) of the first security element (112) by the security applet (114) of the first security element (112) via the encrypted communication channel (160) to the personalisation server (220), or
wherein the third channel-specific ephemeral symmetric cryptographic session key for encrypting the second encrypted subchannel (164) between the security applet (114) of the first security element (112) and the personalisation server (220) is stored in the first security element (112) and in the personalisation server (220) as an initial key for use by the security applet (114),
wherein in the first security element (112) for use by the security applet (114) and in the personalisation server (220) in particular there is further stored a channel-specific ephemeral symmetric cryptographic authentication key for authenticating data transmitted via the corresponding second encrypted subchannel (164).

12. The method according to any one of the preceding claims, wherein a second ID token is further used for the personalisation, wherein the personalisation further comprises:
• establishing a third encrypted subchannel between the second ID token and the personalisation server (220) within the encrypted communication channel (160) via the mobile terminal (100), wherein the ID application program (108) is used to establish the third encrypted subchannel,
• reading out one or more of the second attributes from the second ID token by the personalisation server (220) via the third encrypted subchannel within the encrypted communication channel (160),
• establishing a fourth encrypted subchannel between the security applet (114) of the first security element (112) and the personalisation server (220) within the encrypted communication channel (160), wherein the ID application program (108) is used to establish the fourth encrypted subchannel,
• receiving the read-out second attributes by the security applet (114) of the first security element (112) from the personalisation server (220) via the fourth encrypted subchannel within the encrypted communication channel (160),
• storing the received second attributes by the security applet (114), wherein the ID application program (108) is configured to use the second attributes to prove an identity of the user to another computer system.

13. A mobile terminal (100), wherein the mobile terminal (100) comprises a processor (102) and a memory (104), wherein the memory (104) stores an ID application program (108), wherein the mobile terminal (100) further comprises a security element (112) having a security applet (114) associated with the ID application program (108), wherein the processor (102) is configured to carry out a method for personalising the security applet (114) using an ID token (200) and a personalisation server (220), wherein the mobile terminal (100) further comprises a communication interface (120) for contactless communication with the ID token (200) and for communication via a network (150) with the personalisation server (220),
wherein the personalisation comprises:
• establishing an encrypted communication channel (160) between the mobile terminal (100) and the personalisation server (220) via a network (150), wherein the ID application program (108) is used to establish the encrypted communication channel (160),
• establishing a first encrypted subchannel (162) between the first ID token (200) and the personalisation server (220) within the encrypted communication channel (160) via the mobile terminal (100), wherein the ID application program (108) is used to establish the first encrypted subchannel (162),
• reading out one or more of the first attributes (206) from the ID token (200) by the personalisation server (220) via the first encrypted subchannel (162) within the encrypted communication channel (160),
• establishing a second encrypted subchannel (164) between the security applet (114) of the security element (112) and the personalisation server (220) within the encrypted communication channel (160), wherein the ID application program (108) is used to establish the second encrypted subchannel (164),
• receiving the read-out attributes (206) by the security applet (114) of the security element (112) from the personalisation server (220) via the second encrypted subchannel (164) within the encrypted communication channel (160),
• storing the received attributes (206) by the security applet (114), wherein the ID application program (108) is configured to use the attributes (206) to prove an identity of the user to another computer system.

14. A system (170), wherein the system (170) comprises a mobile terminal (100) according to claim 13 and a personalisation server (220), wherein the personalisation server (220) is configured to read out attributes (206) from an ID token (200) via the mobile terminal (100) and to personalise the security applet (114) of the mobile terminal (100).

15. The system (170) according to claim 14, wherein the system (170) further comprises the ID token (200) in which the attributes (206) to be read out are stored.

## Revendications

1. Procédé de personnalisation d'une applet de sécurité (114) installée sur un premier élément de sécurité (112) d'un terminal mobile (100), en utilisant un premier jeton d'ID (200) et un serveur de personnalisation (220), dans lequel un programme d'application d'ID (108) est installé sur le terminal mobile (100), auquel l'applet de sécurité (114) est attribué, dans lequel des premiers attributs (206) d'un utilisateur sont stockés dans le premier jeton d'ID (200),
dans lequel la personnalisation comprend les étapes consistant à :
• établir un canal de communication chiffré (160) entre le terminal mobile (100) et le serveur de personnalisation (220) par l'intermédiaire d'un réseau (150), dans lequel le programme d'application d'ID (108) est utilisé pour établir le canal de communication chiffré (160),
• établir un premier sous-canal chiffré (162) entre le premier jeton d'ID (200) et le serveur de personnalisation (220) au sein du canal de communication chiffré (160) par l'intermédiaire du terminal mobile (100), dans lequel le programme d'application d'ID (108) est utilisé pour établir le premier sous-canal chiffré (162),
• faire lire un ou plusieurs des premiers attributs (206) depuis le premier jeton d'ID (200) par le serveur de personnalisation (220) par l'intermédiaire du premier sous-canal chiffré (162) au sein du canal de communication chiffré (160),
• établir un deuxième sous-canal chiffré (164) entre l'applet de sécurité (114) du premier élément de sécurité (112) et le serveur de personnalisation (220) au sein du canal de communication chiffré (160), dans lequel le programme d'application d'ID (108) est utilisé pour établir le deuxième sous-canal chiffré (164),
• faire recevoir, par l'applet de sécurité (114) du premier élément de sécurité (112), les premiers attributs (206) lus depuis le serveur de personnalisation (220) par l'intermédiaire du deuxième sous-canal chiffré (164) au sein du canal de communication chiffré (160),
• faire stocker les premiers attributs (206) reçus par l'applet de sécurité (114), dans lequel le programme d'application d'ID (108) est configuré pour utiliser les premiers attributs (206) pour prouver une identité de l'utilisateur à un autre système informatique.

2. Procédé selon la revendication 1, dans lequel le canal de communication chiffré (160) est chiffré avec une première clé de session cryptographique symétrique éphémère spécifique d'un canal, dans lequel le premier sous-canal chiffré (162) est chiffré avec une deuxième clé de session cryptographique symétrique éphémère spécifique d'un canal, dans lequel le deuxième sous-canal chiffré (162) est chiffré avec une troisième clé de session cryptographique symétrique éphémère spécifique d'un canal.

3. Procédé selon l'une quelconque des revendications précédentes, dans lequel le chiffrage du canal de communication chiffré (160) est un chiffrage de bout en bout entre le terminal mobile (100) et le serveur de personnalisation (220), et/ou
dans lequel le chiffrage du premier sous-canal chiffré (162) est un chiffrage de bout en bout entre le premier jeton d'ID (200) et le serveur de personnalisation (220), et/ou
et dans lequel le chiffrage du deuxième sous-canal chiffré (164) est un chiffrage de bout en bout entre l'applet de sécurité (114) et le serveur de personnalisation (220).

4. Procédé selon l'une quelconque des revendications précédentes, dans lequel la personnalisation comprend en outre les étapes consistant à :
• faire générer une paire de clés cryptographiques asymétriques associée au programme d'application d'ID (108) par l'applet de sécurité (114) du premier élément de sécurité (112) comprenant une clé cryptographique privée et une clé cryptographique publique du programme d'application d'ID (108), dans lequel la paire de clés asymétriques est utilisée pour authentifier le programme d'application d'ID (108) en cours d'utilisation des premiers attributs (206), et/ou
dans lequel la personnalisation comprend en outre les étapes consistant à :
• recevoir une ou plusieurs clés de vérification de signature racine par l'applet de sécurité (114) du premier élément de sécurité (112) depuis le serveur de personnalisation (220) par l'intermédiaire du deuxième sous-canal chiffré (164) au sein du canal de communication chiffré (160), dans lequel les clés de vérification de signature racine reçues sont destinées à vérifier les signatures de certificat d'une ou plusieurs instances racines ayant des certificats utilisés chacun au cours d'une lecture des premiers attributs (206) pour authentifier un système informatique de lecture vis-à-vis du programme d'application d'ID (108),
• faire stocker les clés de vérification de signature racine reçues par l'applet de sécurité (114) dans le premier élément de sécurité (112), et/ou
dans lequel la personnalisation comprend en outre les étapes consistant à :
• faire recevoir une signature des premiers attributs (206) depuis le serveur de personnalisation (220) par l'applet de sécurité (114) du premier élément de sécurité (112) par l'intermédiaire du deuxième sous-canal chiffré (164) au sein du canal de communication chiffré (160), dans lequel la signature sert de preuve d'authenticité des premiers attributs (206),
• faire stocker la signature reçue des premiers attributs (206) par l'applet de sécurité (114) dans le premier élément de sécurité (112).

5. Procédé selon l'une quelconque des revendications 2 à 4, dans lequel l'étape consistant à établir le canal de communication chiffré (160) comprend une étape consistant à négocier la première clé de session cryptographique symétrique éphémère spécifique d'un canal.

6. Procédé selon la revendication 5, Dans lequel l'étape consistant à négocier la première clé de session cryptographique symétrique éphémère spécifique d'un canal comprend les étapes consistant à :
• faire générer une première valeur aléatoire par le terminal mobile (100),
• faire générer la première clé de session cryptographique symétrique éphémère spécifique d'un canal en utilisant la première valeur aléatoire par le terminal mobile (100),
• faire recevoir un premier certificat (226) du serveur de personnalisation (220) avec une première clé cryptographique publique d'une première paire de clés cryptographiques asymétriques du serveur de personnalisation (220) par le terminal mobile (100) depuis le serveur de personnalisation (220),
• faire chiffrer la première valeur aléatoire en utilisant la première clé cryptographique publique reçue du serveur de personnalisation (220) par le terminal mobile (100),
• faire envoyer la première valeur aléatoire chiffrée au serveur de personnalisation (220) par le terminal mobile (100) pour générer la première clé de session cryptographique symétrique éphémère spécifique d'un canal par le serveur de personnalisation (220).

7. Procédé selon la revendication 6, dans lequel l'étape consistant à établir le canal de communication chiffré (160) comprend en outre une étape consistant à authentifier mutuellement le programme d'application d'ID (108) du terminal mobile (100) et le serveur de personnalisation (220).

8. Procédé selon la revendication 7, dans lequel le terminal mobile (100) comprend en outre un second élément de sécurité (110), dans lequel le second élément de sécurité (110) comprend une première clé cryptographique privée initiale d'une première paire de clés cryptographiques asymétriques initiales du programme d'application d'ID (108), dans lequel le terminal mobile (100) comprend en outre un certificat initial du programme d'application d'ID (108) comprenant la clé cryptographique publique initiale de la paire de clés cryptographiques asymétriques initiales du programme d'application d'ID (108),
dans lequel le terminal mobile (100) envoie le certificat initial du programme d'application d'ID (108) au serveur de personnalisation (220) pour authentification vis-à-vis du serveur de personnalisation (220) ainsi qu'un message signé par le second élément de sécurité (110) avec la première clé cryptographique privée initiale du programme d'application d'ID (108).

9. Procédé selon la revendication 8, dans lequel le terminal mobile (100) comprend en outre un ou plusieurs capteurs d'authentification (118) destinés à détecter un ou plusieurs facteurs d'authentification de l'utilisateur, dans lequel un système d'exploitation (106) installé sur le terminal mobile (100) est configuré pour commander les capteurs d'authentification (118), dans lequel le second élément de sécurité (110) est associé au système d'exploitation (106), dans lequel un prérequis pour signer avec la première clé cryptographique privée initiale du programme d'application d'ID (108) est l'authentification réussie de l'utilisateur par rapport au second élément de sécurité (110), dans lequel l'utilisateur est enregistré sur le terminal mobile (100) et au moins une valeur de référence de l'utilisateur enregistré est stockée dans le second élément de sécurité (110) pour vérifier au moins un facteur d'authentification détecté.

10. Procédé selon l'une quelconque des revendications précédentes, dans lequel l'étape consistant à établir le premier sous-canal chiffré (162) comprend une étape consistant à authentifier l'utilisateur vis-à-vis du jeton d'ID (200) par l'intermédiaire du terminal mobile (100),
dans lequel l'étape consistant à authentifier l'utilisateur vis-à-vis du jeton d'ID (200) comprend en particulier les étapes consistant à :
• faire recevoir, par le programme d'application d'ID (108), un facteur d'authentification supplémentaire de l'utilisateur détecté par le ou les capteurs d'authentification (118),
• faire générer une clé cryptographique symétrique par le second élément de sécurité (110) en utilisant le facteur d'authentification supplémentaire reçu,
• faire recevoir une deuxième valeur aléatoire chiffrée par le programme d'application d'ID (108) depuis le jeton d'ID (200), dans lequel la deuxième valeur aléatoire chiffrée est chiffrée en utilisant la clé cryptographique symétrique générée par le jeton d'ID (200) en utilisant une valeur de référence supplémentaire de l'utilisateur enregistré stockée dans le jeton d'ID (200) pour vérifier le facteur d'authentification supplémentaire,
• faire déchiffrer la deuxième valeur aléatoire chiffrée reçue par le second élément de sécurité (110) en utilisant la clé cryptographie symétrique générée,
• faire générer une première paire de clés cryptographiques asymétriques éphémères du programme d'application d'ID (108) par le second élément de sécurité (110), qui comprend une première clé cryptographique privée éphémère et une première clé cryptographique publique éphémère du programme d'application d'ID (108),
• envoyer la première clé cryptographique publique éphémère du programme d'application d'ID (108) au jeton d'ID (200),
• recevoir une clé cryptographique publique éphémère du jeton d'ID (200),
• générer un premier secret partagé avec le jeton d'ID (200) en utilisant la deuxième valeur aléatoire déchiffrée, la première clé cryptographique privée éphémère du programme d'application d'ID (108) et la clé cryptographique publique éphémère du jeton d'ID (200),
• faire générer une première clé d'authentification partagée pour authentification mutuelle du programme d'application d'ID (108) et le jeton d'ID (200) par le second élément de sécurité (110) en utilisant le premier secret partagé,
• faire générer un premier jeton d'authentification en utilisant la première clé d'authentification et la clé cryptographique publique éphémère du jeton d'ID (200) par le second élément de sécurité (110),
• faire envoyer le premier jeton d'authentification au jeton d'ID (200) par le second élément de sécurité (110),
• faire recevoir un deuxième jeton d'authentification depuis le jeton d'ID (200) par le second élément de sécurité (110),
• vérifier le deuxième jeton d'authentification reçu en utilisant la première clé d'authentification et la première clé cryptographique publique éphémère du programme d'application d'ID (108), et/ou
dans lequel l'étape consistant à établir le premier sous-canal chiffré (162) comprend une étape consistant à faire authentifier le serveur de personnalisation (220) par le jeton d'ID (200) par l'intermédiaire du terminal mobile (100),
dans lequel l'étape consistant à faire authentifier le serveur de personnalisation (220) par le jeton d'ID (200) comprend en particulier les étapes consistant à :
• faire recevoir un deuxième certificat (226) du serveur de personnalisation (220), comprenant une seconde clé cryptographique publique d'une seconde paire de clés cryptographiques asymétriques du serveur de personnalisation (220), par l'intermédiaire du canal de communication chiffré (160),
• vérifier une signature du deuxième certificat (226) reçu du serveur de personnalisation (220),
• faire générer une troisième valeur aléatoire par le jeton d'ID (200),
• envoyer la troisième valeur aléatoire en tant que question au serveur de personnalisation (220) par l'intermédiaire du canal de communication chiffré (160),
• recevoir une première signature de la question en tant que réponse depuis le serveur de personnalisation (220) par l'intermédiaire du canal de communication chiffré (160), dans lequel la question est signée en utilisant une deuxième clé cryptographique privée du serveur de personnalisation (220),
• vérifier la première signature reçue en utilisant la deuxième clé cryptographique publique du serveur de personnalisation (220) et la troisième valeur aléatoire transmise, et/ou
dans lequel l'étape consistant à établir le premier sous-canal chiffré (162) comprend une étape consistant à authentifier le jeton d'ID (200) vis-à-vis du serveur de personnalisation (220) par l'intermédiaire du terminal mobile (100),
dans lequel l'étape consistant à authentifier le jeton d'ID (200) vis-à-vis des serveurs de personnalisation (220) comprend en particulier les étapes consistant à :
• envoyer la clé cryptographique publique du jeton d'ID (200) depuis le jeton d'ID (200) par l'intermédiaire du canal de communication chiffré (160) au serveur de personnalisation (220),
• faire recevoir la deuxième clé cryptographique publique éphémère du serveur de personnalisation (220) par le jeton d'ID (200) depuis le serveur de personnalisation (220) par l'intermédiaire du canal de communication chiffré (160),
• faire générer un deuxième secret partagé avec le serveur de personnalisation (220) par le jeton d'ID (200) en utilisant la clé cryptographique privée du jeton d'ID (200) et la deuxième clé cryptographique publique éphémère du serveur de personnalisation (220),
• faire générer une quatrième valeur aléatoire par le jeton d'ID (200),
• faire générer une deuxième clé d'authentification partagée pour authentifier les données envoyées sur le premier sous-canal chiffré (162) par le jeton d'ID (200), dans lequel la deuxième clé d'authentification partagée est générée en utilisant le deuxième secret partagé et la quatrième valeur aléatoire,
• faire générer un troisième jeton d'authentification par le jeton d'ID (200) en utilisant la deuxième clé d'authentification et la deuxième clé cryptographique publique éphémère du serveur de personnalisation (220) afin d'authentifier le jeton d'ID (200) vis-à-vis du serveur de personnalisation (220),
• faire envoyer la quatrième valeur aléatoire conjointement au troisième jeton d'authentification pour authentifier le jeton d'ID (200) par le jeton d'ID (200) par l'intermédiaire du canal de communication chiffré (160) au serveur de personnalisation (220), et/ou
dans lequel l'étape consistant à établir le deuxième sous-canal chiffré (164) comprend une étape consistant à faire authentifier l'utilisateur par le second élément de sécurité (110), dans lequel l'étape consistant à établir le deuxième sous-canal chiffré (164) comprend en outre une étape consistant à exécuter une procédure de question-réponse entre le second élément de sécurité (110) et le premier élément de sécurité (112), dans lequel une exécution réussie de la procédure de question-réponse confirme une authentification réussie de l'utilisateur par le second élément de sécurité (110), et/ou
dans lequel l'étape consistant à établir le deuxième sous-canal chiffré (164) comprend en outre une étape consistant à faire authentifier le serveur de personnalisation (220) par l'applet de sécurité (114) du premier élément de sécurité (112),
dans lequel l'étape consistant à authentifier le serveur de personnalisation (220) par l'applet de sécurité (114) du premier élément de sécurité (112) comprend en particulier les étapes consistant à :
• faire recevoir un troisième certificat (226) du serveur de personnalisation (220), comprenant une troisième clé cryptographique publique du serveur de personnalisation (220), par l'applet de sécurité (114) du premier élément de sécurité (112) par l'intermédiaire du canal de communication chiffré (160),
• faire vérifier une signature du troisième certificat (226) reçu du serveur de personnalisation (220) par l'applet de sécurité (114) du premier élément de sécurité (112),
• faire recevoir une troisième clé cryptographique publique éphémère du serveur de personnalisation (220) par l'applet de sécurité (114) du premier élément de sécurité (112),
• faire générer une cinquième valeur aléatoire en tant que question par l'applet de sécurité (114) du premier élément de sécurité (112),
• faire envoyer la cinquième valeur aléatoire par l'applet de sécurité (114) du premier élément de sécurité (112) par l'intermédiaire du canal de communication chiffré (160) au serveur de personnalisation (220),
• recevoir une seconde signature de la question en tant que réponse depuis le serveur de personnalisation (220), dans lequel la question est signée en utilisant une troisième clé cryptographique privée éphémère du serveur de personnalisation (220),
• vérifier la seconde signature reçue en utilisant la troisième clé cryptographique publique du serveur de personnalisation (220) et la cinquième valeur aléatoire envoyée.

11. Procédé selon l'une quelconque des revendications précédentes, dans lequel l'étape consistant à établir le deuxième sous-canal chiffré (164) comprend en outre une étape consistant à authentifier l'applet de sécurité (114) du premier élément de sécurité (112) vis-à-vis du serveur de personnalisation (220),
dans lequel l'étape consistant à authentifier l'applet de sécurité (114) du premier élément de sécurité (112) vis-à-vis du serveur de personnalisation (220), comprend en particulier les étapes consistant à :
• faire recevoir la troisième clé cryptographique publique éphémère du serveur de personnalisation (220) par l'applet de sécurité (114) du premier élément de sécurité (112) depuis le serveur de personnalisation (220) par l'intermédiaire du canal de communication chiffré (160),
• faire générer un troisième secret partagé avec le serveur de personnalisation (220) par l'applet de sécurité (114) du premier élément de sécurité (112) en utilisant la clé cryptographique privée de l'applet de sécurité (114) du premier élément de sécurité (112) et la clé cryptographique publique éphémère du serveur de personnalisation (220),
• faire générer une sixième valeur aléatoire par l'applet de sécurité (114) du premier élément de sécurité (112),
• générer une troisième clé d'authentification commune pour authentifier les données envoyées sur le deuxième sous-canal chiffré (164), dans lequel la troisième clé d'authentification commune est générée en utilisant le troisième secret partagé et la sixième valeur aléatoire,
• faire générer un quatrième jeton d'authentification par l'applet de sécurité (114) du premier élément de sécurité (112) en utilisant la troisième clé d'authentification et la troisième clé cryptographique publique éphémère du serveur de personnalisation (220) afin d'authentifier l'applet de sécurité (114) du premier élément de sécurité (112) vis-à-vis du serveur de personnalisation (220),
• faire envoyer la sixième valeur aléatoire conjointement au quatrième jeton d'authentification pour authentifier l'applet de sécurité (114) du premier élément de sécurité (112) par l'applet de sécurité (114) du premier élément de sécurité (112) par l'intermédiaire du canal de communication chiffré (160) au serveur de personnalisation (220), ou
dans lequel la troisième clé de session cryptographique symétrique éphémère spécifique d'un canal pour chiffrer le deuxième sous-canal chiffré (164) entre l'applet de sécurité (114) du premier élément de sécurité (112) et le serveur de personnalisation (220) est stockée dans le premier élément de sécurité (112) et dans le serveur de personnalisation (220) en tant que clé initiale pour utilisation par l'applet de sécurité (114),
dans lequel dans le premier élément de sécurité (112) pour utilisation par l'applet de sécurité (114) et dans le serveur de personnalisation (220) en particulier il est en outre stocké une clé d'authentification cryptographique symétrique éphémère spécifique d'un canal pour authentifier les données transmises par l'intermédiaire du deuxième sous-canal chiffré (164) correspondant.

12. Procédé selon l'une quelconque des revendications précédentes, dans lequel un second jeton d'ID est en outre utilisé pour la personnalisation, dans lequel la personnalisation comprend en outre les étapes consistant à :
• établir un troisième sous-canal chiffré entre le second jeton d'ID et le serveur de personnalisation (220) au sein du canal de communication chiffré (160) par l'intermédiaire du terminal mobile (100), dans lequel le programme d'application d'ID (108) est utilisé pour établir le troisième sous-canal chiffré,
• faire lire un ou plusieurs des seconds attributs depuis le second jeton d'ID par le serveur de personnalisation (220) par l'intermédiaire du troisième sous-canal chiffré au sein du canal de communication chiffré (160),
• établir un quatrième sous-canal chiffré entre l'applet de sécurité (114) du premier élément de sécurité (112) et le serveur de personnalisation (220) au sein du canal de communication chiffré (160), dans lequel le programme d'application d'ID (108) est utilisé pour établir le quatrième sous-canal chiffré,
• faire recevoir les seconds attributs lus par l'applet de sécurité (114) du premier élément de sécurité (112) depuis le serveur de personnalisation (220) par l'intermédiaire du quatrième sous-canal chiffré au sein du canal de communication chiffré (160),
• faire stocker les seconds attributs reçus par l'applet de sécurité (114), dans lequel le programme d'application d'ID (108) est configuré pour utiliser les seconds attributs afin de prouver une identité de l'utilisateur à un autre système informatique.

13. Terminal mobile (100), dans lequel le terminal mobile (100) comprend un processeur (102) et une mémoire (104), dans lequel la mémoire (104) stocke un programme d'application d'ID (108), dans lequel le terminal mobile (100) comprend en outre un élément de sécurité (112) ayant une applet de sécurité (114) associée au programme d'application d'ID (108), dans lequel le processeur (102) est configuré pour mettre en œuvre un procédé de personnalisation de l'applet de sécurité (114) en utilisant un jeton d'ID (200) et un serveur de personnalisation (220), dans lequel le terminal mobile (100) comprend en outre une interface de communication (120) pour la communication sans contact avec le jeton d'ID (200) et pour la communication par l'intermédiaire d'un réseau (150) avec le serveur de personnalisation (220),
dans lequel la personnalisation comprend les étapes consistant à :
• établir un canal de communication chiffré (160) entre le terminal mobile (100) et le serveur de personnalisation (220) par l'intermédiaire d'un réseau (150), dans lequel le programme d'application d'ID (108) est utilisé pour établir le canal de communication chiffré (160),
• établir un premier sous-canal chiffré (162) entre le premier jeton d'ID (200) et le serveur de personnalisation (220) au sein du canal de communication chiffré (160) par l'intermédiaire du terminal mobile (100), dans lequel le programme d'application d'ID (108) est utilisé pour établir le premier sous-canal chiffré (162),
• faire lire un ou plusieurs des premiers attributs (206) depuis le jeton d'ID (200) par le serveur de personnalisation (220) par l'intermédiaire du premier sous-canal chiffré (162) au sein du canal de communication chiffré (160),
• établir un second sous-canal chiffré (164) entre l'applet de sécurité (114) de l'élément de sécurité (112) et le serveur de personnalisation (220) au sein du canal de communication chiffré (160), dans lequel le programme d'application d'ID (108) est utilisé pour établir le deuxième sous-canal chiffré (164),
• faire recevoir les attributs (206) lus par l'applet de sécurité (114) de l'élément de sécurité (112) depuis le serveur de personnalisation (220) par l'intermédiaire du deuxième sous-canal chiffré (164) au sein du canal de communication chiffré (160),
• faire stocker les attributs (206) reçus par l'applet de sécurité (114), dans lequel le programme d'application d'ID (108) est configuré pour utiliser les attributs (206) afin de prouver une identité de l'utilisateur à un autre système informatique.

14. Système (170), dans lequel le système (170) comprend un terminal mobile (100) selon la revendication 13 et un serveur de personnalisation (220), dans lequel le serveur de personnalisation (220) est configuré pour lire les attributs (206) depuis un jeton d'ID (200) par l'intermédiaire du terminal mobile (100) et pour personnaliser l'applet de sécurité (114) du terminal mobile (100).

15. Système (170) selon la revendication 14, dans lequel le système (170) comprend en outre le jeton d'ID (200) dans lequel les attributs (206) à lire sont stockés.
